# EUROPEAN PATENT APPLICATION

(11) **EP 4 822 826 A1**
(43) Date of publication of application: **14.10.2026**
(21) Application number: 24923123.4
(22) Date of filing: 15.04.2024
(51) Int. Cl.: H01M 10/617, H01M 10/6556, H01M 10/6568, H01M 10/613, H01M 10/615

(54) **BATTERY, AND ELECTRICAL APPARATUS HAVING SAME**

(30) Priority: 06.02.2024 CN 202410171670
(71) Applicant: Contemporary Amperex Technology Co., Limited, Ningde, Fujian 352100 (CN)
(72) Inventor: WANG, Yehao, Ningde, Fujian 352100 (CN); SONG, Feiting, Ningde, Fujian 352100 (CN)
(74) Representative: Ziebig Hengelhaupt Intellectual Property Attorneys Patentanwaltskanzlei PartGmbB
(86) International application number: PCT/CN2024/087810
(87) International publication number: WO 2025/166898

(57) **Abstract**

A battery (1000), and an electrical apparatus having same. The battery (1000) comprises: a battery assembly (200), comprising a battery unit (201), the battery unit (201) comprising multiple battery cells (2011) stacked along a first direction; and a heat exchange member (100), comprising a heat exchange tube, the heat exchange tube having a heat exchange flow channel, and the heat exchange flow channel comprising multiple flow channel portions connected in a bent manner. Each battery unit (201) is at least attached to two flow channel portions, so as to perform heat exchange.

## Description

### CROSS-REFERENCE TO RELATED APPLICATIONS

The present application is filed based on Chinese Patent Application No. 202410171670.3, filed on February 6, 2024, and claims priority to the Chinese patent application, which is incorporated herein by reference in its entirety.

### TECHNICAL FIELD

The present application relates to the technical field of batteries, and particularly to a battery and an electric apparatus including the same.

### BACKGROUND

A good operating environment is one of the necessary conditions for many components, electronic devices, assemblies, apparatuses, equipment, and the like to operate persistently, stably, and efficiently, and maintaining a good operating environment plays an important role in ensuring proper operation of these components, electronic devices, assemblies, apparatuses, equipment, and the like.

At present, heat dissipation structures are typically provided within a battery to dissipate heat from or warm up the battery, so that the battery can operate within an appropriate temperature range under hot or cold weather conditions. However, in related art, a battery pack includes a relatively large number of battery cells, and the temperature rise rate and temperature uniformity of each battery cell under the action of the heat exchange member need to be further improved.

### SUMMARY

The present application aims to at least address one of the technical issues in the prior art. To this end, the present application proposes a battery capable of improving the heat exchange efficiency of the battery, enabling more uniform temperature distribution during heat exchange of the battery for better battery heat exchange performance, allowing the battery to operate more stably and helping the battery maintain good performance.

In a first aspect, embodiments of the present application provide a battery, including: a battery assembly including a battery unit, where the battery unit includes a plurality of battery cells stacked along a first direction; a heat exchange member including a heat exchange tube, where the heat exchange tube has a heat exchange flow passage, the heat exchange flow passage includes a plurality of flow channel portions connected in a bent manner; where each battery unit is in contact with at least two flow channel portions to enable heat exchange.

In the foregoing implementation, by bringing at least two flow channel portions into contact with one battery cell for heat exchange, not only can the heat exchange area between the battery unit and the heat exchange tube be enlarged to improve the heat exchange effect on the battery unit, but the temperature at which the heat exchange occurs between the heat exchange tube and the battery unit can be approximately an average temperature of two or more flow channel portions. In this way, the temperature difference in heat exchange among different battery units can be reduced, achieving a better uniform-temperature heat exchange effect. As a result, the temperature distribution within the battery assembly becomes more uniform, enabling the battery to operate more stably while maintaining good performance.

In some embodiments of the present application, at least one battery cell is in contact with at least two flow channel portions that extend along the first direction and are disposed adjacent to each other in a second direction, to enable heat exchange, the first direction intersecting the second direction, or at least one battery cell is in contact with at least two flow channel portions that extend along the second direction and are disposed adjacent to each other in the first direction, to enable heat exchange, the first direction intersecting the second direction, or at least one battery cell is in contact with at least one flow channel portion extending along the first direction and at least one flow channel portion extending along the second direction, to enable heat exchange, the first direction intersecting the second direction.

In the foregoing implementation, by arranging at least one battery cell to be in contact with at least two flow channel portions, the battery cell and the heat exchange tube can have a sufficient heat exchange area, thereby providing a better heat exchange effect on the battery cell. The cooperation of a plurality of flow channel portions in exchanging heat with the battery cell enables more balanced heat exchange among a plurality of battery cells in the battery assembly, such that the temperature difference among the plurality of battery cells during heat exchange of the battery assembly can be maintained within a certain limit, thereby allowing a more uniform temperature distribution within the battery.

In some embodiments of the present application, the heat exchange tubes are provided in plurality, the plurality of heat exchange tubes are disposed in parallel, each of the heat exchange tubes defines one of the heat exchange flow passages in its interior, and a plurality of heat exchange flow passages are sequentially arranged along a second direction or are arranged to wind around each other in a same plane, the first direction intersecting the second direction.

In the foregoing implementation, by arranging a plurality of heat exchange tubes to be disposed in parallel, the heat exchange fluid can simultaneously exchange heat with different battery units through a plurality of heat exchange tubes, thereby improving the heat exchange efficiency of the battery assembly and achieving better heat exchange effect on the battery assembly to some extent. The plurality of heat exchange flow passages are spaced apart along a second direction, so that an overall structure of the heat exchange flow passages can be arranged in a relatively compact manner, thereby facilitating design and arrangement of the heat exchange member.

In one embodiment of the present application, a plurality of heat exchange flow passages are sequentially arranged along a second direction, a plurality of battery units are sequentially arranged along the second direction, where the plurality of battery units are respectively in contact with the plurality of heat exchange flow passages to enable heat exchange; or in the second direction, one heat exchange flow passage is correspondingly in contact with two adjacent battery units to enable heat exchange; or in the second direction, one heat exchange flow passage is correspondingly in contact with three adjacent battery units to enable heat exchange; or in the second direction, two adjacent heat exchange flow passages are correspondingly in contact with three adjacent battery units to enable heat exchange.

In the foregoing implementation, by defining the arrangement patterns of heat exchange flow passages and battery units, different arrangement patterns can be selected according to actual heat exchange demands, simplifying a structure of the heat exchange member while achieving the heat exchange effect.

In some embodiments of the present application, taking a wall surface of the battery cell that is in contact with the heat exchange tube as a projection plane, a thickness of the battery cell in the first direction is greater than or equal to 30 mm, and an area of an orthographic projection of the heat exchange tube on the wall surface is greater than or equal to 15% of an area of the wall surface.

In the foregoing implementation, by arranging the heat exchange area between the heat exchange tube and the battery cell to be greater than or equal to 15% of the wall surface area of the battery cell, the heat exchange rate between the heat exchange tube and the battery cell can be increased, allowing the battery cell to stably obtain good cooling and heat dissipation effects or heating and temperature rise effects, thereby making temperature distribution within the battery assembly more uniform and allowing the battery to operate more stably and reliably and maintain good battery performance.

In one embodiment of the present application, the thickness of the battery cell in the first direction is greater than or equal to 40 mm, and an area of an orthographic projection of the heat exchange tube on the wall surface is greater than or equal to 30% of an area of a wall surface.

In the foregoing implementation, when the thickness of the battery cell is greater than or equal to 40 mm, setting a ratio of the heat exchange area of the battery cell to the wall surface area to be greater than or equal to 30% allows the heat exchange contact area between the heat exchange tube and the battery cell to better match the heat exchange demand of the battery cell after the thickness increases, so that the battery assembly can be better maintained within an appropriate temperature range, thereby improving the temperature uniformity of the battery assembly and ensuring more stable operation of the battery.

In one embodiment of the present application, the thickness of the battery cell in the first direction is greater than or equal to 50 mm, and the area of the orthographic projection of the heat exchange tube on the wall surface is greater than or equal to 45% of the area of the wall surface.

In the foregoing implementation, when the thickness of the battery cell is greater than or equal to 50 mm, setting a ratio of the heat exchange area of the battery cell to the wall surface area to be greater than or equal to 45% allows the heat exchange contact area between the heat exchange tube and the battery cell to better match the heat exchange demand of the battery cell after the thickness increases, so that the battery assembly can be better maintained within an appropriate temperature range, thereby improving better temperature uniformity of the battery assembly and ensuring more stable operation of the battery.

In one embodiment of the present application, the thickness of the battery cell in the first direction is greater than or equal to 60 mm, and the area of the orthographic projection of the heat exchange tube on the wall surface is greater than or equal to 65% of the area of the wall surface.

In the foregoing implementation, when the thickness of the battery cell is greater than or equal to 60 mm, setting a ratio of the heat exchange area of the battery cell to the wall surface area to be greater than or equal to 65% allows the heat exchange contact area between the heat exchange tube and the battery cell to better match the heat exchange demand of the battery cell after the thickness increases, so that the battery assembly can be better maintained within an appropriate temperature range, thereby improving better temperature uniformity of the battery assembly and ensuring more stable operation of the battery.

In one embodiment of the present application, the thickness of the battery cell in the first direction is greater than or equal to 80 mm, and the area of the orthographic projection of the heat exchange tube on the wall surface is greater than or equal to 75% of the area of the wall surface.

In the foregoing implementation, when the thickness of the battery cell is greater than or equal to 80 mm, setting a ratio of the heat exchange area of the battery cell to the wall surface area to be greater than or equal to 75% allows the heat exchange contact area between the heat exchange tube and the battery cell to better match the heat exchange demand of the battery cell after the thickness increases, so that the battery assembly can be better maintained within an appropriate temperature range, thereby improving better temperature uniformity of the battery assembly and ensuring more stable operation of the battery.

In one embodiment of the present application, the thickness of the battery cell in the first direction is greater than 100 mm, and the area of the orthographic projection of the heat exchange tube on the wall surface is greater than or equal to 90% of the area of the wall surface.

In the foregoing implementation, when the thickness of the battery cell is greater than 100 mm, setting a ratio of the heat exchange area of the battery cell to the wall surface area to be greater than or equal to 90% allows the heat exchange contact area between the heat exchange tube and the battery cell to better match the heat exchange demand of the battery cell after the thickness increases, so that the battery assembly can be better maintained within an appropriate temperature range, thereby improving better temperature uniformity of the battery assembly and ensuring more stable operation of the battery.

In one embodiment of the present application, when the thickness of the battery cell in the first direction is greater than or equal to 30 mm and less than 40 mm, the area of the orthographic projection of the heat exchange tube on the wall surface is greater than or equal to 15% of the area of the wall surface and less than 30% of the area of the wall surface; when the thickness of the battery cell in the first direction is greater than or equal to 40 mm and less than 50 mm, the area of the orthographic projection of the heat exchange tube on the wall surface is greater than or equal to 30% of the area of the wall surface and less than 45% of the area of the wall surface; when the thickness of the battery cell in the first direction is greater than or equal to 50 mm and less than 60 mm, the area of the orthographic projection of the heat exchange tube on the wall surface is greater than or equal to 45% of the area of the wall surface and less than 65% of the area of the wall surface; when the thickness of the battery cell in the first direction is greater than or equal to 60 mm and less than 80 mm, the area of the orthographic projection of the heat exchange tube on the wall surface is greater than or equal to 65% of the area of the wall surface and less than 75% of the area of the wall surface; and when the thickness of the battery cell in the first direction is greater than or equal to 80 mm and less than or equal to 100 mm, the area of the orthographic projection of the heat exchange tube on the wall surface is greater than or equal to 75% of the area of the wall surface and less than 90% of the area of the wall surface.

In the foregoing implementation, when the thickness of the battery cell is greater than or equal to 30 mm and less than 40 mm, setting a ratio of the heat exchange area of the battery cell to the wall surface area to be greater than or equal to 15% and less than 30% allows the heat exchange contact area between the heat exchange tube and the battery cell to well match the heat exchange demand of the battery cell after the thickness increases, so that the battery assembly can be maintained well within an appropriate temperature range. As a result, the temperature distribution within the battery assembly becomes more uniform, enabling the battery to operate more stably.

When the thickness of the battery cell is greater than or equal to 40 mm and less than 50 mm, setting a ratio of the heat exchange area of the battery cell to the wall surface area to be greater than or equal to 30% and less than 45% allows the heat exchange contact area between the heat exchange tube and the battery cell to well match the heat exchange demand of the battery cell after the thickness increases, so that the battery assembly can be maintained well within an appropriate temperature range. As a result, the temperature distribution within the battery assembly becomes more uniform, enabling the battery to operate more stably.

When the thickness of the battery cell is greater than or equal to 50 mm and less than 60 mm, setting a ratio of the heat exchange area of the battery cell to the wall surface area to be greater than or equal to 45% and less than 65% allows the heat exchange contact area between the heat exchange tube and the battery cell to well match the heat exchange demand of the battery cell after the thickness increases, so that the battery assembly can be maintained well within an appropriate temperature range. As a result, the temperature distribution within the battery assembly becomes more uniform, enabling the battery to operate more stably.

When the thickness of the battery cell is greater than or equal to 60 mm and less than 80 mm, setting a ratio of the heat exchange area of the battery cell to the wall surface area to be greater than or equal to 65% and less than 75% allows the heat exchange contact area between the heat exchange tube and the battery cell to well match the heat exchange demand of the battery cell after the thickness increases, so that the battery assembly can be maintained well within an appropriate temperature range. As a result, the temperature distribution within the battery assembly becomes more uniform, enabling the battery to operate more stably.

When the thickness of the battery cell is greater than or equal to 80 mm and less than or equal to 100 mm, setting a ratio of the heat exchange area of the battery cell to the wall surface area to be greater than or equal to 75% and less than 90% allows the heat exchange contact area between the heat exchange tube and the battery cell to well match the heat exchange demand of the battery cell after the thickness increases, so that the battery assembly can be maintained well within an appropriate temperature range. As a result, the temperature distribution within the battery assembly becomes more uniform, enabling the battery to operate more stably.

In some embodiments of the present application, the heat exchange tubes are provided in plurality, and the plurality of heat exchange tubes are symmetrically disposed with respect to the first direction.

In the foregoing implementation, by arranging a plurality of heat exchange tubes to be disposed symmetrically, the heat exchange fluid can simultaneously enter from two sides of the battery assembly in the second direction for heat exchange. The large liquid inlet flow rate allows the length of a single heat exchange flow passage to be shortened and reduces pressure drop within the single heat exchange flow passage, thereby well improving the heat exchange efficiency of the battery.

In some embodiments of the present application, the heat exchange tubes are provided in plurality, a heat exchange flow passage of at least one heat exchange tube is formed as a first heat exchange flow passage, and the first heat exchange flow passage includes a first heat exchange section and a second heat exchange section. The second heat exchange section is bent to form a U-shaped region and forms a plurality of flow channel portions, the first heat exchange section is bent and provided within the U-shaped region and forms a plurality of flow channel portions, and the second heat exchange section and the first heat exchange section are bent and connected in a same plane. Battery cells of the battery assembly located at an outermost periphery in a circumferential direction constitute peripheral battery cells, and at least part of the second heat exchange section is in contact with the peripheral battery cells.

In the foregoing implementation, by arranging the first heat exchange flow passage in the heat exchange member, the second heat exchange section of the first heat exchange flow passage is connected to the first heat exchange section, the second heat exchange section is bent to form the U-shaped region and at least partially in contact with peripheral battery cells, and the first heat exchange section is provided within the U-shaped region, so that when the heat exchange member performs heat exchange operations on the battery assembly, better heat dissipation and cooling effects and heating and temperature rise effects can be achieved, thereby making temperature distribution within the battery more uniform, ensuring the battery to operate more stably and maintain good performance.

In one embodiment of the present application, the battery assembly includes a plurality of battery units arranged along the second direction, the peripheral battery cells include a first group of battery cells, a second group of battery cells, and a third group of battery cells, which are disposed adjacent to each other, the first group of battery cells includes a plurality of battery cells stacked along the first direction, the second group of battery cells includes a plurality of battery cells stacked along the second direction, and the third group of battery cells includes a plurality of battery cells stacked along the second direction, the first direction intersecting the second direction. A plurality of flow channel portions of the second heat exchange section include a second heat exchange portion, a third heat exchange portion, and a fourth heat exchange portion that are connected, the second heat exchange portion extends to be in contact with the first group of battery cells to enable heat exchange, and/or the third heat exchange portion extends to be in contact with the second group of battery cells to enable heat exchange, and/or the fourth heat exchange portion extends to be in contact with the third group of battery cells to enable heat exchange.

In the foregoing implementation, by arranging the second heat exchange portion, the third heat exchange portion, and the fourth heat exchange portion in the second heat exchange section to be in contact with the first group of battery cells, and/or the second group of battery cells, and/or the third group of battery cells in peripheral battery cells for heat exchange, the heat exchange member can stably and reliably cool or heat peripheral battery cells, so that the battery assembly can achieve good heat exchange effect, thereby ensuring more stable operation of the battery and more uniform temperature distribution within the battery when the heat exchange member performs heat exchange operations on the battery assembly.

In some examples of the present application, the peripheral battery cells further include a fourth group of battery cells, the fourth group of battery cells includes a plurality of battery cells arranged along the second direction, the second heat exchange section further includes a fifth heat exchange portion, the fifth heat exchange portion closes at least part of an opening of the U-shaped region formed by the second heat exchange portion, the third heat exchange portion, and the fourth heat exchange portion, and the fifth heat exchange portion extends to be in contact with the fourth group of battery cells to enable heat exchange.

In the foregoing implementation, by arranging the fifth heat exchange portion in the second heat exchange section to be in contact with the fourth group of battery cells, the second heat exchange section can perform heat exchange along four peripheral sides of the battery assembly. In this way, the four peripheral sides of the battery assembly can be subjected to heat exchange only through the second heat exchange section of one first heat exchange flow passage, thereby improving the heat exchange effect on the four peripheral sides of the battery assembly and improving the temperature uniformity of the battery assembly.

In an example of the present application, the plurality of flow channel portions of the first heat exchange section include a plurality of first heat exchange portions, and the plurality of first heat exchange portions are spaced apart and sequentially connected in a bent manner; at least one battery unit located at two ends in the second direction is the first group of battery cells; and the second heat exchange portion and at least one first heat exchange portion of the first heat exchange section are jointly in contact with the first group of battery cells to enable heat exchange.

In the foregoing implementation, by arranging a plurality of first heat exchange portions in the first heat exchange section, which are spaced apart and sequentially connected, a simple and easily arranged structure is achieved. allowing the heat exchange member to effectively exchange heat with the battery assembly. In this embodiment, at least one first heat exchange portion is configured to cooperate with the second heat exchange portion to be in contact with the first group of battery cells, so that the heat exchange member can have a sufficient heat exchange area with each battery cell in the first group of battery cells for heat exchange, thereby providing a good heat exchange effect.

In some specific embodiments of the present application, the plurality of first heat exchange portions of the first heat exchange section extend along the second direction and are sequentially connected in the first direction; or the plurality of first heat exchange portions of the first heat exchange section extend along the first direction and are sequentially connected in the second direction.

In the foregoing implementation, by arranging a plurality of first heat exchange portions of the first heat exchange section to extend along the second direction and be sequentially connected in the first direction, a relatively large heat exchange area can exist between a single first heat exchange portion and a single battery cell, so that when the heat exchange member is arranged on the battery assembly, the heat exchange area requirement of the battery assembly can be conveniently and reliably satisfied, thereby reducing, to some extent, the arrangement difficulty of the first heat exchange section.

In the foregoing implementation, by arranging a plurality of first heat exchange portions to extend along the first direction and be sequentially connected in the second direction, the plurality of first heat exchange portions can cooperate to exchange heat with one battery cell to meet the required heat exchange area. Accordingly, the first heat exchange section can be arranged with a reduced number of bends when being disposed in a bent manner, thereby reducing the flow resistance in the first heat exchange section, allowing the heat exchange fluid to flow more smoothly and with a reduced pressure drop, and enabling the heat exchange member to perform heat exchange operations on the battery assembly more effectively.

In some specific embodiments of the present application, the plurality of first heat exchange portions of the first heat exchange section extend along the first direction and are sequentially connected in the second direction, a first end of the third heat exchange portion is connected to the second heat exchange portion at an angle, a second end of the third heat exchange portion is connected to one of the plurality of first heat exchange portions that is farthest from the second heat exchange portion in the second direction, and a second end of the third heat exchange portion is connected to the first heat exchange section at an angle.

In the foregoing implementation, by connecting the third heat exchange portion to the second heat exchange portion at an angle and connecting the third heat exchange portion to the first heat exchange section at an angle, the second heat exchange section and the first heat exchange section can be conveniently disposed during assembly in the battery, which can satisfy arrangement needs of the heat exchange member and the battery assembly, providing a simple structure and convenient use.

The third heat exchange portion is connected to the second heat exchange portion and the first heat exchange portion away from the second heat exchange portion, which allows a better heat exchange effect when the heat exchange member performs heat exchange on the battery assembly and a more uniform temperature distribution within the battery, thereby enabling the battery to operate stably and maintain good performance.

In a specific embodiment of the present application, one of the plurality of flow channel portions of the first heat exchange flow passage is formed as a third heat exchange section. The third heat exchange section communicates with one end of the first heat exchange section away from the second heat exchange section and is connected to the first heat exchange section at an angle; the third heat exchange section is disposed on one side of the first heat exchange section facing away from the third heat exchange portion and is connected to one of the plurality of first heat exchange portions that is closest to the second heat exchange portion in the second direction; and the battery assembly further has a fifth group of battery cells, a plurality of battery cells of the fifth group of battery cells are stacked along the second direction, and the fifth group of battery cells is disposed adjacent to the third group of battery cells; where both the third heat exchange section and the fourth heat exchange portion are in contact with the third group of battery cells to enable heat exchange; or the third heat exchange section is in contact with the fifth group of battery cells to enable heat exchange, and the fourth heat exchange portion is in contact with the third group of battery cells to enable heat exchange; or the third heat exchange section is in contact with the third group of battery cells to enable heat exchange, and the fourth heat exchange portion is arranged on the outer side of the battery assembly in the first direction.

In the foregoing implementation, by connecting the third heat exchange section to the first heat exchange section and bringing it into contact with the second group of battery cells, the heat exchange member can have more balanced and good heat exchange when exchanging heat with battery cells at different positions in the battery, allowing more uniform temperature distribution after heat exchange operations of the battery, thereby enabling the battery to operate more stably and reliably and maintain good performance.

In some specific examples of the present application, the first heat exchange flow passage further includes: a first inlet/outlet section, where one end of the first inlet/outlet section is connected to the third heat exchange section at an angle, and the other end of the first inlet/outlet section is formed as a first inlet/outlet of the first heat exchange flow passage; and a second inlet/outlet section, where one end of the second inlet/outlet section is connected to the fourth heat exchange portion at an angle, the other end of the second inlet/outlet section is formed as a second inlet/outlet of the first heat exchange flow passage, and one of the first inlet/outlet and the second inlet/outlet is the inlet of the first heat exchange flow passage and the other is the outlet.

In the foregoing implementation, by providing the first inlet/outlet section and the second inlet/outlet section, it is convenient for an external liquid injection apparatus to introduce heat exchange fluid for heat exchange into the first heat exchange flow passage, and it is also convenient for the heat exchange member to adjust the flow direction of the heat exchange fluid in the first heat exchange flow passage as required. The first inlet/outlet section and the second inlet/outlet section have a simple structure and are convenient to use.

In some examples of the present application, the plurality of flow channel portions of the first heat exchange section include a plurality of first heat exchange portions, the plurality of first heat exchange portions are spaced apart and sequentially connected in a bent manner, and the plurality of first heat exchange portions and second heat exchange portions all extend along a first direction and are spaced apart in the second direction; and one battery unit is in contact with one second heat exchange portion and at least one first heat exchange portion to enable heat exchange, or one battery unit is in contact with at least two first heat exchange portions to enable heat exchange.

In the foregoing implementation, by arranging one battery unit to be in contact with one second heat exchange portion and at least one first heat exchange portion, or one battery unit to be in contact with at least two first heat exchange portions, the heat exchange member can conveniently meet the required heat exchange area for each battery cell in the battery unit. The first heat exchange portion and the second heat exchange portion both extend along the first direction and are spaced apart in the second direction, so that the heat exchange member can be conveniently disposed within the battery, and the overall structure of the first heat exchange section and the second heat exchange section in the first heat exchange flow passage is relatively compact.

In an example of the present application, two first heat exchange flow passages are provided, the plurality of flow channel portions of each first heat exchange flow passage include: five first heat exchange portions, one second heat exchange portion, one third heat exchange portion, one fourth heat exchange portion, and one third heat exchange section; and two battery units are provided, each battery unit is in contact with a first heat exchange flow passage to enable heat exchange; and the third heat exchange portion is connected to the second heat exchange portion and the first heat exchange portion farthest from the second heat exchange portion and is in contact with the second group of battery cells to enable heat exchange. The third heat exchange section is connected to the first heat exchange portion closest to the second heat exchange portion and is in contact with the third group of battery cells to enable heat exchange, and the fourth heat exchange portion is connected to the second heat exchange portion, extends to a position of another battery unit, and is in contact with the third group of battery cells to enable heat exchange.

In the foregoing implementation, the first heat exchange section, the second heat exchange section, and the third heat exchange section in the first heat exchange flow passage are arranged in a manner as described above, so that during heat exchange operations, the heat exchange member can well match the heat exchange conditions of the battery cells at different positions within the battery. This allows battery cells at different positions in the battery assembly to achieve a relatively uniform heat exchange effect, thereby ensuring a more uniform temperature distribution within the battery during heat exchange operations of the battery, and enabling the battery to operate more stably while maintaining good performance.

In an example of the present application, two first heat exchange flow passages are provided, the plurality of flow channel portions of each first heat exchange flow passage include: five first heat exchange portions, one second heat exchange portion, one third heat exchange portion, one fourth heat exchange portion, and one third heat exchange section; and four battery units are provided, the battery units located at the ends in the second direction are in contact with two first heat exchange portions and one second heat exchange portion to enable heat exchange, and each of the remaining battery unit is in contact with three first heat exchange portions to enable heat exchange. The third heat exchange portion is connected to the second heat exchange portion and a first heat exchange portion farthest from the second heat exchange portion and is in contact with the second group of battery cells to enable heat exchange, and the third heat exchange section is connected to the first heat exchange portion closest to the second heat exchange portion and is in contact with the third group of battery cells to enable heat exchange.

In the foregoing implementation, the first heat exchange section, the second heat exchange section, and the third heat exchange section in the first heat exchange flow passage are arranged in a manner as described above, so that during heat exchange operations, the heat exchange member can well match the heat exchange conditions of the battery cells at different positions within the battery. This allows battery cells at different positions in the battery assembly to achieve a relatively uniform heat exchange effect, thereby ensuring a more uniform temperature distribution within the battery during heat exchange operations of the battery, and enabling the battery to operate more stably while maintaining good performance.

In an example of the present application, two first heat exchange flow passages are provided, the plurality of flow channel portions of each first heat exchange flow passage include: five first heat exchange portions, one second heat exchange portion, one third heat exchange portion, one fourth heat exchange portion, and one third heat exchange section; and six battery units are provided, the battery units located at the ends in the second direction are in contact with one first heat exchange portion and one second heat exchange portion to enable heat exchange, and each of the remaining battery unit is in contact with two first heat exchange portions to enable heat exchange. The third heat exchange portion is connected to the second heat exchange portion and the first heat exchange portion farthest from the second heat exchange portion and is in contact with the second group of battery cells to enable heat exchange, and the third heat exchange section is connected to the first heat exchange portion closest to the second heat exchange portion and is in contact with the third group of battery cells to enable heat exchange.

In the foregoing implementation, the first heat exchange section, the second heat exchange section, and the third heat exchange section in the first heat exchange flow passage are arranged in a manner as described above, so that during heat exchange operations, the heat exchange member can well match the heat exchange conditions of the battery cells at different positions within the battery. This allows battery cells at different positions in the battery assembly to achieve a relatively uniform heat exchange effect, thereby ensuring a more uniform temperature distribution within the battery during heat exchange operations of the battery, and enabling the battery to operate more stably while maintaining good performance.

In an example of the present application, two first heat exchange flow passages are provided, the plurality of flow channel portions of each first heat exchange flow passage include: three first heat exchange portions, one second heat exchange portion, one third heat exchange portion, one fourth heat exchange portion, and one third heat exchange section; and four battery units are provided, the battery units located at the ends in the second direction are in contact with one first heat exchange portion and one second heat exchange portion to enable heat exchange, and each of the remaining battery unit is in contact with two first heat exchange portions to enable exchange. The third heat exchange portion is connected to the second heat exchange portion and the first heat exchange portion farthest from the second heat exchange portion and is in contact with the second group of battery cells to enable heat exchange, and the third heat exchange section is connected to the first heat exchange portion closest to the second heat exchange portion and is in contact with the third group of battery cells to enable heat exchange.

In the foregoing implementation, the first heat exchange section, the second heat exchange section, and the third heat exchange section in the first heat exchange flow passage are arranged in a manner as described above, so that during heat exchange operations, the heat exchange member can well match the heat exchange conditions of the battery cells at different positions within the battery. This allows battery cells at different positions in the battery assembly to achieve a relatively uniform heat exchange effect, thereby ensuring a more uniform temperature distribution within the battery during heat exchange operations of the battery, and enabling the battery to operate more stably while maintaining good performance.

In one embodiment of the present application, the first heat exchange section is connected downstream of the second heat exchange section in a fluid flow direction; or the heat exchange member is configured such that: during heating of the battery assembly of the battery, the first heat exchange section is connected downstream of the second heat exchange section in a fluid flow direction; during cooling of the battery assembly of the battery, the first heat exchange section is connected upstream of the second heat exchange section in the fluid flow direction.

In the foregoing implementation, by determining the first heat exchange section to be upstream or downstream of the second heat exchange section in the fluid flow direction based on the heat exchange conditions of the heat exchange member, the heat exchange member can adjust the flow direction of the fluid according to the heating or cooling requirements of the battery assembly. This allows the heat exchange member to more effectively provide heating or cooling to the battery assembly, and perform heat exchange operations according to the heat dissipation conditions and heat exchange requirements at different positions within the assembly. As a result, the battery assembly achieves improved heating and cooling performance, and the temperature distribution within the battery is relatively uniform after heat exchange, enabling the battery to operate more stably and maintain good performance.

In one embodiment of the present application, the plurality of heat exchange tubes are spaced apart along the second direction, the heat exchange flow passage of at least one heat exchange tube is formed as a second heat exchange flow passage, and the structure of any second heat exchange flow passage is the same as or different from the structure of the first heat exchange flow passage.

In the foregoing implementation, by providing at least one second heat exchange flow passage, diversity in the arrangement of heat exchange flow passages can be increased, enabling the heat exchange member to better exchange heat with the battery assembly and improving the heat exchange effect of the heat exchange member.

In one embodiment of the present application, the heat exchange tubes are provided in plurality, the plurality of heat exchange tubes are arranged to wind around each other, one heat exchange tube defines the first heat exchange flow passage, the heat exchange flow passage of at least one heat exchange tube is formed as a third heat exchange flow passage, the third heat exchange flow passage is bent and provided within the U-shaped region of the first heat exchange flow passage, and the first heat exchange flow passage and the third heat exchange flow passage are bent in the same plane, and bent structures of the first heat exchange flow passage and the third heat exchange flow passage are the same or different.

In the foregoing implementation, by providing a plurality of heat exchange flow passages, diversity of the heat exchange flow passages can be increased, so that the arrangement of the heat exchange flow passages can be designed according to cooling demands of the battery, thereby further enhancing the heat exchange effect of the heat exchange member and improving the temperature uniformity of the battery.

In some examples of the present application, the third heat exchange flow passage includes a U-shaped region having a same structure as the first heat exchange flow passage, and at least part of the first heat exchange section of the first heat exchange flow passage is provided within the U-shaped region of the third heat exchange flow passage.

In the foregoing implementation, by configuring the third heat exchange flow passage to include a U-shaped region having the same structure as that of the first heat exchange flow passage and disposing at least part of the first heat exchange section of the first heat exchange flow passage within the U-shaped region of the third heat exchange flow passage, the first heat exchange flow passage and the third heat exchange flow passage can be arranged to at least partially wind around each other. In this way, the winding arrangement of heat exchange flow passages can be designed according to heat exchange demands at various positions of the battery assembly, further enhancing the heat exchange effect of the heat exchange member and improving the temperature uniformity of the battery.

In some embodiments of the present application, the heat exchange tube is formed by bending a single tube into shape, optionally, the heat exchange tube is bent into an arcuate shape at a bending position.

In the foregoing implementation, with the heat exchange tube formed by bending a single tube into shape, the number of welding points of the heat exchange member can be reduced, thereby lowering the risk of leakage of the heat exchange member and improving usage reliability of the heat exchange member. In addition, the operational process of bending a single tube into shape is relatively simple compared to a manufacturing process of a plate-like structure, thereby significantly reducing costs of the heat exchange member. By bending the heat exchange tube into an arcuate shape at a bending position, the flow resistance of fluid and the pressure drop can be reduced, thereby increasing the flow rate of the heat exchange fluid in the heat exchange flow passage and improving the heat exchange efficiency of the heat exchange member.

In some embodiments of the present application, the battery further includes a box, the box including a box body. The box body is an integrally stamped member and includes a bottom wall and a surrounding wall, and the battery assembly is provided in the box body.

In the foregoing implementation, by providing a box body as an integrally stamped member, process steps of the box body can be reduced, reducing the production costs of the box body. In addition, the overall weight of the box body can be decreased while ensuring rigidity of the box body, thereby decreasing the overall weight of the battery and reducing load of the vehicle.

In one embodiment of the present application, a thermal management system of a battery includes a temperature regulation member, and the temperature regulation member includes at least one of a first temperature regulation member and a second temperature regulation member, where the first temperature regulation member is provided outside the box body and is in contact with an outer wall of the box body; the second temperature regulation member is provided in the box and located between any side of an outer peripheral surface of the battery cell and the box; and at least one of the first temperature regulation member and the second temperature regulation member forms the heat exchange member.

In the foregoing implementation, providing the first temperature regulation member outside the box body can reduce space occupation of the first temperature regulation member in the box body, allowing more convenient arrangement of the battery assembly in the box body, which can reduce adverse effects of the first temperature regulation member on an operating environment of the battery assembly in the box body, allowing more stable and reliable operation of the battery assembly, thereby to some extent allowing more stable and reliable operation of the battery.

The second temperature regulation member is arranged between the box and the battery assembly, which allows heat transfer to be more direct and efficient when the second temperature regulation member exchanges heat with the battery assembly, so that the second temperature regulation member can better exchange heat with the battery assembly, allowing the second temperature regulation member to better perform temperature regulation operations and thereby enabling more stable operation of the battery.

At least one of the first temperature regulation member and the second temperature regulation member is formed as the heat exchange member, which allows the thermal management system of the battery to better perform thermal management on the battery, so that the battery assembly can operate in a good temperature environment during operation of the battery, thereby allowing the battery to operate more stably and achieve better performance.

In some examples of the present application, the thermal management system of the battery further includes a third temperature regulation member, the third temperature regulation member is disposed in the box and located between two adjacent battery cells, and a structure of a third temperature regulation member is the same as or different from a structure of the heat exchange member.

In the foregoing implementation, by disposing the third temperature regulation member between adjacent battery cells, battery cells in the battery assembly can obtain better heat exchange effects, thereby allowing the thermal management system of the battery to better regulate the temperature in the battery and the battery to operate more stably.

In a second aspect, embodiments of the present application provide an electric apparatus, including the battery according to the first aspect of the present application.

In the electric apparatus according to the present application, the battery according to the first aspect is provided. By bringing at least two flow channel portions into contact with one battery cell for heat exchange, not only can the heat exchange area between a battery unit and a heat exchange tube be increased to improve the heat exchange effect on the battery unit, but the temperature at which the heat exchange occurs between the heat exchange tube and the battery unit can be approximately an average temperature of two or more flow channel portions. In this way, the temperature difference in heat exchange among different battery units can be reduced, achieving a better uniform-temperature heat exchange effect. As a result, the temperature distribution within the battery assembly becomes more uniform, enabling the battery to operate more stably while maintaining good performance.

Additional aspects and advantages of the present application will be partly given in the following description, partly become apparent from the following description, or be understood through practice of the present application.

### BRIEF DESCRIPTION OF DRAWINGS

FIG. 1 is a schematic diagram of a vehicle according to an embodiment of the present application;
FIG. 2 is an exploded view of a battery according to an embodiment of the present application;
FIG. 3 is an exploded view of a battery according to another embodiment of the present application;
FIG. 4 is a schematic diagram of a battery assembly and a heat exchange member according to a first embodiment of the present application;
FIG. 5 is a schematic diagram of a battery assembly and a heat exchange member according to a second embodiment of the present application;
FIG. 6 is a schematic diagram of a battery assembly and a heat exchange member according to a third embodiment of the present application;
FIG. 7 is a schematic diagram of a battery assembly and a heat exchange member according to a fourth embodiment of the present application;
FIG. 8 is a schematic diagram of a battery assembly and a heat exchange member according to a fifth embodiment of the present application;
FIG. 9 is a schematic diagram of a battery assembly and a heat exchange member according to a sixth embodiment of the present application;
FIG. 10 is a schematic diagram of a heat exchange member and a battery box according to some embodiments of the present application;
FIG. 11 is a schematic diagram of a heat exchange member and a box according to other embodiments of the present application;
FIG. 12 is a schematic diagram of a heat exchange member from one perspective according to an embodiment of the present application;
FIG. 13 is a schematic diagram of a current collector according to an embodiment of the present application;
FIG. 14 is a schematic diagram of a current collector from another perspective according to an embodiment of the present application;
FIG. 15 is a schematic diagram of a heat exchange member according to another embodiment of the present application;
FIG. 16 is an enlarged view of position A circled in FIG. 15;
FIG. 17 is a schematic diagram of the heat exchange member shown in FIG. 15 from another perspective;
FIG. 18 is an enlarged view of position B circled in FIG. 17;
FIG. 19 is a schematic diagram of a battery assembly and a heat exchange member according to a seventh embodiment of the present application;
FIG. 20 is a schematic diagram of a battery assembly and a heat exchange member according to an eighth embodiment of the present application;
FIG. 21 is a schematic diagram of a battery assembly and a heat exchange member according to a ninth embodiment of the present application;
FIG. 22 is a schematic diagram of a battery assembly and a heat exchange member according to a tenth embodiment of the present application;
FIG. 23 is a schematic diagram of a battery assembly and a heat exchange member according to an eleventh embodiment of the present application;
FIG. 24 is a schematic diagram of a battery assembly and a heat exchange member according to a twelfth embodiment of the present application;
FIG. 25 is an exploded view of a battery according to still another embodiment of the present application;
FIG. 26 is a partial schematic diagram of a battery according to yet another embodiment of the present application;
FIG. 27 is a partial cross-sectional view of a battery according to another alternative embodiment of the present application;
FIG. 28 is a partial schematic diagram of the battery shown in FIG. 25; and
FIG. 29 is an enlarged view of position C circled in FIG. 28.

Description of reference signs:
1. Vehicle;
1000. Battery;
100. Heat exchange member;
10. First heat exchange flow passage; 11. First heat exchange section; 111. First heat exchange portion; 112. First bending portion; 12. Second heat exchange section; 120. U-shaped region; 121. Second heat exchange portion; 122. Third heat exchange portion; 123. Second bending portion; 124. Third bending portion; 125. Fourth heat exchange portion; 126. Sixth bending portion; 127. Fifth heat exchange portion; 13. Third heat exchange section; 14. Fourth bending portion; 15. First inlet/outlet section; 16. Fifth bending portion; 17. Second inlet/outlet section; 18. Seventh bending portion; 19. Mounting member;
20. Current collector; 21. Tube body; 211. First space; 212. Second space; 22. First flow channel interface; 23. Second flow channel interface; 24. Partition structure; 241. First partition plate; 242. Second partition plate;
30. Second heat exchange flow passage; 31. Fourth heat exchange section; 40. Third heat exchange flow passage;
200. Battery assembly; 201. Battery unit; 2011. Battery cell; 202. First group of battery cells; 203. Second group of battery cells; 204. Third group of battery cells; 205. Fourth group of battery cells; 206. Fifth group of battery cells;
300. Box; 301. Box body; 302. Bottom guard plate; 303. Cover plate;
400. Foam member; 401. Main body; 402. Rib;
500. Temperature regulation member; 501. First temperature regulation member; 502. Second temperature regulation member; 503. Third temperature regulation member;
2000. Controller; and 3000. Motor.

### DESCRIPTION OF EMBODIMENTS

Embodiments of the technical solutions of the present application will be described in detail below with reference to the accompanying drawings. The following embodiments are merely intended for more clearly describing the technical solutions of the present application and therefore are only used as examples but are not intended to limit the protection scope of the present application.

Unless otherwise defined, all technical and scientific terms used herein have the same meanings as those commonly understood by persons skilled in the technical field to which the present application belongs. The terms used herein are merely intended for describing specific embodiments but are not intended to limit the present application. The terms "include" and "have" and any variations thereof in the specification, claims, and brief description of drawings of the present application are intended to cover non-exclusive inclusion.

In the description of the embodiments of the present application, the technical terms "first" and "second" are merely intended for distinguishing different objects but are not intended to indicate or imply relative importance or implicitly specify the number of the indicated technical features, a specific order, or primarysecondary relationship. In the description of the embodiments of the present application, "a plurality of" means two or more, unless otherwise clearly specified.

Reference to "embodiment" herein means that a particular feature, structure, or characteristic described in conjunction with an embodiment may be included in at least one embodiment of the present application. The appearance of this phrase in various parts of the specification does not necessarily mean the same embodiment or an independent or alternative embodiment mutually exclusive with other embodiments. Persons skilled in the art explicitly and implicitly understand that the embodiments described herein may be combined with other embodiments.

In the description of the embodiments of the present application, the term "and/or" merely describes an association relationship between associated objects and indicates that three relationships may be present. For example, A and/or B may indicate that only A is present, A and B are present, and only B is present. In addition, the character "/" herein generally indicates an "or" relationship between the associated objects.

In the description of the embodiments of the present application, the term "a plurality of" means two or more (including two).

In the description of the embodiments of the present application, the technical terms "length", "width", "thickness", "front", "rear", "vertical", "horizontal", "top", "bottom", "inner", "outer", and the like indicate orientations or positional relationships based on the orientations or positional relationships shown in the drawings, which are merely intended for facilitating describing the embodiments of the present application and simplifying the description but are not intended to indicate or imply that the indicated device or element must have a specific orientation or be constructed and operated in a specific orientation and therefore shall not be construed as a limitation on the embodiments of the present application.

In the description of the embodiments of the present application, unless otherwise expressly specified and defined, the technical terms "mount", "connect", "connection", "fix", etc., should be understood in a broad sense. For example, a fixed connection, a detachable connection, or an integral connection may be implemented. Alternatively, a mechanical connection or an electrical connection may be implemented. Alternatively, a direct connection, an indirect connection through an intermediate medium, or internal communication between two elements or interaction between two elements may be implemented. Persons of ordinary skill in the art may understand specific meanings of the terms in the embodiments of the present application based on specific situations.

Currently, from the perspective of market development, application of power batteries is being more extensive. Power batteries are widely used not only in energy storage power supply systems such as hydro, thermal, wind, and solar power plants, but also in electric transportation tools such as electric bicycles, electric motorcycles, and electric vehicles, and fields such as military equipment and aerospace. With continuous expansion of application fields of power batteries, market demands for power batteries are also constantly increasing. Among currently used power batteries, lithium-ion batteries account for an increasingly large proportion.

It can be understood that the temperature environment in a battery is affected by the external ambient environment, and battery cells in the battery need to be in a certain temperature range during operation, and when the temperature in the battery exceeds or falls below this range, stability and battery performance of the battery can be significantly affected. For example, in hot weather, the battery cells in the battery need to be cooled to keep the temperature in the battery within the required temperature range, whereas in cold weather, the battery cells in the battery need to be heated to ensure that the temperature within the battery still remains within an appropriate temperature range.

In related art, a cooling-tube structure is typically provided in the battery to cool or heat the battery cells. However, such cooling-tube structure tend to have excessively long pipelines and excessive number of bends, resulting in large pressure drop and high flow resistance when the heat exchange fluid flows along pipelines. Consequently, the flow rate of the heat exchange fluid is relatively slow, and the heat exchange effect between the cooling-tube structure and the battery is poor. As the heat exchange fluid flows in pipelines and continuously exchanges heat with the battery cells in the battery, the temperature of the heat exchange fluid gradually decreases or increases, resulting in non-uniform temperature distribution within the battery, thereby affecting operational stability and performance of the battery. The battery performance herein refers to performance indicators such as capacity, chargedischarge rate, and voltage of the battery.

In view of the foregoing, to improve the temperature uniformity of the battery, provide a better heat exchange effect for the battery, and allow the battery to operate more stably while maintaining good performance, the present application proposes a battery provided with a heat exchange member. The heat exchange member is a heat exchange tube and has a plurality of flow channel portions, with each battery unit being in contact with at least two flow channel portions, which can enlarge the heat exchange area between a battery unit and the heat exchange tube, improve the heat exchange effect on the battery unit. In addition, by bringing at least two flow channel portions into contact with a battery unit, the temperature at which the heat exchange occurs between the heat exchange tube and the battery unit can be approximately an average temperature of two or more flow channel portions. In this way, the temperature difference in heat exchange among different battery units can be reduced, achieving a better uniform-temperature heat exchange effect. As a result, the temperature distribution within the battery assembly becomes more uniform, enabling the battery to operate more stably while maintaining good performance.

The battery disclosed in embodiments of the present application may be used in an electric apparatus that uses the battery as a power source or used in various energy storage systems that use the battery as an energy storage element. The electric apparatus may be but is not limited to a mobile phone, a tablet, a laptop, an electric toy, an electric tool, an electric bicycle, an electric vehicle, a ship, and a spacecraft. The electric toy may include a fixed or mobile electric toy, for example, a game console, an electric car toy, an electric ship toy, and an electric airplane toy. The spacecraft may include an airplane, a rocket, an aerospace plane, a spaceship, and the like.

In the embodiments of the present application, the battery cell may be a secondary battery. The secondary battery refers to a battery cell that can be recharged to activate an active material for continuous use after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-chromium battery, a lead-acid battery, or the like.

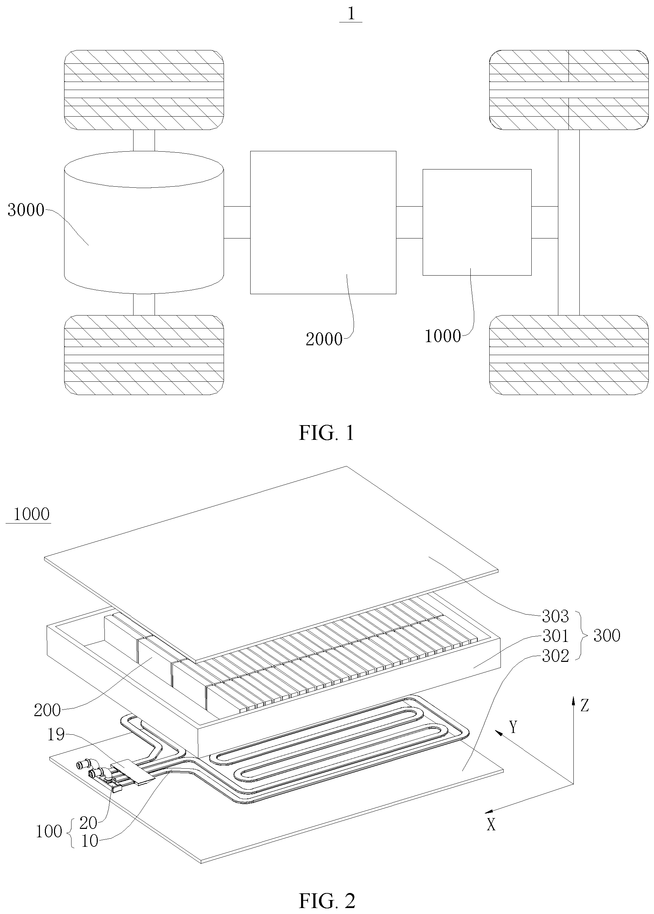

Referring to FIG. 1, FIG. 1 is a schematic diagram of a vehicle 1 according to some embodiments of the present application. The vehicle 1 may be a fossil fuel vehicle, a natural gas vehicle, or a new energy vehicle. The new energy vehicle may be a battery electric vehicle, a hybrid vehicle, an extended-range vehicle, or the like. The vehicle 1 is provided with a battery 1000 inside, and the battery 1000 may be positioned at the bottom, front, or rear of the vehicle 1. The battery 1000 may be configured to supply power to the vehicle 1. For example, the battery 1000 may serve as an operational power supply for the vehicle 1. The vehicle 1 may further include a controller 2000 and a motor 3000, where the controller 2000 is configured to control the battery 1000 to supply power to the motor 3000, for example, to satisfy a working electricity need during start, navigation, and driving of the vehicle 1.

In some embodiments of the present application, the battery 1000 may be used as not only an operational power supply for the vehicle 1, but also a driving power source for the vehicle 1, replacing or partially replacing fossil fuel or natural gas to provide driving power for the vehicle 1.

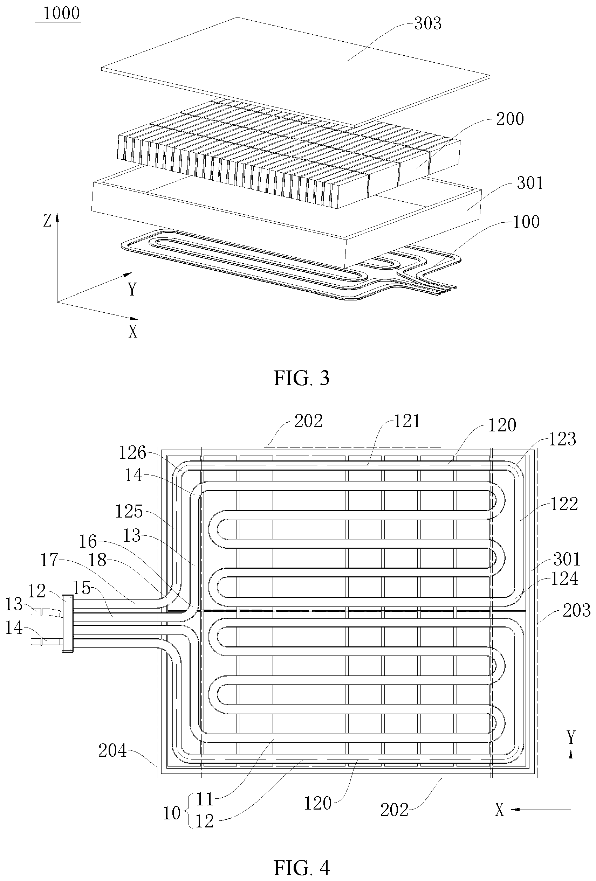

Referring to FIG. 2 and FIG. 3, FIG. 2 is an exploded view of the battery 1000 according to an embodiment of the present application, and FIG. 3 is an exploded view of the battery 1000 according to another embodiment of the present application. The battery 1000 includes a box 300, battery cells 2011, and a heat exchange member 100, the box 300 has an accommodating cavity, the battery cells 2011 are accommodated in the accommodating cavity of the box 300, and the heat exchange member 100 may be provided between the battery cells 2011 and the box 300 or between adjacent battery cells 2011.

The box 300 is used to provide accommodating space for the battery cells 2011, and the box 300 may adopt various structures. In some embodiments, the box 300 may include a first part (for example, a box body 301 below) and a second part (for example, a cover plate 303 below), the first part and the second part cover each other, and the first part and the second part jointly define an accommodating space for accommodating the battery cells 2011. The second part may be a hollow structure with one end open, and the first part may be a plate-like structure, where the first part covers the opening side of the second part so that the first part and the second part jointly define the accommodating space. Alternatively, the first part and the second part may both be hollow structures with one side opening, where the opening side of the first part is engaged with the opening side of the second part. Certainly, the box 300 formed by the first part and the second part may be of a variety of shapes, such as cylinder and cuboid. Optionally, in some embodiments, the box 300 further includes a bottom guard plate 302, where the bottom guard plate 302 is disposed on a lower side of a bottom plate of the box 300 for further enhancing the load-bearing strength and impact resistance of the bottom of the box 300. The bottom plate may be made of various materials, including but not limited to: copper, iron, aluminum, stainless steel, and aluminum alloy.

In the battery 1000, the battery cells 2011 may be provided in plurality, and the plurality of battery cells 2011 may be connected in series, parallel, or series-parallel, where being connected in series-parallel means a combination of series and parallel connections of the plurality of battery cells 2011. The plurality of battery cells 2011 may be directly connected in series, parallel, or series-parallel, and then an entirety of the plurality of battery cells 2011 is accommodated in the box 300. Certainly, the battery 1000 may be formed by a plurality of battery cells 2011 being connected in series, parallel, or series-parallel first to form a battery module 1000 and then a plurality of battery modules 1000 being connected in series, parallel, or series-parallel to form an entirety which is accommodated in the box 300. The battery 1000 may further include other structures. For example, the battery 1000 may further include a busbar configured to implement electrical connection between the plurality of battery cells 2011.

Each battery cell 2011 may be a secondary battery 1000 or a primary battery 1000, or may be a lithium-sulfur battery 1000, a sodium-ion battery 1000, or a magnesium-ion battery 1000, without being limited thereto. The battery cell 2011 may be cylindrical, flat, rectangular, or of other shapes.

In the battery 1000, the heat exchange member 100 may be provided between the plurality of battery cells 2011 and the top wall of the box 300, or between the plurality of battery cells 2011 and the bottom wall of the box 300, or between the bottom wall of the box 300 and the bottom guard plate 302, or between two adjacent battery cells 2011, providing heat exchange for a plurality of battery cells 2011. In some embodiments, the heat exchange member 100 may include a heat exchange tube and a current collector 20, where the heat exchange tube is connected to the current collector 20, the heat exchange tube may be a flat tube, a round tube, a harmonica tube, or a tube of other shapes, and the current collector 20 may be a rectangular tube, a round tube, or the like.

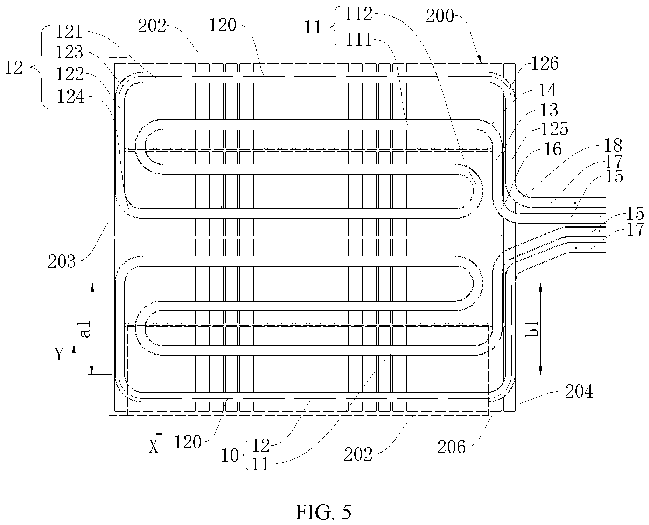

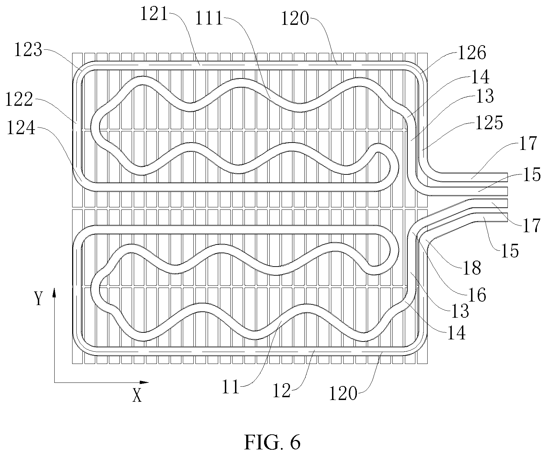

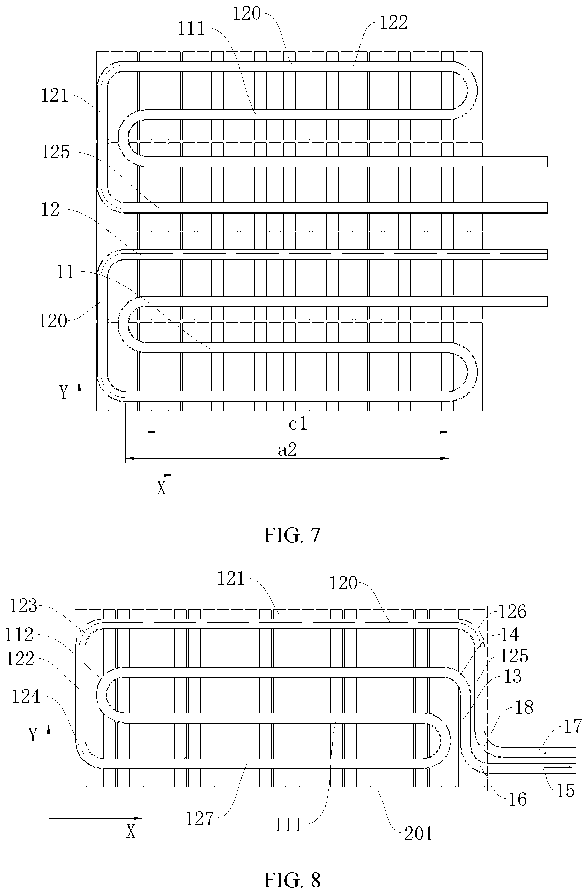

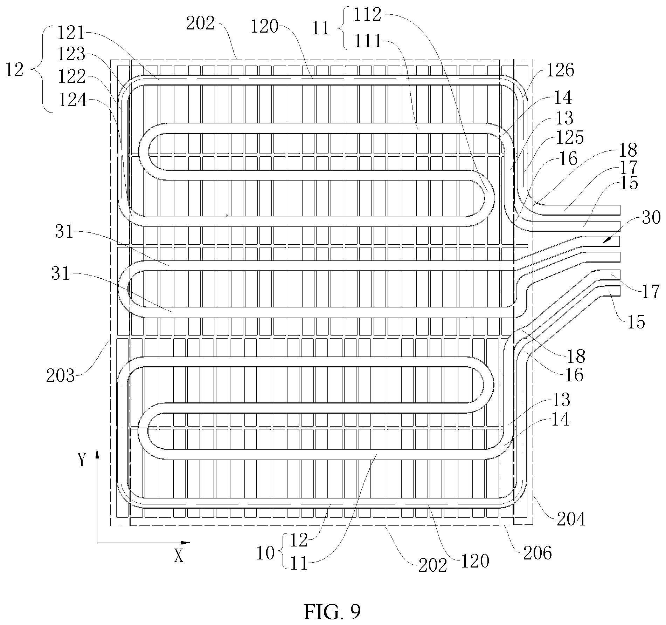

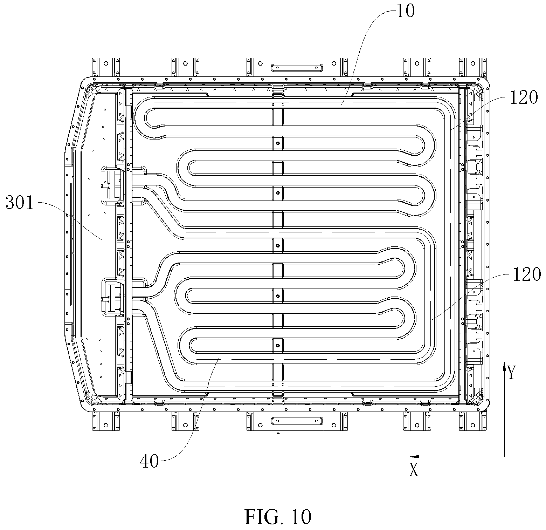

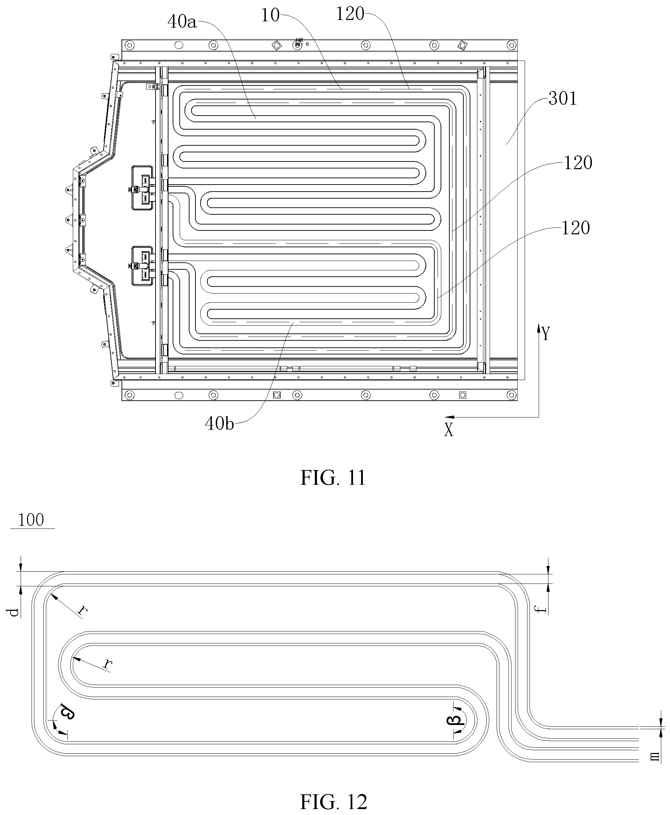

The battery 1000 according to the embodiments of the first aspect of the present application will be described below with reference to FIG. 4 to FIG. 12. FIG. 4 is a schematic diagram of a battery assembly 200 and a heat exchange member 100 according to a first embodiment of the present application; FIG. 5 is a schematic diagram of a battery assembly 200 and a heat exchange member 100 according to a second embodiment of the present application; FIG. 6 is a schematic diagram of a battery assembly 200 and a heat exchange member 100 according to a third embodiment of the present application; FIG. 7 is a schematic diagram of a battery assembly 200 and a heat exchange member 100 according to a fourth embodiment of the present application; FIG. 8 is a schematic diagram of a battery assembly 200 and a heat exchange member 100 according to a fifth embodiment of the present application; FIG. 9 is a schematic diagram of a battery assembly 200 and a heat exchange member 100 according to a sixth embodiment of the present application; FIG. 10 is a schematic diagram of a heat exchange member 100 and a battery box according to some embodiments of the present application; FIG. 11 is a schematic diagram of a heat exchange member 100 and a box according to other embodiments of the present application; and FIG. 12 is a schematic diagram of a heat exchange member 100 from one perspective according to an embodiment of the present application.

As shown in FIG. 4, a battery 1000 according to an embodiment of the first aspect of the present application includes a battery assembly 200 and a heat exchange member 100. The battery 1000 includes a battery unit 201, where the battery unit 201 includes a plurality of battery cells 2011 stacked along a first direction; and the heat exchange member 100 includes a heat exchange tube, where the heat exchange tube has a heat exchange flow passage, the heat exchange flow passage includes a plurality of flow channel portions (for example, a first heat exchange portion 111, a second heat exchange portion 121, a third heat exchange portion 122, a fourth heat exchange portion 125, and a fifth heat exchange portion 127 below) connected in a bent manner; where each battery unit 201 is in contact with at least two flow channel portions to enable heat exchange.

The battery unit 201 is provided in a battery assembly 200, and one or more battery units 201 may be provided. When a plurality of battery units 201 are provided, the number of battery units 201 may be two, three, four, five, or more. The battery unit 201 includes a plurality of battery cells 2011 stacked along the first direction (for example, direction X shown in FIG. 4). Specifically, a plurality of battery cells 2011 may be stacked along the first direction. The battery cell 2011 may be a cylindrical battery, a prismatic battery, a pouch battery, or the like, and two, three, four, five, six, or other number of battery cells 2011 may be provided. The number of battery cells 2011 in each battery unit 201 may be the same or different, and the number of battery cells 2011 in a battery unit 201 may be configured according to usage and design needs of the battery 1000.

The heat exchange member 100 includes a heat exchange tube, and one or more heat exchange tubes may be provided. When a plurality of heat exchange tubes are provided, the number of heat exchange tubes provided may be two, three, four, five, six, or more, and when the heat exchange tubes are provided in plurality, the plurality of heat exchange tubes are disposed in parallel. A heat exchange flow passage is formed inside the heat exchange tube, and a plurality of flow channel portions in the heat exchange flow passage are connected in a bent manner. Specifically, the heat exchange tube may be bent multiple times to form a plurality of flow channel portions. A plurality of flow channel portions are formed, for example, the heat exchange flow passage may be formed with two, three, four, five, or six, or more flow channel portions.

At least two flow channel portions are in contact with one battery unit 201, that is, one battery unit 201 may be in contact with two or more flow channel portions. The term "in contact with" herein may refer to a direct contact between the heat exchange tube and a battery unit 201 to allow flow channel portions to be in contact with the battery unit 201, or may refer to indirect contact between the heat exchange tube and a battery unit 201. For example, one battery unit 201 may be in contact with two, three, four, or five flow channel portions to enable heat exchange.

When the heat exchange member 100 is in heat exchange with the battery assembly 200, the heat exchange fluid in the heat exchange flow passage may flow in at least two heat exchange portions to exchange heat with the battery cells 2011 in one battery unit 201, where the heat exchange temperature of the heat exchange fluid is different in different heat exchange portions. For example, two flow channel portions in contact with one battery unit 201 may be connected in a bent manner, one flow channel portion being downstream of the other flow channel portion in a fluid flow direction. For another example, one or more flow channel portions are connected between two flow channel portions in contact with one battery unit 201, or two flow channel portions in contact with one battery unit 201 may be respectively located at two ends of a heat exchange flow passage in a fluid flow direction.

For two or more flow channel portions that exchange heat with a same battery unit 201, as the heat exchange fluid flows from one flow channel portion to another flow channel portion and then to yet another flow channel portion, temperatures of the heat exchange fluid in a plurality of flow channel portions are different. When a plurality of flow channel portions exchange heat with a same battery unit 201, heat from the plurality of flow channel portions is transferred to housings of battery cells 2011 of the battery unit 201, and under the heat conduction effect of the housings of the battery cells 2011, heat exchanged by the battery unit 201 with the plurality of heat exchange portions of different temperatures is equivalent to heat exchanged by the battery unit 201 with a plurality of heat exchange portions having an average temperature. In this way, a heat exchange temperature obtained by the battery unit 201 can be approximately an average temperature of the plurality of heat exchange portions, which not only reduces the heat exchange temperature difference among the plurality of battery cells 2011 in the battery unit 201 and improves the temperature uniformity among the battery cells 2011, but also reduces the heat exchange temperature difference among a plurality of battery units 201, and improves the temperature uniformity among the battery units 201, thereby allowing the battery assembly 200 to obtain a relatively uniform heat exchange effect.

In the foregoing implementation, by bringing at least two flow channel portions into contact with one battery cell 2011 for heat exchange, not only can the heat exchange area between a battery unit 201 and a heat exchange tube can be enlarged to improve the heat exchange effect on the battery unit 201, but the temperature at which the heat exchange occurs between the heat exchange tube and the battery unit 201 can be approximately an average temperature of two or more flow channel portions. In this way, the temperature difference in heat exchange among different battery units 201 can be reduced, achieving a better uniform-temperature heat exchange effect. As a result, the temperature distribution within the battery assembly 200 becomes more uniform, enabling the battery 1000 to operate more stably while maintaining good performance.

In some embodiments of the present application, as shown in FIG. 4, at least one battery cell 2011 may be in contact with at least two flow channel portions that extends along a first direction and are disposed adjacent to each other in a second direction (direction Y shown in FIG. 4) to enable heat exchange, the first direction intersecting the second direction.

That is, at least part of flow channel portions of the heat exchange tube extend along the first direction and are spaced apart in the second direction. A battery unit 201 has a plurality of stacked battery cells 2011, where in one battery unit 201, one battery cell 2011 is in contact with two, three, or four or more flow channel portions extending along the first direction for heat exchange; or a plurality of battery cells 2011 each are in contact with two or more flow channel portions extending along the first direction for heat exchange.

"The first direction intersecting the second direction" is intended to indicate that the first direction and the second direction may be perpendicular or only intersect but not perpendicular, that is, intersect at an acute angle or an obtuse angle. For example, the first direction and the second direction may be arranged at an angle of 30°, 60°, 80°, 120°, 150°, or 170°.

When the heat exchange tube exchanges heat with the battery assembly 200, a plurality of flow channel portions can cooperate to exchange heat with one battery cell 2011. Specifically, the heat exchange fluid in each flow channel portion can respectively exchange heat with the battery cell 2011, and higher-temperature heat exchange fluid may cooperate with lower-temperature heat exchange fluid so that the overall temperature of the heat exchange fluid for heat exchange with the battery cell 2011 is well balanced. This reduces the likelihood that the temperature at the battery cell 2011 is higher or lower due to an excessively high or low temperature of the heat exchange fluid.

For example, as shown in FIG. 4, a heat exchange tube may be provided with five flow channel portions that extend along the direction X and are connected end to end. The five heat exchange portions may all be in contact with a plurality of battery cells 2011 in one battery unit 201 for heat exchange, and when the heat exchange tube heats the battery assembly 200, as the heat exchange fluid sequentially flows along the five flow channel portions-specifically, as the heat exchange fluid flows in a direction away from the origin of the coordinate system along the direction Y-the temperature of the heat exchange fluid in a first flow channel portion gradually decreases in the direction away from the origin of the coordinate system along the direction X, the temperature of the heat exchange fluid in a second flow channel portion further gradually decreases in the direction toward the origin of the coordinate system along the direction X, the end of the first flow channel portion in the direction toward the origin of the coordinate system along the direction X has a higher heat exchange temperature, and the end of the second flow channel portion in the direction toward the origin of the coordinate system along the direction X has a lower heat exchange temperature. In this manner, the temperatures of the heat exchange fluid in the two flow channel portions can be balanced, thereby allowing a plurality of heat exchange flow passages to exchange heat with the battery assembly 200 in a more balanced manner.

In the foregoing implementation, by arranging at least one battery cell 2011 to be in contact with at least two flow channel portions, the battery cell 2011 and the heat exchange tube can have a sufficient heat exchange area, thereby providing a better heat exchange effect on the battery cell 2011. The cooperation of a plurality of flow channel portions in exchanging heat with the battery cell 2011 enables more balanced heat exchange among a plurality of battery cells 2011 in the battery assembly 200, such that the temperature difference among the plurality of battery cells 2011 during heat exchange of the battery assembly 200 can be maintained within a certain limit, thereby allowing a more uniform temperature distribution within the battery 1000.

In some embodiments of the present application, as shown in FIG. 4, at least one battery cell 2011 may be in contact with at least two flow channel portions that extend along the second direction and are disposed adjacent to each other in the first direction to enable heat exchange, the first direction intersecting the second direction.

That is, at least part of flow channel portions of the heat exchange tube extend along the second direction and are spaced apart in the first direction. A battery unit 201 may have a plurality of stacked battery cells 2011, where in one battery unit 201, one battery cell 2011 is in contact with two, three, or four or more flow channel portions extending along the second direction for heat exchange; or a plurality of battery cells 2011 each are in contact with two or more flow channel portions extending along the second direction for heat exchange.

"The first direction intersecting the second direction" is intended to indicate that the first direction and the second direction may be perpendicular or only intersect but not perpendicular, that is, intersect at an acute angle or an obtuse angle, for example, the first direction and the second direction may be arranged at an angle of 30°, 60°, 80°, 120°, 150°, or 170°.

In the foregoing implementation, by arranging at least one battery cell 2011 to be in contact with at least two flow channel portions, the battery cell 2011 and the heat exchange tube can have a sufficient heat exchange area, thereby providing a better heat exchange effect on the battery cell 2011. The cooperation of a plurality of flow channel portions in exchanging heat with the battery cell 2011 enables more balanced heat exchange among a plurality of battery cells 2011 in the battery assembly 200, such that the temperature difference among the plurality of battery cells 2011 during heat exchange of the battery assembly 200 can be maintained within a certain limit, thereby allowing a more uniform temperature distribution within the battery 1000.

In some embodiments of the present application, as shown in FIG. 4, at least one battery cell 2011 may be in contact with at least one flow channel portion extending along the first direction and at least one flow channel portion extending along the second direction to enable heat exchange, the first direction intersecting the second direction.

That is, at least part of flow channel portions of the heat exchange tube extend along the first direction and are spaced apart in the second direction. A battery unit 201 has a plurality of stacked battery cells 2011, where in one battery unit 201, one battery cell 2011 is in contact with one, two, three, or four or more flow channel portions extending along the first direction for heat exchange, and is in contact with one, two, three, or four or more flow channel portions extending along the second direction for heat exchange; or a plurality of batteries 1000 each are in contact with one or more flow channel portions extending along the first direction for heat exchange, and are in contact with one or more flow channel portions extending along the second direction for heat exchange.

"The first direction intersecting the second direction" is intended to indicate that the first direction and the second direction may be perpendicular or only intersect but not perpendicular, that is, intersect at an acute angle or an obtuse angle, for example, the first direction and the second direction may be arranged at an angle of 30°, 60°, 80°, 120°, 150°, or 170°.

In the foregoing implementation, by arranging at least one battery cell 2011 to be in contact with at least two flow channel portions, the battery cell 2011 and the heat exchange tube can have a sufficient heat exchange area, thereby providing a better heat exchange effect on the battery cell 2011. The cooperation of a plurality of flow channel portions in exchanging heat with the battery cell 2011 enables more balanced heat exchange among a plurality of battery cells 2011 in the battery assembly 200, such that the temperature difference among the plurality of battery cells 2011 during heat exchange of the battery assembly 200 can be maintained within a certain limit, thereby allowing a more uniform temperature distribution within the battery 1000.

In some embodiments of the present application, as shown in FIG. 4 to FIG. 11, the heat exchange tubes may be provided in plurality, the plurality of heat exchange tubes are disposed in parallel, each of the heat exchange tubes defines one of the heat exchange flow passages in its interior, and a plurality of heat exchange flow passages are sequentially arranged along the second direction or are arranged to wind around each other in a same plane, the first direction intersecting the second direction.

The number of heat exchange tubes is set to be plural. For example, two, three, four, or more heat exchange pipes may be provided, and the plurality of heat exchange pipes define a plurality of heat exchange channels. The plurality of heat exchange tubes are disposed in parallel, specifically, the plurality of heat exchange tubes may be disposed in parallel in the first direction, or the plurality of heat exchange tubes may be disposed in parallel in the second direction. When the heat exchange member 100 exchanges heat with the battery assembly 200, the heat exchange fluid may simultaneously flow into a plurality of heat exchange flow passages of a plurality of heat exchange tubes to exchange heat with battery units 201 at corresponding positions.

A plurality of heat exchange tubes may be spaced apart in the second direction, or a plurality of heat exchange tubes may be arranged to wind around each other, and a plurality of heat exchange flow passages formed by the plurality of heat exchange tubes are correspondingly arranged to wind around each other. For example, the plurality of first heat exchange portions 111 in the heat exchange flow passage may be staggered in the second direction with a plurality of first heat exchange portions 111 in another heat exchange flow passage, or the second heat exchange portion 121 in the heat exchange flow passage 10 may be disposed adjacent to the second heat exchange portion 121 or the third heat exchange portion 122 in another heat exchange flow passage, or be arranged to wind around each other in other forms, which are not enumerated herein.

It can be understood that when a fluid flows in a pipeline, a longer pipeline and a greater number of bends in a pipeline result in a greater fluid pressure drop, a higher fluid flow resistance, and a slower fluid flow rate. In the embodiments, a plurality of heat exchange tubes are provided in the heat exchange member 100 and arranged in parallel, thereby reducing the length and the number of bends of each individual pipeline. As a result, the flow resistance and pressure drop of the heat exchange fluid in the heat exchange flow passage can be effectively reduced, allowing the heat exchange fluid to maintain a desirable flow rate in the heat exchange flow passage, and thus enabling the heat exchange member 100 to achieve good heat exchange effect on the battery assembly 200.

In the foregoing implementation, by arranging a plurality of heat exchange tubes to be disposed in parallel, the heat exchange fluid can simultaneously exchange heat with different battery units 201 through a plurality of heat exchange tubes, thereby improving the heat exchange efficiency of the battery assembly 200 and achieving better heat exchange effect on the battery assembly 200 to some extent. The plurality of heat exchange flow passages are spaced apart along a second direction, so that an overall structure of the heat exchange flow passages can be disposed in a relatively compact manner, thereby facilitating design and arrangement of the heat exchange member 100.

In other embodiments, a plurality of heat exchange flow passages are arranged to wind around each other. For example, as shown in FIG. 10, the heat exchange member 100 has two heat exchange flow passages disposed in parallel, and the two heat exchange flow passages are arranged to wind around each other. As another example, as shown in FIG. 11, a heat exchange member 100 has three heat exchange flow passages disposed in parallel, and the three heat exchange flow passages are arranged to wind around each other.

A plurality of heat exchange flow passages are disposed in parallel, that is, inlets of the plurality of heat exchange flow passages are connected to a same liquid supply tube, and outlets of the plurality of heat exchange flow passages are connected to a same liquid outlet tube.

In the foregoing implementation, by arranging a plurality of heat exchange flow passages to be arranged to wind around each other, the plurality of heat exchange flow passages in the heat exchange member 100 can have better integrity, diversity of the heat exchange flow passages can be increased, and then the adaptability of the heat exchange member 100 can be improved, allowing it to satisfy different needs of the battery 1000, thereby improving market competitiveness of the battery 1000. In addition, the parallel arrangement of the plurality of heat exchange flow passages allows the plurality of heat exchange flow passages to perform heat exchange simultaneously, thereby reducing heat exchange time of the heat exchange member 100 and improving the heat exchange efficiency.

In one embodiment of the present application, as shown in FIG. 5, a plurality of heat exchange flow passages may be sequentially disposed along the second direction, a plurality of battery units 201 are sequentially disposed along the second direction, where the plurality of battery units 201 are respectively in contact with the plurality of heat exchange flow passages to enable heat exchange; or in the second direction, one heat exchange flow passage is correspondingly in contact with two adjacent battery units 201 to enable heat exchange; or in the second direction, one heat exchange flow passage is correspondingly in contact with three adjacent battery units 201 to enable heat exchange; or in the second direction, two adjacent heat exchange flow passages are correspondingly in contact with three adjacent battery units 201 to enable heat exchange.

The plurality of battery units 201 are respectively in contact with the plurality of heat exchange flow passages, that is, one battery unit 201 cooperates with one heat exchange flow passage for heat exchange, and when the heat exchange member 100 exchanges heat with the battery assembly 200, the plurality of battery units 201 in the battery assembly 200 all perform heat exchange through corresponding heat exchange flow passages.

One heat exchange flow passage is correspondingly in contact with two adjacent battery units 201, or one heat exchange flow passage is correspondingly in contact with three adjacent battery units 201, that is, two or three battery units 201 may share one heat exchange flow passage for heat exchange. Here, two or three battery units 201 may only exchange heat with this one heat exchange flow passage, or a heat exchange flow passage is provided between two adjacent battery units 201, the heat exchange flow passage exchanges heat with respective parts of the two battery units 201 that are adjacent to the exchange flow channel, and at the same time, the remaining part of at least one battery unit 201 exchanges heat with another heat exchange flow passage. In this way, multiple heat exchange flow passages can cooperate to perform heat exchange on a single battery unit 201.

In the second direction, two adjacent heat exchange flow passages are correspondingly in contact with three adjacent battery units 201. For example, a part of one heat exchange flow passage is in contact with a first battery unit 201, and another part of the heat exchange flow passage is in contact with a second battery unit 201, a part of another heat exchange flow passage is in contact with the second battery unit 201, and another part of the another heat exchange flow passage is in contact with a third battery unit 201.

In the foregoing implementation, by arranging a plurality of battery units 201 to be respectively in contact with the plurality of heat exchange flow passages, a heat exchange member 100 and a battery assembly 200 can be conveniently and easily assembled and arranged, so that the heat exchange member 100 can achieve relatively high heat exchange efficiency when exchanging heat with the battery assembly 200, thereby allowing the battery 1000 to obtain a good heat exchange effect and operate more stably. In this embodiment, one heat exchange flow passage is configured to be respectively in contact with two or three adjacent battery units 201, the number of heat exchange tubes can be reduced while still satisfying the heat exchange demands, thereby facilitating the assembly of the heat exchange member 100 in the battery 1000.

In the foregoing implementation, by defining the arrangement patterns of heat exchange flow passages and battery units 201, different arrangement patterns can be selected according to actual heat exchange demands, simplifying a structure of the heat exchange member 100 while achieving the heat exchange effect.

In some embodiments of the present application, as shown in FIG. 5, taking a wall surface of the battery cell 2011 that is in contact with the heat exchange tube as a projection plane, a thickness of the battery cell 2011 in the first direction may be greater than or equal to 30 mm, and the area of the orthographic projection of the heat exchange tube on the wall surface is greater than or equal to 15% of an area of the wall surface.

When the heat exchange member 100 heats or cools the battery cell 2011, heat is transferred from the battery cell 2011 to the heat exchange fluid in the heat exchange tube through the wall surface, or from the heat exchange fluid in the heat exchange tube to the battery cell 2011.

The orthographic projection of the heat exchange tube refers to a projection of the heat exchange tube projected onto a projection plane in a direction parallel to the second direction, so that the area of the orthographic projection of the heat exchange tube on the wall surface is an area of a heat exchange surface of the heat exchange tube for heat exchange with a single battery cell 2011, in other words, may refer to a heat exchange area of the battery cell 2011 exchanging heat with the heat exchange tube. In this embodiment, the area of the orthographic projection of the heat exchange tube on the wall surface is set to be greater than 15% of the area of the wall surface, that is, the heat exchange area of the battery cell 2011 with the heat exchange tube (hereinafter referred to as the heat exchange area of the battery cell 2011) is greater than 15% of the area of the wall surface of the battery cell 2011. For example, the heat exchange area of the battery cell 2011 may be 15%, 20%, 25%, 30%, 35%, 40%, 45%, 50%, 55%, 60%, 65%, 70%, 75%, 80%, 85%, 90%, 95%, or the like of the area of the wall surface of the battery cell 2011.

It can be understood that when a battery cell 2011 is cooled or heated, and the heat exchange fluid provides a same magnitude of temperature change for cooling and for heating, a larger heat exchange area of the battery cell 2011 results in a faster cooling or heating rate of the battery cell 2011.

In the foregoing implementation, the heat exchange area of the battery cell 2011 is limited to be greater than or equal to 15% of the area of the wall surface of the battery cell 2011. When the heat exchange member 100 cools or heats the battery cell 2011, the heat exchange contact area between the heat exchange tube and each battery cell 2011 can be increased, improving the heat exchange rate of the battery cell 2011, that is, improving the cooling rate and heating rate of the battery cell 2011. In this way, the battery cell 2011 can quickly reach a preset temperature range when the battery assembly 200 starts to operate. Moreover, during normal operation of the battery assembly 200, the battery assembly 200 can be maintained within an appropriate temperature range, reducing temperature fluctuation of the battery cell 2011 during operation, so that the battery cell 2011 operates more stably, thereby allowing the battery 1000 to operate stably and maintain good performance.

In addition, in this embodiment, by configuring the heat exchange area of the battery cell 2011 to be greater than or equal to 15% of the area of the wall surface of the battery cell 2011, the contact area between the battery cell 2011 and the heat exchange tube can be increased, that is, the arrangement density of the heat exchange tube on the surface of the battery assembly 200 can be increased. The increased arrangement density of the heat exchange tube can improve uniformity of heat transfer by the heat exchange member 100 at various positions of the battery assembly 200, thereby improving the temperature uniformity of the battery assembly 200 and improving the temperature uniformity effect of the battery 1000.

In the foregoing implementation, by configuring the heat exchange area between the heat exchange tube and the battery cell 2011 to be greater than or equal to 15% of the area of the wall surface of the battery cell 2011, the heat exchange rate between the heat exchange tube and the battery cell 2011 can be increased, allowing the battery cell 2011 to stably obtain good cooling and heat dissipation effects or heating and temperature rise effects, thereby making temperature distribution within the battery assembly 200 more uniform and allowing the battery 1000 to operate more stably and reliably and maintain good battery performance.

In one embodiment of the present application, when the thickness of the battery cell 2011 in the first direction is greater than or equal to 40 mm, the area of the orthographic projection of the heat exchange tube on the wall surface may be greater than or equal to 30% of the area of the wall surface.

The thickness of the battery cell 2011 in the first direction is set to be greater than or equal to 40 mm. Specifically, the battery cell 2011 may be a prismatic battery 1000, the thickness direction of the battery cell 2011 is the same as the first direction, the housing of the battery cell 2011 forms large surfaces on two sides in the first direction, and the thickness of the battery cell 2011 may be 40 mm, 45 mm, 50 mm, 55 mm, 60 mm, 65 mm, 70 mm, 75 mm, 80 mm, 85 mm, 90 mm, 95 mm, 100 mm, 105 mm, or the like. In this embodiment, the area of the orthographic projection of the heat exchange tube on the wall surface is set to be greater than or equal to 30% of the area of the wall surface, for example, a heat exchange area of a battery cell 2011 may be 30%, 35%, 40%, 45%, 50%, 55%, 60%, 65%, 70%, 75%, 80%, 85%, 90%, 95%, or the like of the area of the wall surface, and a ratio of the heat exchange area of the battery cell 2011 to the area of the wall surface may be correspondingly set according to the thickness of the battery cell 2011.

It can be understood that when the thickness of the battery cell 2011 increases, the overall volume of the battery cell 2011 becomes larger, and when the battery cell 2011 reaches the same heating rate and cooling rate, required heat exchange amount increases.

Even if the thickness of the battery cell 2011 increases, under the same heat exchange tube structure, the area of the wall surface of the battery cell 2011 that is in contact with the heat exchange tube also increases accordingly, the increased heat exchange contact area cannot satisfy the heat exchange demands of the battery cell 2011 after volume increase.

Therefore, to satisfy the heat exchange demands of the battery cell 2011 after its thickness increases to greater than or equal to 40 mm, in this embodiment, the area of the orthographic projection of the heat exchange tube on the wall surface is set to be greater than or equal to 30% of the area of the wall surface, so that the heat exchange area between the battery cell 2011 and the heat exchange tube can be enlarged to enable the heat exchange contact area between the battery cell 2011 and the heat exchange tube to match heat exchange demands of the battery cell 2011 after its thickness increases, thereby improving the heat exchange speed of the heat exchange tube on the battery cell 2011 and enhancing the heat exchange effect of the heat exchange tube on the battery cell 2011. Thus, rapid temperature rise and rapid temperature decrease of the battery cell 2011 is achieved, thereby allowing the battery cell 2011 to quickly enter and be maintained within an appropriate temperature range and enabling the battery assembly 200 to operate more stably.

In the foregoing implementation, when the thickness of the battery cell 2011 is greater than or equal to 40 mm, setting a ratio of the heat exchange area of the battery cell 2011 to the area of the wall surface to be greater than or equal to 30% can better match the heat exchange contact area between the heat exchange tube and the battery cell 2011 with the heat exchange demands of the battery cell 2011 after its thickness increases, so that the battery assembly 200 can be better maintained within an appropriate temperature range, thereby providing better temperature uniformity of the battery assembly 200 and enabling the battery 1000 to operate more stably.

In one embodiment of the present application, when the thickness of the battery cell 2011 in the first direction is greater than or equal to 50 mm, the area of the orthographic projection of the heat exchange tube on the wall surface may be greater than or equal to 45% of the area of the wall surface.

The thickness of the battery cell 2011 in the first direction is greater than or equal to 50 mm, for example, the thickness of the battery cell 2011 may be 50 mm, 55 mm, 60 mm, 65 mm, 70 mm, 75 mm, 80 mm, 85 mm, 90 mm, 95 mm, 100 mm, 105 mm, or the like. A ratio of the area of the orthographic projection of the heat exchange tube on the wall surface to the area of the wall surface is limited to be greater than or equal to 45%, for example, a ratio of the area of the orthographic projection of the heat exchange tube on the wall surface to the area of the wall surface may be 45%, 50%, 55%, 60%, 65%, 70%, 75%, 80%, 85%, 90%, 95%, or the like, and a ratio of the area of the orthographic projection of the heat exchange tube on the wall surface to the area of the wall surface may be correspondingly set according to the thickness of the battery cell 2011.

In the foregoing implementation, when the thickness of the battery cell 2011 is greater than or equal to 50 mm, setting a ratio of the heat exchange area of the battery cell 2011 to the area of the wall surface to be greater than or equal to 45% can better match the heat exchange contact area between the heat exchange tube and the battery cell 2011 with the heat exchange demands of the battery cell 2011 after its thickness increases, so that the battery assembly 200 can be better maintained within an appropriate temperature range, thereby providing better temperature uniformity of the battery assembly 200 and enabling the battery 1000 to operate more stably.

In one embodiment of the present application, when the thickness of the battery cell 2011 in the first direction is greater than or equal to 60 mm, and the area of the orthographic projection of the heat exchange tube on the wall surface may be greater than or equal to 65% of the area of the wall surface.

The thickness of the battery cell 2011 in the first direction is greater than or equal to 60 mm, for example, the thickness of the battery cell 2011 may be 60 mm, 65 mm, 70 mm, 75 mm, 80 mm, 85 mm, 90 mm, 95 mm, 100 mm, 105 mm, or the like. A ratio of the area of the orthographic projection of the heat exchange tube on the wall surface to the area of the wall surface is limited to be greater than or equal to 65%, for example, a ratio of the area of the orthographic projection of the heat exchange tube on the wall surface to the area of the wall surface may be 65%, 70%, 75%, 80%, 85%, 90%, 95%, or the like, and a ratio of the area of the orthographic projection of the heat exchange tube on the wall surface to the area of the wall surface may be correspondingly set according to the thickness of the battery cell 2011.

In the foregoing implementation, when the thickness of the battery cell 2011 is greater than or equal to 60 mm, setting a ratio of the heat exchange area of the battery cell 2011 to the area of the wall surface to be greater than or equal to 65% can better match the heat exchange contact area between the heat exchange tube and the battery cell 2011 with the heat exchange demands of the battery cell 2011 after its thickness increases, so that the battery assembly 200 can be better maintained within an appropriate temperature range, thereby providing better temperature uniformity of the battery assembly 200 and enabling the battery 1000 to operate more stably.

In one embodiment of the present application, when the thickness of the battery cell 2011 in the first direction is greater than or equal to 80 mm, and the area of the orthographic projection of the heat exchange tube on the wall surface may be greater than or equal to 75% of the area of the wall surface.

The thickness of the battery cell 2011 in the first direction is greater than or equal to 80 mm, for example, the thickness of the battery cell 2011 may be 80 mm, 85 mm, 90 mm, 95 mm, 100 mm, 105 mm, or the like. A ratio of the area of the orthographic projection of the heat exchange tube on the wall surface to the area of the wall surface is limited to be greater than or equal to 75%, for example, a ratio of the area of the orthographic projection of the heat exchange tube on the wall surface to the area of the wall surface may be 75%, 80%, 85%, 90%, 95%, or the like, and a ratio of the area of the orthographic projection of the heat exchange tube on the wall surface to the area of the wall surface may be correspondingly set according to the thickness of the battery cell 2011.

In the foregoing implementation, when the thickness of the battery cell 2011 is greater than or equal to 80 mm, setting a ratio of the heat exchange area of the battery cell 2011 to the area of the wall surface to be greater than or equal to 75% can better match the heat exchange contact area between the heat exchange tube and the battery cell 2011 with the heat exchange demands of the battery cell 2011 after its thickness increases, so that the battery assembly 200 can be better maintained within an appropriate temperature range, thereby providing better temperature uniformity of the battery assembly 200 and enabling the battery 1000 to operate more stably.

In one embodiment of the present application, when the thickness of the battery cell 2011 in a first direction is greater than 100 mm, the area of the orthographic projection of the heat exchange tube on the wall surface may be greater than or equal to 90% of the area of the wall surface.

The thickness of the battery cell 2011 in the first direction is greater than 100 mm, for example, the thickness of the battery cell 2011 may be 105 mm, 110 mm, 115 mm, 120 mm, 125 mm, 130 mm, or the like. A ratio of the area of the orthographic projection of the heat exchange tube on the wall surface to the area of the wall surface is limited to be greater than or equal to 90%, for example, a ratio of the area of the orthographic projection of the heat exchange tube on the wall surface to the area of the wall surface may be 90%, 91%, 92%, 93%, 94%, 95%, 96%, 97%, 98%, 99%, or the like, and a ratio of the area of the orthographic projection of the heat exchange tube on the wall surface to the area of the wall surface may be correspondingly set according to the thickness of the battery cell 2011.

In the foregoing implementation, when the thickness of the battery cell 2011 is greater than 100 mm, setting a ratio of the heat exchange area of the battery cell 2011 to the area of the wall surface to be greater than or equal to 90% can better match the heat exchange contact area between the heat exchange tube and the battery cell 2011 with the heat exchange demands of the battery cell 2011 after its thickness increases, so that the battery assembly 200 can be better maintained within an appropriate temperature range, thereby providing better temperature uniformity of the battery assembly 200 and enabling the battery 1000 to operate more stably.

In one embodiment of the present application, when the thickness of the battery cell 2011 in a first direction is greater than or equal to 30 mm and less than 40 mm, the area of the orthographic projection of the heat exchange tube on the wall surface may be greater than or equal to 15% of the area of the wall surface and less than 30% of the area of the wall surface.

The thickness of the battery cell 2011 in the first direction is greater than or equal to 30 mm and less than 40 mm, for example, the thickness of the battery cell 2011 may be 30 mm, 31 mm, 32 mm, 33 mm, 34 mm, 35 mm, 36 mm, 37 mm, 38 mm, or the like. A ratio of an area of an orthographic projection of a heat exchange flow passage on a wall surface to the area of the wall surface is limited to be greater than or equal to 15% and less than 30%, for example, a ratio of the area of the orthographic projection of the heat exchange tube on the wall surface to the area of the wall surface may be 15%, 16%, 17%, 18%, 19%, 20%, 21%, 22%, 23%, 24%, 25%, 26%, 27%, 28%, 29%, or the like, and a ratio of the area of the orthographic projection of the heat exchange tube on the wall surface to the area of the wall surface may be correspondingly set according to the thickness of the battery cell 2011.

In the foregoing implementation, when the thickness of the battery cell 2011 is greater than or equal to 30 mm and less than 40 mm, setting a ratio of the heat exchange area of the battery cell 2011 to the area of the wall surface to be greater than or equal to 15% and less than 30% can well match the heat exchange contact area between the heat exchange tube and the battery cell 2011 with the heat exchange demands of the battery cell 2011 after its thickness increases, so that the battery assembly 200 can be maintained well within an appropriate temperature range. As a result, the temperature distribution within the battery assembly 200 becomes more uniform, enabling the battery 1000 to operate more stably.

In one embodiment of the present application, when the thickness of the battery cell 2011 in a first direction is greater than or equal to 40 mm and less than 50 mm, the area of the orthographic projection of the heat exchange tube on the wall surface may be greater than or equal to 30% of the area of the wall surface and less than 45% of the area of the wall surface.

The thickness of the battery cell 2011 in the first direction is greater than or equal to 40 mm and less than 50 mm, for example, the thickness of the battery cell 2011 may be 40 mm, 41 mm, 42 mm, 43 mm, 44 mm, 45 mm, 46 mm, 47 mm, 48 mm, 49 mm, or the like. A ratio of the area of the orthographic projection of the heat exchange tube on the wall surface to the area of the wall surface is limited to be greater than or equal to 30% and less than 45%, for example, a ratio of the area of the orthographic projection of the heat exchange tube on the wall surface to the area of the wall surface may be 30%, 31%, 32%, 33%, 34%, 35%, 36%, 37%, 38%, 39%, 40%, 41%, 42%, or the like, and a ratio of the area of the orthographic projection of the heat exchange tube on the wall surface to the area of the wall surface may be correspondingly set according to the thickness of the battery cell 2011.

In the foregoing implementation, when the thickness of the battery cell 2011 is greater than or equal to 40 mm and less than 50 mm, setting a ratio of the heat exchange area of the battery cell 2011 to the area of the wall surface to be greater than or equal to 30% and less than 45% can well match the heat exchange contact area between the heat exchange tube and the battery cell 2011 with the heat exchange demands of the battery cell 2011 after its thickness increases, so that the battery assembly 200 can be maintained well within an appropriate temperature range. As a result, the temperature distribution within the battery assembly 200 becomes more uniform, enabling the battery 1000 to operate more stably.

In one embodiment of the present application, when the thickness of the battery cell 2011 in a first direction is greater than or equal to 50 mm and less than 60 mm, the area of the orthographic projection of the heat exchange tube on the wall surface may be greater than or equal to 45% of the area of the wall surface and less than 65% of the area of the wall surface.

The thickness of the battery cell 2011 in the first direction is greater than or equal to 50 mm and less than 60 mm, for example, the thickness of the battery cell 2011 may be 50 mm, 51 mm, 52 mm, 53 mm, 54 mm, 55 mm, 56 mm, 57 mm, 58 mm, or the like. A ratio of the area of the orthographic projection of the heat exchange tube on the wall surface to the area of the wall surface is limited to be greater than or equal to 45% and less than 65%, for example, a ratio of the area of the orthographic projection of the heat exchange tube on the wall surface to the area of the wall surface may be 45%, 46%, 47%, 48%, 49%, 50%, 51%, 52%, 53%, 54%, 55%, 56%, 57%, 58%, 59%, 60%, 61%, 62%, 63%, or the like, and a ratio of the area of the orthographic projection of the heat exchange tube on the wall surface to the area of the wall surface may be correspondingly set according to the thickness of the battery cell 2011.

In the foregoing implementation, when the thickness of the battery cell 2011 is greater than or equal to 50 mm and less than 60 mm, setting a ratio of the heat exchange area of the battery cell 2011 to the area of the wall surface to be greater than or equal to 45% and less than 65% can well match the heat exchange contact area between the heat exchange tube and the battery cell 2011 with the heat exchange demands of the battery cell 2011 after its thickness increases, so that the battery assembly 200 can be maintained well within an appropriate temperature range. As a result, the temperature distribution within the battery assembly 200 becomes more uniform, enabling the battery 1000 to operate more stably.

In one embodiment of the present application, when the thickness of the battery cell 2011 in a first direction is greater than or equal to 60 mm and less than 80 mm, the area of the orthographic projection of the heat exchange tube on the wall surface may be greater than or equal to 65% of the area of the wall surface and less than 75% of the area of the wall surface.

The thickness of the battery cell 2011 in the first direction is greater than or equal to 60 mm and less than 80 mm, for example, the thickness of the battery cell 2011 may be 60 mm, 61 mm, 62 mm, 63 mm, 64 mm, 65 mm, 66 mm, 67 mm, 68 mm, 69 mm, 70 mm, 71 mm, 72 mm, 73 mm, 74 mm, 75 mm, or the like. A ratio of the area of the orthographic projection of the heat exchange tube on the wall surface to the area of the wall surface is limited to be greater than or equal to 65% and less than 75%, for example, a ratio of the area of the orthographic projection of the heat exchange tube on the wall surface to the area of the wall surface may be 65%, 66%, 67%, 68%, 69%, 70%, 71%, 72%, 73%, 74%, or the like, and a ratio of the area of the orthographic projection of the heat exchange tube on the wall surface to the area of the wall surface may be correspondingly set according to the thickness of the battery cell 2011.

In the foregoing implementation, when the thickness of the battery cell 2011 is greater than or equal to 60 mm and less than 80 mm, setting a ratio of the heat exchange area of the battery cell 2011 to the area of the wall surface to be greater than or equal to 65% and less than 75% can well match the heat exchange contact area between the heat exchange tube and the battery cell 2011 with the heat exchange demands of the battery cell 2011 after its thickness increases, so that the battery assembly 200 can be maintained well within an appropriate temperature range. As a result, the temperature distribution within the battery assembly 200 becomes more uniform, enabling the battery 1000 to operate more stably.

In one embodiment of the present application, when the thickness of the battery cell 2011 in a first direction is greater than or equal to 80 mm and less than or equal to 100 mm, the area of the orthographic projection of the heat exchange tube on the wall surface may be greater than or equal to 75% of the area of the wall surface and less than 90% of the area of the wall surface.

The thickness of the battery cell 2011 in the first direction is greater than or equal to 80 mm and less than or equal to 100 mm, for example, the thickness of the battery cell 2011 may be 80 mm, 81 mm, 82 mm, 83 mm, 84 mm, 85 mm, 86 mm, 87 mm, 88 mm, 89 mm, 90 mm, 91 mm, 92 mm, 93 mm, 94 mm, 95 mm, 96 mm, 97 mm, 98 mm, 99 mm, 100 mm, or the like. A ratio of the area of the orthographic projection of the heat exchange tube on the wall surface to the area of the wall surface is limited to be greater than or equal to 75% and less than 90%, for example, a ratio of the area of the orthographic projection of the heat exchange tube on the wall surface to the area of the wall surface may be 75%, 79%, 83%, 87%, or the like, and a ratio of the area of the orthographic projection of the heat exchange tube on the wall surface to the area of the wall surface may be correspondingly set according to the thickness of the battery cell 2011.

In the foregoing implementation, when the thickness of the battery cell 2011 is greater than or equal to 80 mm and less than or equal to 100 mm, setting a ratio of the heat exchange area of the battery cell 2011 to the area of the wall surface to be greater than or equal to 75% and less than 90% can well match the heat exchange contact area between the heat exchange tube and the battery cell 2011 with the heat exchange demands of the battery cell 2011 after the thickness increases, so that the battery assembly 200 can be maintained well within an appropriate temperature range. As a result, the temperature distribution within the battery assembly 200 becomes more uniform, enabling the battery 1000 to operate more stably.

In some embodiments of the present application, as shown in FIG. 5, the heat exchange tubes may be provided in plurality, and the plurality of heat exchange tubes are symmetrically disposed with respect to the first direction.

For example, two, four, six, or more heat exchange tubes may be provided, and the plurality of heat exchange tubes may be symmetrically disposed with respect to the first direction.

In the foregoing implementation, by arranging a plurality of heat exchange tubes to be disposed symmetrically, the heat exchange fluid can simultaneously enter from two sides of the battery assembly 200 in the second direction for heat exchange. The large liquid inlet flow rate allows the length of a single heat exchange flow passage to be shortened and reduces pressure drop within the single heat exchange flow passage, thereby well improving heat exchange efficiency of the battery 1000.

In some embodiments of the present application, as shown in FIG. 5, the heat exchange tubes may be provided in plurality, a heat exchange flow passage of at least one heat exchange tube is formed as a first heat exchange flow passage 10, and the first heat exchange flow passage 10 includes a first heat exchange section 11 and a second heat exchange section 12. The second heat exchange section 12 is bent to form a U-shaped region 120 and forms a plurality of flow channel portions, the first heat exchange section 11 is bent and provided within the U-shaped region 120 and forms a plurality of flow channel portions, and the second heat exchange section 12 and the first heat exchange section 11 are bent and connected in a same plane. Battery cells 2011 of the battery assembly 200 located at an outermost periphery in a circumferential direction constitute peripheral battery cells, and at least part of the second heat exchange section 12 is in contact with the peripheral battery cells.

A heat exchange flow passage of at least one heat exchange tube is formed as a first heat exchange flow passage 10, which means that heat exchange flow passages of one or more of a plurality of heat exchange tubes may be formed as the first heat exchange flow passages 10, for example, two, three, four, five, or more first heat exchange flow passages 10 may be formed.

Heat exchange flow passages includes the first heat exchange flow passage 10, and one or more first heat exchange flow passages 10 may be provided. When there are a plurality of first heat exchange flow passages 10, the plurality of first heat exchange flow passages 10 may be sequentially arranged along the first direction, or the plurality of first heat exchange flow passages 10 may be sequentially arranged along the second direction. Here, the second direction intersects the first direction, which means that the second direction may intersect the first direction perpendicularly or at an acute angle or an obtuse angle, for example, the first direction and the second direction may be arranged at an angle of 30°, 60°, 80°, 120°, 150°, or 170°.

The above description of that "the second heat exchange section 12 is bent to form a U-shaped region 120, the first heat exchange section 11 is bent and provided within the U-shaped region 120" is intended to indicate that the second heat exchange section 12 is provided at a circumferential periphery of the first heat exchange section 11 and may be disposed on three circumferential sides of the first heat exchange section 11, and the second heat exchange section 12 may be disposed closer to a peripheral position of the battery 1000 than the first heat exchange section 11.

The second heat exchange section 12 is bent to form a U-shaped region 120, which means that in a direction from one end of the second heat exchange section 12 toward the other end, the second heat exchange section 12 extends along a U-shaped line to form the U-shaped region 120 having a U-shape.

The first heat exchange section 11 is bent and provided within the U-shaped region 120, which means that the first heat exchange section 11 is disposed in the space enclosed by the second heat exchange section 12, and the first heat exchange section 11 extends non-linearly on an inner side of the second heat exchange section 12 and has at least one bending position.

It should be noted that in this embodiment, only the first heat exchange section 11 is limited to be bent and provided within the U-shaped region 120, and the bending form of the first heat exchange section 11 is not limited, that is, the first heat exchange section 11 may be designed according to heat exchange demands of the battery 1000. For example, the first heat exchange section 11 may extend along a length direction of a battery cell 2011 (direction Y shown in FIG. 5) and, after extending to a certain length, may bend toward a width direction of a battery cell 2011 (direction X shown in FIG. 5), and then continue to extend along the length direction of the battery cell 2011 and bend along the width direction. Alternatively, the first heat exchange section 11 may extend along the width direction of the battery cell 2011 and, after extending to a certain length, may bend toward the length direction of the battery cell 2011, and then continue to extend along the width direction of the battery cell 2011 and bend along the length direction.

The first heat exchange section 11 and the second heat exchange section 12 are connected in a bent manner, that is, one end of the first heat exchange section 11 is connected to one end of the second heat exchange section 12, and the connection between the first heat exchange section 11 and the second heat exchange section 12 has a non-linear, bent shape. For example, the connection position between the first heat exchange section 11 and the second heat exchange section 12 may be bent into an arc segment.

The first heat exchange section 11 is connected to the second heat exchange section 12, so that one end of the first heat exchange section 11 away from the second heat exchange section 12 and one end of the second heat exchange section 12 away from the first heat exchange section 11 may serve as a liquid inlet end and the other to serve as a liquid outlet end, thereby allowing the heat exchange medium to flow from the first heat exchange section 11 to the second heat exchange section 12 or from the second heat exchange section 12 to the first heat exchange section 11 when the first heat exchange flow passage 10 performs heat exchange.

The second heat exchange section 12 is connected to the first heat exchange section 11 in a bent manner. Since the second heat exchange section 12 is located at a circumferential direction of the first heat exchange section 11, one end of the first heat exchange section 11 connected to the second heat exchange section 12 may be located on one side of the first heat exchange section 11 in the first direction or on one side in the second direction. When the heat exchange member 100 performs heat exchange operations, the heat exchange fluid in the first heat exchange flow passage 10 may flow from the first heat exchange section 11 to the second heat exchange section 12 along the first heat exchange flow passage 10, or the heat exchange fluid may flow from the second heat exchange section 12 to the first heat exchange section 11.

Battery cells 2011 located at an outermost periphery in a circumferential direction of a battery assembly 200 may refer to battery cells 2011 in the battery assembly 200 adjacent to a side wall of the battery 1000 and battery cells 2011 adjacent to structures such as an end plate in the battery 1000. Battery cells 2011 at the outermost peripheral form peripheral battery cells, and at least part of the second heat exchange section 12 is in contact with the peripheral battery cells. The second heat exchange section 12 may partially be in contact with the peripheral battery cells or be in contact with some peripheral battery cells, or the second heat exchange section 12 may entirely be in contact with the peripheral battery cells or be in contact with some peripheral battery cells.

The first heat exchange section 11 is located within the U-shaped region 120 of the second heat exchange section 12, the second heat exchange section 12 may be at the outermost side in a circumferential direction of the first heat exchange flow passage 10, and the first heat exchange section 11 may be in contact with the battery cell 2011 located on the inner side of peripheral battery cells. When the heat exchange member 100 exchanges heat with the battery assembly 200, for example, when the battery assembly 200 needs cooling and heat dissipation, the heat exchange fluid in the first heat exchange flow passage 10 may flow from the first heat exchange section 11 to the second heat exchange section 12, so that the heat exchange fluid can first cool and dissipate heat from a battery cell 2011 located on the inner side of the peripheral battery cells in the battery assembly 200, and then the heat exchange fluid flows to the second heat exchange section 12 to cool and dissipate heat from a battery cell 2011 in the peripheral battery cells of the battery assembly 200.

At least part of the second heat exchange section 12 is in contact with the peripheral battery cells. Here, "in contact with" may refer to direct abutment contact between the heat exchange tube forming the second heat exchange section 12 and the peripheral battery cells, or may refer to indirect contact therebetween. Likewise, the first heat exchange section 11 may be in direct abutment contact or indirect contact with the battery cells 2011 located at the central region of the battery assembly 200.

When a battery assembly 200 needs heating and temperature rise, the heat exchange fluid may flow from the second heat exchange section 12 to the first heat exchange section 11, so that the heat exchange fluid may first heat battery cells 2011 in the peripheral battery cells of the battery assembly 200, and then the heat exchange fluid flows to the first heat exchange section 11 to heat battery cells 2011 at the central region of the battery assembly 200.

It can be understood that during operation and use of the battery 1000, battery cells 2011 in the battery 1000 generate heat, where peripheral battery cells and battery cells 2011 at the central region of a battery assembly 200 have different heat dissipation environments. Specifically, battery cells 2011 in the peripheral battery cells can more readily dissipate heat outward through structures such as the side walls or end plates of the battery 1000, and is less affected by heat dissipation from adjacent battery cells 2011.

Battery cells 2011 located at the central region of a battery assembly 200 dissipate heat with greater difficulty and are greatly affected by heat dissipation from adjacent battery cells 2011, resulting in different heat dissipation conditions among the battery cells 2011 at different positions of the battery assembly 200. Thus, after the battery 1000 has been in operation, the temperature distribution within the battery 1000 becomes relatively non-uniform, causing instability during operation and a tendency for the battery performance to degrade.

For example, uneven temperature distribution within the battery 1000 significantly increases the risk of capacity degradation and thermal runaway for one or some battery cells 2011 in the battery assembly 200 due to excessively high temperature, and adjacent battery cells 2011 may also experience temperature rise, capacity degradation, and other changes under the influence of heat variation thereof. As a result, the overall operational stability of the battery 1000 is reduced, and its performance is degraded. Here, the performance refers to performance indicators of the battery 1000 such as capacity, charge-discharge rate, and voltage.

It can be understood that during flow of the heat exchange fluid in the first heat exchange flow passage 10, the heat exchange effect of the heat exchange fluid gradually decreases. For example, when a heat exchange member 100 cools and dissipates heat from a battery assembly 200, heat of battery cells 2011 is gradually transferred to the heat exchange fluid, causing the temperature of the heat exchange fluid to gradually increase during flow along the first heat exchange flow passage 10, and the higher-temperature heat exchange fluid has a poorer cooling effect when cooling the battery cells 2011. When the heat exchange member 100 heats and raises temperature of a battery assembly 200, heat in the heat exchange fluid is gradually transferred to the battery cells 2011, causing the temperature of the heat exchange fluid to gradually decrease during flow along the first heat exchange flow passage 10, and the lower-temperature heat exchange fluid has a poorer heating effect during heating of the battery cells 2011.

When the heat exchange member 100 cools and dissipates heat from a battery assembly 200, the heat exchange fluid may flow from the first heat exchange section 11 to the second heat exchange section 12 during flow along the first heat exchange flow passage 10, thereby allowing the heat exchange fluid to first cool battery cells 2011 at the central region of the battery assembly 200 and then cool battery cells 2011 in the peripheral battery cells.

Since battery cells 2011 in the peripheral battery cells have good heat dissipation conditions, the higher-temperature heat exchange fluid flowing to the second heat exchange section 12 can still well satisfy the heat dissipation needs of the battery cells 2011 in the peripheral battery cells, so that both the peripheral battery cells and battery cells 2011 at the central region of the battery assembly 200 can obtain good cooling effects, thereby allowing temperatures of the peripheral battery cells and battery cells 2011 at the central region of the battery assembly 200 to be relatively consistent after cooling and heat dissipation and ensuring a more uniform temperature distribution within the battery 1000.

When the heat exchange member 100 heats the battery assembly 200, the heat exchange fluid may flow from the second heat exchange section 12 to the first heat exchange section 11 during flow along the first heat exchange flow passage 10, thereby allowing the heat exchange fluid to first heat battery cells 2011 in the peripheral battery cells of the battery assembly 200 and then flow to the first heat exchange section 11 to cool battery cells 2011 at the central region of the battery assembly 200. Since the battery cells 2011 in the peripheral battery cells have good heat dissipation conditions, the temperature of the battery cells 2011 in the peripheral battery cells is easier to decrease. The heat exchange fluid first heats the battery cells 2011 in the peripheral battery cells, and the higher-temperature heat exchange fluid can well satisfy the heating needs thereof.

Since the battery cells 2011 at the central region of the battery assembly 200 have poorer heat dissipation conditions, a lower-temperature heat exchange fluid flowing in the first heat exchange section 11 can , together with the heat generated by battery cells 2011 themselves, adequately satisfy the heating needs thereof, so that good heating effects can be obtained by both the periphery battery cells and the battery cells 2011 at the central region of the battery assembly 200 may be substantially consistent. As a result, the temperatures reached by the peripheral battery cells and the battery cells 2011 at the central region of the battery assembly 200 after heating can be substantially consistent, thereby ensuring a more uniform temperature distribution within the battery 1000.

In the foregoing implementation, by arranging the first heat exchange flow passage 10 in the heat exchange member 100, the second heat exchange section 12 of the first heat exchange flow passage 10 is connected to the first heat exchange section 11, the second heat exchange section 12 is bent to form the U-shaped region 120 and at least partially in contact with peripheral battery cells, and the first heat exchange section 11 is provided within the U-shaped region, so that when the heat exchange member 100 performs heat exchange operations on the battery assembly 200, better heat dissipation and cooling effects and heating and temperature rise effects can be achieved, thereby making temperature distribution within the battery 1000 more uniform, ensuring the battery 1000 to operate more stably and maintain good performance.

In this embodiment, the first heat exchange section 11 and the second heat exchange section 12 are bent in the same plane. Specifically, a plane where the first heat exchange section 11 and the second heat exchange section 12 are located may be parallel to one side surface of a battery assembly 200 in a third direction (direction Z shown in FIG. 3).

In the foregoing implementation, by providing the first heat exchange section 11 and the second heat exchange section 12 to be bent in the same plane, the first heat exchange flow passage 10 can exchange heat with the battery 1000 in the same plane, thereby simplifying the structure of the first heat exchange flow passage 10, reducing production difficulty of the first heat exchange flow passage 10, and also reducing occupied space of the first heat exchange flow passage 10.

According to some embodiments of the present application, as shown in FIG. 5, a plurality of heat exchange flow passages are spaced apart along the second direction, and two heat exchange flow passages located at two ends in the second direction are both first heat exchange flow passages 10; and two first heat exchange flow passages 10 are symmetrically disposed with respect to the centerline of the heat exchange member 100 along the first direction, where the first direction intersects the second direction at an angle.

When the plurality of heat exchange flow passages are spaced apart along the second direction, the fluid flow directions of two first heat exchange flow passages 10 and the inlets/outlets at two ends thereof are symmetrically arranged, allowing the two first heat exchange flow passages 10 to simultaneously perform heat exchange at the two ends of the battery assembly 200 in the first direction, thereby achieving better temperature uniformity effect.

"The first direction intersects the second direction at an angle" is intended to indicate that the first direction and the second direction may be perpendicular or only intersect but not perpendicular. For example, the first direction and the second direction may be arranged at an angle of 30°, 60°, or 80°.

In the foregoing implementation, by providing two first heat exchange flow passages 10 disposed symmetrically, the liquid can simultaneously enter from two sides, increasing the liquid inlet flow rate, shortening the length of a single heat exchange flow passage, and reducing pressure drop within the single heat exchange flow passage, thereby improving the heat exchange efficiency.

According to some embodiments of the present application, as shown in FIG. 5, a plurality of heat exchange flow passages are symmetrically disposed with respect to the centerline of the heat exchange member 100 along the first direction.

The flow directions and the inlet/outlet ends of the plurality of heat exchange flow passages are also arranged symmetrically, so that the heat exchange member 100 is divided into two symmetrically distributed portions. In this way, during heat exchange, the fluid distribution in the two symmetric portions of the heat exchange member 100 remains consistent, thereby improving the temperature consistency in the heat exchange regions of the battery assembly 200 corresponding to the two portions of the heat exchange member 100 and further improving the temperature uniformity effect of the battery assembly 200.

In the foregoing implementation, by symmetrically arranging a plurality of heat exchange flow passages with respect to the centerline of the heat exchange member 100 along the first direction, the plurality of heat exchange flow passages can synchronously exchange heat with the battery assembly 200, improving heat exchange efficiency. In addition, the temperature consistency in regions of the battery assembly 200 respectively corresponding to two symmetrically arranged parts of the heat exchange member 100 for heat exchange is improved, thereby further improving the temperature uniformity effect of the battery assembly 200.

In some specific embodiments of the present application, a plurality of heat exchange flow passages are asymmetrically disposed with respect to the centerline of the heat exchange member 100 along the first direction. In this way, the plurality of heat exchange flow passages can be designed according to actual conditions of the battery assembly 200, so that the heat exchange member 100 can satisfy the heat exchange demands of the battery assembly 200, further ensuring the heat exchange effect of the battery assembly 200.

In one embodiment of the present application, as shown in FIG. 5, the battery assembly 200 may include a plurality of battery units 201 arranged along the second direction, the peripheral battery cells include a first group of battery cells 202, a second group of battery cells 203, and a third group of battery cells 204, which are disposed adjacent to each other, the first group of battery cells 202 includes a plurality of battery cells 2011 stacked along the first direction, the second group of battery cells 203 includes a plurality of battery cells 2011 stacked along the second direction, and the third group of battery cells 204 includes a plurality of battery cells 2011 stacked along the second direction, the first direction intersecting the second direction.

A plurality of flow channel portions of the second heat exchange section 12 include a second heat exchange portion 121, a third heat exchange portion 122, and a fourth heat exchange portion 125 that are connected, the second heat exchange portion 121 extends to be in contact with the first group of battery cells 202 to enable heat exchange, and/or the third heat exchange portion 122 extends to be in contact with the second group of battery cells 203 to enable heat exchange, and/or the fourth heat exchange portion 125 extends to be in contact with the third group of battery cells 204 to enable heat exchange.

A plurality of battery cells 2011 in the first group of battery cells 202 are stacked along the first direction, that is, the first group of battery cells 202 are arranged extending along the first direction, and a plurality of battery cells 2011 in the second group of battery cells 203 are stacked along the second direction, that is, the second group of battery cells 203 are arranged extending along the second direction. Here, stacking may refer to stacking of a plurality of battery cells 2011 along the thickness direction of battery cells 2011, or may refer to stacking of a plurality of battery cells 2011 along the length direction of battery cells 2011.

The first group of battery cells 202 is disposed adjacent to the second group of battery cells 203 and the third group of battery cells 204, which may refer to that a battery cell 2011 at one end of the first group of battery cells 202 in the first direction may be adjacent to a battery cell 2011 in the second group of battery cells 203 or the third group of battery cells 204, or a battery cell 2011 at one end of the second group of battery cells 203 in the second direction may be adjacent to a battery cell 2011 in the first group of battery cells 202, a battery cell 1000 at one end of the third group of battery cells 204 in the second direction may be adjacent to a battery cell 2011 in the first group of battery cells 202, and the first group of battery cells 202, the second group of battery cells 203, and the third group of battery cells 204 may all be disposed adjacent to a side wall of the battery 1000.

In this embodiment, the second heat exchange section 12 is configured to include a second heat exchange portion 121, a third heat exchange portion 122, and a fourth heat exchange portion 125, the second heat exchange portion 121 may be in contact with the first group of battery cells 202, or the third heat exchange portion 122 may be in contact with the second group of battery cells 203, or the fourth heat exchange portion 125 may be in contact with the third group of battery cells 204; or the second heat exchange portion 121 is in contact with the first group of battery cells 202 and the third heat exchange portion 122 is in contact with the second group of battery cells 203, and the fourth heat exchange portion 125 is not in contact with the third group of battery cells 204.

Alternatively, the second heat exchange portion 121 is in contact with the first group of battery cells 202 and the fourth heat exchange portion 125 is in contact with the second group of battery cells 203, and the third heat exchange portion 122 is not be in contact with the second group of battery cells 203; or the second heat exchange portion 121 is in contact with the first group of battery cells 202 and the third heat exchange portion 122 is in contact with the second group of battery cells 203, and the fourth heat exchange portion 125 is in contact with the third group of battery cells 204.

The second heat exchange portion 121, the third heat exchange portion 122, and the fourth heat exchange portion 125 in the second heat exchange section 12 may collectively form a U-shaped region 120. Specifically, the third heat exchange portion 122 and the fourth heat exchange portion 125 may be respectively connected to two ends of the second heat exchange portion 121, and when the heat exchange fluid flows in the second heat exchange section 12, the heat exchange fluid may flow along the third heat exchange portion 122, the second heat exchange portion 121, and the fourth heat exchange portion 125, or the heat exchange fluid may flow along the fourth heat exchange portion 125, the second heat exchange portion 121, and the third heat exchange portion 122.

For example, as shown in FIG. 5, the first direction may be the thickness direction of the battery cell 2011, that is, direction X shown in FIG. 5, and the second direction may be the length direction of a battery cell 2011, that is, direction Y shown in FIG. 5. Thus, a plurality of battery cells 2011 included in the first group of battery cells 202 are stacked along the thickness direction of the battery cell 2011, a plurality of battery cells 2011 included in the second group of battery cells 203 are stacked along the length direction of the battery cell 2011, a plurality of battery cells 2011 included in the third group of battery cells 204 are stacked along the length direction of the battery cell 2011. As shown in FIG. 5, the first group of battery cells 202 are disposed at one end of a battery assembly 200 in the direction Y; the second group of battery cells 203 and the third group of battery cells 204 are respectively disposed at two ends of the battery assembly 200 in the direction X.

When the heat exchange member 100 exchanges heat with the battery assembly 200, for example, the heat exchange member 100 heats the battery assembly 200, the heat exchange fluid may flow into the second heat exchange section 12 through the fourth heat exchange portion 125 and then heat the first group of battery cells 202 and the second group of battery cells 203 in the peripheral battery cells along the second heat exchange portion 121 and the third heat exchange portion 122, or the heat exchange fluid flows into the second heat exchange section 12 through the third heat exchange portion 122 and then heats the first group of battery cells 202 and the third group of battery cells 204 along the second heat exchange portion 121 and the fourth heat exchange portion 125, or the heat exchange fluid may heat the third group of battery cells 204, the second group of battery cells 203, and the first group of battery cells 202 along the fourth heat exchange portion 125, the second heat exchange portion 121, and the third heat exchange portion 122, or the heat exchange fluid may heat the second group of battery cells 203, the first group of battery cells 202, and the third group of battery cells 204 along the third heat exchange portion 122, the second heat exchange portion 121, and the fourth heat exchange portion 125.

The heat exchange fluid with a decreased temperature then flows out to the first heat exchange section 11 to heat battery cells 2011 at the central region of the battery assembly 200. When the heat exchange member 100 cools a battery assembly 200, the heat exchange fluid may first flow into the first heat exchange section 11 to cool the battery cells 2011 at the central region of the battery assembly 200, and the heat exchange fluid with an increased temperature flows into the second heat exchange section 12 to cool the peripheral battery cells.

In the foregoing implementation, by providing the second heat exchange portion 121, the third heat exchange portion 122, and the fourth heat exchange portion 125 in the second heat exchange section 12 to be in contact with the first group of battery cells 202, and/or the second group of battery cells 203, and/or the third group of battery cells 204 in the peripheral battery cells for heat exchange, the heat exchange member 100 can stably and reliably cool or heat the peripheral battery cells, so that the battery assembly 200 can achieve good heat exchange effect, thereby ensuring more stable operation of the battery 1000 and more uniform temperature distribution within the battery 1000 when the heat exchange member 100 performs heat exchange operations on the battery assembly 200.

In an example of the present application, as shown in FIG. 5, a plurality of first heat exchange portions 111 may be spaced apart along the second direction, and each first heat exchange portion 111 extends linearly along the first direction, the second direction intersecting the first direction at an angle.

"The first direction intersecting the second direction at an angle" is intended to indicate that the second direction and the first direction may be perpendicular or only intersect but not perpendicular, for example, the second direction and the first direction may be arranged at an angle of 30°, 60°, 70°, 110°, 130°, or 150°. For example, as shown in FIG. 5, the second direction may be the length direction of the battery cell 2011, the first direction may be the thickness direction of the battery cell 2011, the first heat exchange portion 111 extends along the length direction of the battery cell 2011 and is spaced apart along the thickness direction of the battery cell 2011, allowing the plurality of first heat exchange portions 111 connected in a bent manner to form an S-shaped heat exchange flow passage, which can exchange heat with a plurality of battery cells 2011.

In the foregoing implementation, by arranging the first heat exchange portion 111 to extend linearly along the first direction, production difficulty of the first heat exchange portion 111 can be reduced, thereby reducing production complexity of the first heat exchange flow passage 10. Moreover, a straight tube can also increase the flow speed of the heat exchange fluid, thereby improving the heat exchange effect of the first heat exchange flow passage 10.

In an example of the present application, as shown in FIG. 5, the third heat exchange portion 122 and the fourth heat exchange portion 125 may both extend along the second direction, and the first heat exchange portion 111 and the second heat exchange portion 121 may both extend along the first direction.

Further, the third heat exchange portion 122 and the fourth heat exchange portion 125 may both extend linearly along the second direction, and the first heat exchange portion 111 and the second heat exchange portion 121 may both extend linearly along the first direction. A linear structure is simple, convenient to produce, and convenient to arrange, thereby further reducing production complexity and production costs of the first heat exchange flow passage 10.

In the foregoing implementation, by arranging the third heat exchange portion 122 and the fourth heat exchange portion 125 to extend along the second direction, and the first heat exchange portion 111 and the second heat exchange portion 121 to both extend along the first direction, it is conducive to arranging the first heat exchange flow passage 10 in a meandering manner, thereby reducing production difficulty of the first heat exchange flow passage 10 and reducing production costs of the heat exchange member 100.

In an example of the present application, as shown in FIG. 5, the third heat-exchange portion 122 and the fourth heat-exchange portion 125 may both extend in the second direction, and, in the second direction, the length of the fourth heat-exchange portion 125 may be less than or equal to that of the third heat-exchange portion 122.

When the length of the fourth heat exchange portion 125 is equal to the length of the third heat exchange portion 122, the fourth heat exchange portion 125, the second heat exchange portion 121, and the third heat exchange portion 122 are sequentially connected to form a standard U-shaped flow channel. When the length of the fourth heat exchange portion 125 is less than the length of the third heat exchange portion 122, this facilitates providing clearance for other flow channel sections (for example, the first inlet/outlet section 15 shown in FIG. 5), for other heat exchange flow passages, or for other components, thereby facilitating the layout of the first heat exchange flow passage 10. For example, as shown in FIG. 5, the length of the fourth heat exchange portion 125 in the figure is denoted as b1, and the length of the third heat exchange portion 122 is denoted as a1, then b1 may be less than or equal to a1.

In the foregoing implementation, by providing the fourth heat exchange portion 125 with a length less than or equal to that of the third heat exchange portion 122, sizes of two straight portions of the U-shaped region 120 can be made similar, which is conducive to controlling the temperature difference of battery cells 2011 at two ends of the battery assembly 200 in the second direction, improving the temperature uniformity of the battery assembly 200. By providing the fourth heat exchange portion 125 with a length less than that of the third heat exchange portion 122 in the first direction, connection of the fourth heat exchange portion 125 to the current collector can be facilitated, and the fourth heat exchange portion 125 can avoid other flow channel sections, other flow channel structures, or other components of the first heat exchange flow passage 10.

In an example of the present application, as shown in FIG. 7, the first heat exchange portion and the third heat exchange portion may extend along the first direction, and the second heat exchange portion extends along the second direction, and in the first direction, the length of the third heat exchange portion is greater than that of the first heat exchange portion. For example, in FIG. 7, the length of the first heat exchange portion 111 is denoted as c1, and the length of the third heat exchange portion is denoted as a2, then a2 is greater than c1.

In the foregoing implementation, by providing the third heat exchange portion 122 with a length greater than that of the first heat exchange portion 111 in the first direction, the first heat exchange section 11 can be encompassed within the U-shaped region 120 of the second heat exchange section 12. Increasing the length of the third heat exchange portion 122 enlarges the heat exchange area of the third heat exchange portion 122 and enables the second heat exchange section 12 to define a larger U-shaped region 120, enhancing the heat exchange effect of the heat exchange member 100. By providing the third heat exchange portion 122 with the length a2 equal to the length c1 of the first heat exchange portion 111, length sizes of the third heat exchange portion 122 extending along the second direction and a plurality of first heat exchange portions 121 of the first heat exchange flow passage 10 can be similar, which is conducive to controlling the temperature difference of the battery assembly 200 along the first direction, improving the temperature uniformity of the battery assembly 200.

In an example of the present application, as shown in FIG. 7, the first heat exchange portion 111, the third heat exchange portion 122, and the fourth heat exchange portion 125 may all extend along the first direction, and the second heat exchange portion 121 may extend along the second direction.

For example, as shown in FIG. 7, the second direction is the length direction of the battery cell 2011, that is, direction Y shown in the figure, and the first direction is the thickness direction of the battery cell 2011, that is, direction X shown in the figure. Thus, the first heat exchange portion 111, the third heat exchange portion 122, and the fourth heat exchange portion 125 extend along the thickness direction of the battery cell 2011, the third heat exchange portion 122 and the fourth heat exchange portion 125 are respectively disposed on two sides of the battery 1000 in the direction Y for heat exchange with the battery assembly 200 close to a side of the battery 1000, and the second heat exchange portion 121 extends along the length direction of the battery cell 2011 and is disposed at one of two ends of the battery 1000 in the direction X for heat exchange with battery cells 2011 at one end of the battery 1000 in the direction X.

Further, the first heat exchange portion 111, the third heat exchange portion 122, and the fourth heat exchange portion 125 extend linearly along the first direction, and the second heat exchange portion 121 extends linearly along the second direction. A linear structure is simple, convenient for production, and convenient for arrangement, thereby further reducing production complexity and production costs of the first heat exchange flow passage 10.

In the foregoing implementation, by arranging the first heat exchange portion 111, the third heat exchange portion 122, and the fourth heat exchange portion 125 to extend along the first direction and arranging the second heat exchange portion 121 to extend along the second direction, it is conducive to arranging the first heat exchange flow passage 10 in a meandering manner, thereby reducing production difficulty of the first heat exchange flow passage 10 and reducing production costs of the heat exchange member 100.

In an example of the present application, as shown in FIG. 5, the fourth heat exchange portion 125 may extend along the second direction and extend to a position close to one of a plurality of first heat exchange portions 111 that is farthest from the second heat exchange portion 121.

Specifically, the fourth heat exchange portion 125 extends along the second direction, one end of the fourth heat exchange portion 125 is connected to the second heat exchange portion 121, and the other end of the fourth heat exchange portion 125 extends to a position close to one of a plurality of first heat exchange portions 111 that is farthest from the second heat exchange portion 121, that is, the other end of the fourth heat exchange portion 125 extends to be flush with the first heat exchange portion 111 farthest from a second heat exchange portion 121, or the other end of the fourth heat exchange portion 125 extends to a position close to the first heat exchange portion 111 farthest from the second heat exchange portion 121, or the other end of a fourth heat exchange portion 125 extends beyond the first heat exchange portion 111 farthest from the second heat exchange portion 121.

Thus, the length of the fourth heat exchange portion 125 can be increased to enlarge the heat exchange area between the fourth heat exchange portion 125 and the battery assembly 200, further improving the heat exchange effect of the heat exchange member 100, and also facilitating the layout of the first heat exchange flow passage 10.

In the foregoing implementation, by arranging the fourth heat exchange portion 125 to extend along the second direction and extend to a position close to one of a plurality of first heat exchange portions 111 that is farthest from the second heat exchange portion 121, the heat exchange area of the fourth heat exchange portion 125 can be enlarged, so that the first heat exchange flow passage 10 can exchange heat with as many battery cells 2011 as possible that are correspondingly arranged with the first heat exchange flow passage 10, improving comprehensiveness of heat exchange of the first heat exchange flow passage 10, thereby improving the heat exchange effect of the battery 1000.

In some examples of the present application, as shown in FIG. 5, the second heat exchange section 12 may further include a second bending portion 123 and a third bending portion 124. Both the second bending portion 123 and the third bending portion 124 are arc-shaped, the second bending portion 123 is connected between a first end of the third heat exchange portion 122 and the second heat exchange portion 121, and the third bending portion 124 is connected between a second end of the third heat exchange portion 122 and the first heat exchange portion 111.

Specifically, the second bending portion 123 is used to connect the second heat exchange portion 121 and the third heat exchange portion 122, and the third bending portion 124 is used to connect the third heat exchange portion 122 and the first heat exchange portion 111. The second bending portion 123 is arc-shaped, that is, the second bending portion 123 extends along an arc, and fluid flow directions at two ends of the second bending portion 123 have a certain included angle. The third bending portion 124 is arc-shaped, that is, the third bending portion 124 extends along an arc, and fluid flow directions at two ends of the third bending portion 124 have a certain included angle.

Thus, the second bending portion 123 and the third bending portion 124 can change the flow direction of the heat exchange fluid, allowing the second heat exchange section 12 to extend in a preset region and exchange heat with the battery assembly 200. Moreover, the arcuate-shaped second bending portion 123 and third bending portion 124 can reduce the flow resistance of the fluid and reduce the pressure drop, thereby increasing the flow rate of the heat exchange fluid and further improving the heat exchange efficiency of the first heat exchange flow passage 10. In addition, by providing the second bending portion 123 and the third bending portion 124, the first heat exchange flow passage 10 can be arranged in a meandering manner. In this way, the first heat exchange flow passage 10 can have an enlarged heat exchange area and a more compact structure, which is more conducive to miniaturization design of the battery, improving the volumetric energy density of the battery 1000.

In the foregoing implementation, by providing the second bending portion 123 and the third bending portion 124, the fluid flow direction in the first heat exchange flow passage 10 can be changed, and the smooth transitional connection between the third heat exchange portion 122 and the second heat exchange portion 121 and between the third heat exchange portion 122 and the first heat exchange portion 111 can be achieved. Thus, the second bending portion 123 and the third bending portion 124 can reduce the flow resistance of the fluid and reduce the pressure drop, thereby increasing the flow rate of the heat exchange fluid and further improving the heat exchange efficiency of the first heat exchange flow passage 10.

In some specific embodiments of the present application, as shown in FIG. 5, the second bending portion 123 may be quarter-circle arc-shaped.

That is, the second bending portion 123 may extend along a semi-circle arc. Specifically, the second bending portion 123 may extend along a quarter-circle arc protruding away from the first heat exchange section 11. An included angle between the inlet and the outlet of the second bending portion 123 may be 90°, and the second bending portion 123 is similar to a 90° elbow in pipe materials and can change the flow channel direction, allowing a fluid flow direction to change 90° after the heat exchange fluid passes through the second bending portion 123. For example, the fluid flow direction may be changed from the direction X to the direction Y or from the direction Y to the direction X. The second bending portion 123 is connected to the second heat exchange portion 121 and the third heat exchange portion 122, and in this case, the second heat exchange portion 121 and the third heat exchange portion 122 are perpendicular to each other. This allows the layout of the second heat exchange section 12 to be more orderly, and the flow channel of the second heat exchange section 12 to conform more closely to the layout of the battery assembly 200, thereby improving the heat exchange effect of the second heat exchange section 12 on the battery assembly 200.

In other embodiments, a bending degree of the second bending portion 123 may also be adjusted as required, for example, may be 50°, 80°, 120°, 135°, 150°, or the like, which is not limited in the embodiments of the present application.

In the foregoing implementation, by arranging the second bending portion 123 to be quarter-circle arc-shaped, the fluid flow direction can be changed from an original flow direction to a direction perpendicular to the original flow direction after the fluid passes through the second bending portion 123. Moreover, the circle arc shape can also reduce the flow resistance of the fluid, allowing the fluid to flow smoothly in the second bending portion 123, effectively preventing a reduction in the heat exchange efficiency caused by excessively slow fluid flow.

In some specific embodiments of the present application, as shown in FIG. 5, the third bending portion 124 may be quarter-circle arc-shaped.

That is, the third bending portion 124 may extend along a semi-circle arc. Specifically, the third bending portion 124 may extend along a quarter-circle arc protruding away from the first heat exchange section 11. It can be understood that an included angle between the inlet and the outlet of the third bending portion 124 is 90°, and the third bending portion 124 is similar to a 90° elbow in pipe materials and can change a flow channel direction, allowing a fluid flow direction to change 90° after the heat exchange fluid passes through the third bending portion 124. For example, the fluid flow direction may be changed from the direction X to the direction Y or from the direction Y to the direction X. The third bending portion 124 is connected to the third heat exchange portion 122 and the first heat exchange portion 111, and in this case, the third heat exchange portion 122 and the first heat exchange portion 111 are perpendicular to each other. This allows the layout of the first heat exchange flow passage 10 to be more orderly and the first heat exchange flow passage 10 to conform more closely to the layout of the battery assembly 200, thereby improving the heat exchange effect of the second heat exchange section 12 on the battery assembly 200.

In other embodiments, a bending degree of the third bending portion 124 may also be adjusted as required, for example, may be 50°, 80°, 120°, 135°, 150°, or the like, which is not limited in the embodiments of the present application.

In the foregoing implementation, by arranging the third bending portion 124 to be quarter-circle arc-shaped, the fluid flow direction can be changed from an original flow direction to a direction perpendicular to the original flow direction after the fluid passes through the third bending portion 124. Moreover, the circle arc-shaped third bending portion 124 can reduce the flow resistance of the fluid, allowing the fluid to flow smoothly within the third bending portion 124, effectively preventing a reduction in the heat exchange efficiency caused by excessively slow fluid flow.

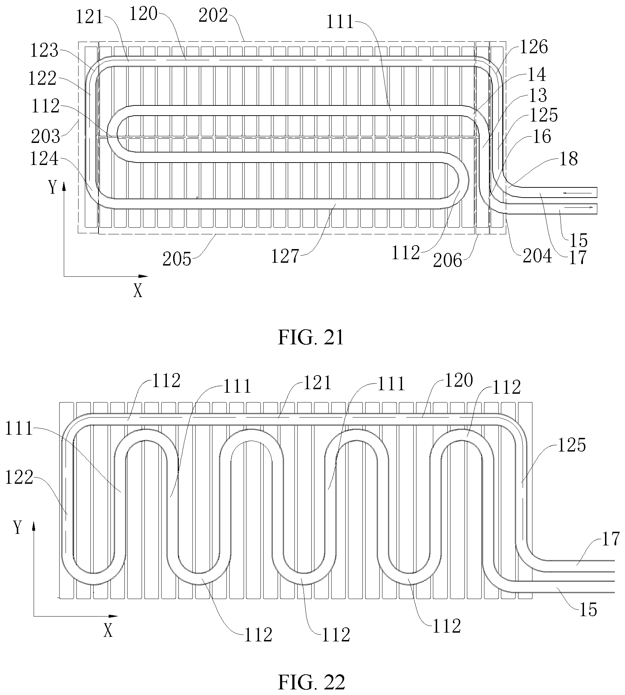

In some examples of the present application, as shown in FIG. 8 and FIG. 21, the peripheral battery cells may further include a fourth group of battery cells 205, the fourth group of battery cells 205 includes a plurality of battery cells 2011 arranged along the second direction, the second heat exchange section 12 further includes a fifth heat exchange portion 127, the fifth heat exchange portion 127 closes at least part of an opening of the U-shaped region 120 formed by the second heat exchange portion 121, the third heat exchange portion 122, and the fourth heat exchange portion 125, and the fifth heat exchange portion 127 extends to be in contact with the fourth group of battery cells 205 to enable heat exchange.

In the embodiments, the peripheral battery cells further include a fourth group of battery cells 205. Specifically, the fourth group of battery cells 205 may be spaced apart from the first group of battery cells 202 in the second direction, and the fourth group of battery cells 205 is provided on one side of the battery assembly 200 close to a side wall of the battery 1000. The fifth heat exchange portion 127 of the second heat exchange section 12 is in contact with the fourth group of battery cells 205, and when heat exchange fluid flows along the second heat exchange section 12, the heat exchange fluid exchanges heat with the fourth group of battery cells 205 along the fifth heat exchange portion 127.

When the heat exchange member 100 exchanges heat with the battery assembly 200, the heat exchange fluid may perform heat exchange operations along the second heat exchange section 12 on battery cells 2011 disposed close to a side wall of the battery 1000 in the first direction and battery cells 2011 disposed close to a side wall of the battery 1000 in the second direction in the battery assembly 200, and the heat exchange fluid then flows into the first heat exchange section 11 to perform heat exchange operations on battery cells 2011 located on an inner side of the peripheral battery cells in the battery assembly 200, or the heat exchange fluid flows in an opposite direction for heat exchange operations.

In the foregoing implementation, by arranging the fifth heat exchange portion 127 in the second heat exchange section 12 to be in contact with the fourth group of battery cells 205, the second heat exchange section 12 can perform heat exchange along four peripheral sides of the battery assembly 200. In this way, the four peripheral sides of the battery assembly 200 can be subjected to heat exchange only through the second heat exchange section 12 of one first heat exchange flow passage 10, thereby improving the heat exchange effect on the four peripheral sides of the battery assembly 200 and improving the temperature uniformity of the battery assembly 200.

In some embodiments of the present application, as shown in FIG. 8, the fifth heat exchange portion 127 is disposed opposite to the second heat exchange portion 121, and the fifth heat exchange portion 127 is connected between a second end of the third heat exchange portion 122 and the first heat exchange section 11 and is connected to both the third heat exchange portion 122 and the first heat exchange section 11 at respective angles.

It should be noted that in the foregoing embodiments, the second heat exchange portion 121 is disposed on one side of the first heat exchange section 11 in a second direction (for example, one side of a plurality of first heat exchange portions 111 shown in FIG. 8 away from the origin of the coordinate system along the direction Y), the fifth heat exchange portion 127 is disposed opposite to the second heat exchange portion 121, that is, the fifth heat exchange portion 127 is disposed on the other side of the first heat exchange section 11 in the second direction (for example, one side of a plurality of first heat exchange portions 111 shown in FIG. 8 close to the origin of the coordinate system along the direction Y), the third heat exchange portion 122 is disposed on one side of the first heat exchange section 11 in the first direction (for example, one side of a plurality of first heat exchange portions 111 shown in FIG. 8 close to the origin of the coordinate system along the direction X), and two ends of the third heat exchange portion 122 in the direction Y are respectively connected to the second heat exchange portion 121 and the fifth heat exchange portion 127.

The fifth heat exchange portion 127 is connected to the third heat exchange portion 122 at an angle, for example, the fifth heat exchange portion 127 is connected to the third heat exchange portion 122 and arranged at an angle greater than 0° and less than or equal to 180°. For example, the included angle between the fifth heat exchange portion 127 and the third heat exchange portion 122 is 30°, 45°, 60°, 90°, 120°, 135°, or 150°, or the like. The fifth heat exchange portion 127 is connected to the first heat exchange section 11 at an angle, for example, the fifth heat exchange portion 127 is connected to the first heat exchange section 11 and arranged at an angle greater than 0° and less than or equal to 180°. For example, the included angle between the fifth heat exchange portion 127 and the third heat exchange portion 122 is 30°, 45°, 60°, 90°, 120°, 135°, 150°, or the like.

Further, the fifth heat exchange portion 127 and the third heat exchange portion 122 may be connected through an arc segment, for example, the fifth heat exchange portion 127 and the third heat exchange portion 122 are connected through a quarter circle-arc.

Further, the fifth heat exchange portion 127 and the first heat exchange section 11 may be connected through an arc segment, for example, the fifth heat exchange portion 127 and the first heat exchange section 11 are connected through a semi-circle arc.

In the foregoing implementation, by disposing the fifth heat exchange portion 127 opposite to the second heat exchange portion 121 and connecting the fifth heat exchange portion 127 between the third heat exchange portion 122 and the first heat exchange section 11, a structure of the first heat exchange flow passage 10 can be further optimized according to heat exchange demands of the battery assembly 200.

In an example of the present application, as shown in FIG. 10, the fifth heat exchange portion 127 is disposed opposite to the second heat exchange portion 121, one end of the fifth heat exchange portion 127 is connected to one end of the fourth heat exchange portion 125 away from the second heat exchange portion 121, and the fifth heat exchange portion 127 is connected to the fourth heat exchange portion 125 at an angle.

The fifth heat exchange portion 127 is connected to the fourth heat exchange portion 125 at an angle, for example, the fifth heat exchange portion 127 is connected to the fourth heat exchange portion 125 and arranged at an angle greater than 0° and less than or equal to 180°. For example, the included angle between the fifth heat exchange portion 127 and the fourth heat exchange portion 125 is 30°, 45°, 60°, 90°, 120°, 135°, or 150°, or the like.

For example, referring to FIG. 11, the second heat exchange portion 121 and the fifth heat exchange portion 127 are respectively disposed on two sides of the first heat exchange section 11 in the direction X, the third heat exchange portion 122 and the fourth heat exchange portion 125 are respectively disposed on two sides of the first heat exchange section 11 in the direction Y, the fifth heat exchange portion 127 may extend along the direction Y, one end of the fifth heat exchange portion 127 away from the origin of the coordinate system is connected to the fourth heat exchange portion 125, and one end of the fifth heat exchange portion 127 toward the origin of the coordinate system extends toward the third heat exchange portion 122.

The fifth heat exchange portion 127 and the fourth heat exchange portion 125 may be connected by a circle-arc, for example, the fifth heat exchange portion 127 and the fourth heat exchange portion 125 may be connected through a quarter circle-arc.

In the foregoing implementation, by disposing the fifth heat exchange portion 127 opposite to the second heat exchange portion 121 and connecting the fifth heat exchange portion 127 to the fourth heat exchange portion 125, a structure of the first heat exchange flow passage 10 can be further optimized according to heat exchange demands of the battery assembly 200.

In the foregoing implementation, by arranging the fifth heat exchange portion 127 to be disposed opposite to the second heat exchange portion 121 and connecting the fifth heat exchange portion 127 between a second end of the third heat exchange portion 122 and the first heat exchange section 11, or connecting one end of the fifth heat exchange portion 127 to one end of the fourth heat exchange portion 125 away from the second heat exchange portion 121, various arrangements of heat exchange flow passages can be achieved, thereby satisfying the heat exchange demands of various batteries.

In an example of the present application, as shown in FIG. 5, the plurality of flow channel portions of the first heat exchange section 11 may include a plurality of first heat exchange portions 111, the plurality of first heat exchange portions 111 are spaced apart and sequentially connected in a bent manner; at least one battery unit 201 located at two ends in the second direction is the first group of battery cells 202; and the second heat exchange portion 121 and at least one first heat exchange portion 111 of the first heat exchange section 11 are jointly in contact with the first group of battery cells 202 to enable heat exchange.

The first heat exchange section 11 includes a plurality of first heat exchange portions 111, for example, two, three, four, five, six, or more first heat exchange portions 111 may be provided in the first heat exchange section 11, and the plurality of first heat exchange portions 111 are sequentially connected in a bent manner, that is, the plurality of first heat exchange portions 111 are sequentially connected, and the connection between two connected first heat exchange portions 111 is bent. For example, two connected first heat exchange portions 111 may be bent along a broken line or along an arc.

It should be noted that the shapes of the first heat exchange portions 111 may vary, for example, a first heat exchange portion 111 may be linear or arcuate-shaped, or the like. The extension directions of the first heat exchange portions 111 may also vary, for example, a first heat exchange portion may extend along a length direction or a thickness direction of a battery cell 2011. Thus, a plurality of first heat exchange portions 111 being sequential connected in a bent manner can enable the first heat exchange section 11 to form an S-shaped, zigzag-shaped, V-shaped, or other forms of heat exchange flow passage.

The first heat exchange portions 111 may be spaced apart in the first direction and sequentially connected in a bent manner, or the first heat exchange portions 111 may be spaced apart in the second direction and sequentially connected. The first heat exchange portions 111 may be in contact with a plurality of battery units 201 arranged along the first direction in the battery assembly 200 for heat exchange. When the heat exchange tube exchanges heat with the battery assembly 200, the heat exchange fluid in the first heat exchange flow passage 10 may flow along a plurality of first heat exchange portions 111 in the first heat exchange section 11, the heat exchange fluid may sequentially heat or cool battery cells 2011 from the outermost battery unit 201 of the battery assembly 200 toward the inner battery unit 201 along the second direction, or the heat exchange fluid may heat or cool battery cells 2011 from the inner battery unit 201 of the battery assembly 200 toward the outermost battery unit 201 along the first direction.

There may be one or more battery units 201 at two ends of the battery assembly 200 in the second direction formed as a first group of battery cells 202, and there may be one or more first heat exchange portions 111 in the first heat exchange section 11 in contact with the first group of battery cells 202. For example, one first heat exchange portion 111 and the second heat exchange portion 121 are jointly in contact with the first group of battery cells 202, or two, three, four, or more first heat exchange portions 111 and one second heat exchange portion 121 are jointly in contact with the first group.

In the foregoing implementation, by providing a plurality of first heat exchange portions 111, the heat exchange area of the first heat exchange section 11 can be enlarged, and thus the heat exchange area of the first heat exchange flow passage 10 can be enlarged, thereby improving the heat exchange effect of the first heat exchange flow passage 10. In addition, since inner battery cells 2011 are encompassed by outer battery cells 2011, and temperature differences between the inner battery cells 2011 are small, provision of a plurality of first heat exchange portions 111 can ensure an overall heat exchange effect while ensuring small temperature differences between the inner and outer battery cells 2011.

In some specific embodiments of the present application, as shown in FIG. 5, the first heat exchange section 11 may further include a first bending portion 112. The first bending portion 112 is arc-shaped and connected in a bent manner between two adjacent first heat exchange portions 111.

The first bending portion 112 being arc-shaped means that the first bending portion 112 extends along an arc, and fluid flow channel directions at two ends of the first bending portion 112 have a certain included angle. Thus, the first bending portion 112 can change the flow direction of the fluid, thereby enabling two connected first heat exchange portions 111 to extend and be arranged in a preset region, so that the heat exchange area of the first heat exchange section 11 can be enlarged, improving the heat exchange efficiency of the first heat exchange section 11. Moreover, the first bending portion 112 is arc-shaped, and the arcuate-shaped bent structure can reduce the flow resistance of the fluid and reduce the pressure drop, thereby increasing the flow rate of the fluid and further improving the heat exchange efficiency of the first heat exchange section 11.

Further, the number of first bending portions 112 may be one, two, three, or more. The first bending portions 112 can allow the first heat exchange section to be arranged in a meandering manner, so that the heat exchange area of the first heat exchange flow passage 10 can be enlarged, improving the heat exchange efficiency of the first heat exchange flow passage 10.

In the foregoing implementation, by providing the first bending portion 112, a fluid flow direction inside the first heat exchange section 11 can be changed, achieving smooth transitional connection between two first heat exchange portions 111 and the arrangement of the first heat exchange flow passage 10 in a meandering manner. In this way, the contact area between a single battery cell 2011 and the first heat exchange flow passage 10 can be increased, thereby enlarging the heat exchange area and improving the heat exchange efficiency of the first heat exchange flow passage 10. Moreover, the first bending portion 112 being arc-shaped can also reduce the flow resistance of the fluid and reduce the pressure drop, thereby increasing the flow rate of the fluid and further improving the heat exchange efficiency of the first heat exchange section 11.

In some specific examples of the present application, as shown in FIG. 5, the first bending portion 112 may be semi-circle arc-shaped.

That is, the first bending portion 112 may extend along a semi-circle arc. Specifically, the first bending portion 112 may extend along a semi-circle arc protruding in a direction away from two first heat exchange portions 111 connected to the first bending portion 112, to be specific, the included angle between the inlet and the outlet of the first bending portion 112 is 180°, and the flow directions at the outlet and the inlet of the first bending portion 112 are opposite, so that two adjacent first heat exchange portions 111 are closer, making an overall structure of the first heat exchange section 11 become more compact and reliable. The first bending portion 112 is used to connect two first heat exchange portions 111 that are parallel and spaced apart. In other embodiments, a bending degree of the first bending portion 112 may further be adjusted as required, for example, may be 150°, 135°, or the like, which is not limited in embodiments of the present application.

Two first heat exchange portions 111 form a "U"-shaped heat exchange channel through the first bending portion 112, the first heat exchange section 11 may include one or more "U"-shaped heat exchange channels, and a plurality of "U"-shaped heat exchange channels are sequentially connected, and connected "U"-shaped heat exchange channels are connected through the first bending portion 112.

In the foregoing implementation, by arranging the first bending portion 112 to be semi-circle arc-shaped, design diversity of the heat exchange flow passage can be increased, thereby improving the adaptability of the heat exchange member 100. Moreover, the semi-circle arc-shaped structure is relatively simple, thereby reducing production difficulty of the heat exchange member 100 and increasing production speed of the heat exchange member 100.

In some specific embodiments of the present application, as shown in FIG. 5, a plurality of first heat exchange portions 111 of the first heat exchange section 11 may extend along the second direction and be sequentially connected in the first direction.

The first heat exchange portion 111 extends along the second direction. Specifically, when a plurality of battery cells 2011 in a battery unit 201 may be stacked along the first direction, and the battery cells 2011 extend along the second direction, the extension direction of the first heat exchange portion 111 may be the same as the extension direction of the battery cells 2011. When the heat exchange tube exchanges heat with the battery cells 2011, the heat exchange fluid may cool the battery cells 2011 along the extension direction of the first heat exchange portion 111.

In the foregoing implementation, by arranging a plurality of first heat exchange portions 111 of the first heat exchange section 11 to extend along the second direction and be sequentially connected in the first direction, a relatively large heat exchange area can exist between a single first heat exchange portion 111 and a single battery cell 2011, so that when the heat exchange member 100 is arranged on the battery assembly 200, the heat exchange area requirement of the battery assembly 200 can be conveniently and reliably satisfied, thereby reducing, to some extent, the arrangement difficulty of the first heat exchange section 11.

In some specific embodiments of the present application, as shown in FIG. 5, a plurality of first heat exchange portions 111 of the first heat exchange section 11 may extend along the first direction and be sequentially connected in the second direction.

The first heat exchange portions 111 extending along the first direction means that the first heat exchange portions 111 may extend curvedly along the first direction, or the first heat exchange portions 111 may extend linearly along the first direction. As shown in FIG. 5, when a plurality of battery cells 2011 are stacked in the first direction, and the battery cells 2011 extend along the first direction, one first heat exchange portion 111 may span a plurality of battery cells 2011 in the first direction, the first heat exchange portion 111 may exchange heat with a plurality of battery cells 2011, and a plurality of first heat exchange portions 111 may cooperate to meet requirements for the heat exchange area of a single battery cell 2011.

In the foregoing implementation, by arranging a plurality of first heat exchange portions 111 to extend along the first direction and be sequentially connected in the second direction, the plurality of first heat exchange portions 111 can cooperate to exchange heat with one battery cell 2011 to meet the required heat exchange area. Accordingly, the first heat exchange section 11 can be arranged with a reduced number of bends when being disposed in a bent manner, thereby reducing the flow resistance in the first heat exchange section 11, allowing the heat exchange fluid to flow more smoothly and with a reduced pressure drop, and enabling the heat exchange member 100 to perform heat exchange operations on the battery assembly 200 more effectively.

As shown in FIG. 5 and FIG. 22, the first heat exchange portion 111 in FIG. 5 extends along the first direction, that is, the first heat exchange portion extends along the thickness direction of the battery cells 2011, and the first heat exchange portion 111 in FIG. 22 extends along the second direction, that is, the first heat exchange portion extends along the length direction of the battery cells 2011. When the length of the first heat exchange portion 111 is fixed, the first heat exchange portion 111 extending along the first direction can exchange heat with more battery cells 2011 than the first heat exchange portion 111 extending along the second direction. When the number of bends of the first heat exchange section 11 is fixed, compared with those of the first heat exchange portion 111 extending along the second direction, two adjacent first heat exchange portions 111 of the first heat exchange portion 111 extending along the first direction are closer, thereby providing a better heat exchange effect. When one battery cell 2011 is constrained to exchange heat with two heat exchange portions, the number of used first heat exchange portions 111 extending along the first direction and arranged along the second direction is relatively low compared to the number of used first heat exchange portions 111 extending along the second direction and spaced apart along the first direction. As a result, fewer bends are required, the forming difficulty of the first heat exchange portion 111 is reduced, and the processing becomes easier.

Thus, the first heat exchange portion 111 extending along a first direction can reduce the number of first heat exchange portions 111 while still satisfying the heat exchange effect. As a result, the number of bends of the first heat exchange flow passage 10 is reduced, the pressure drop of the heat exchange fluid in the first heat exchange flow passage 10 is decreased, and the heat exchange efficiency is improved. In addition, the forming difficulty and production costs of the heat exchange member 100 are reduced, and the production rate of the heat exchange member 100 is increased.

In some specific embodiments of the present application, as shown in FIG. 5, a plurality of first heat exchange portions 111 of the first heat exchange section 11 may extend along the first direction and be sequentially connected in the second direction, a first end of the third heat exchange portion 122 is connected to the second heat exchange portion 121 at an angle, a second end of the third heat exchange portion 122 is connected to one of the plurality of first heat exchange portions 111 that is farthest from the second heat exchange portion 121 in the second direction, and a second end of the third heat exchange portion 122 is connected to the first heat exchange section 11 at an angle.

In the embodiments, the first end of the third heat exchange portion 122 is connected to the second heat exchange portion 121 at an angle, for example, the first end may be connected to the second heat exchange portion 121 at an acute angle, an obtuse angle, or a right angle, and the included angle between the first end of the third heat exchange portion 122 and the second heat exchange portion 121 may be reasonably set according to arrangement needs of the third heat exchange portion 122 and the second heat exchange portion 121 in the battery 1000. Likewise, a second end may also be connected to the first heat exchange section 11 at an acute angle, an obtuse angle, or a right angle, and the included angle between the second end of the third heat exchange portion 122 and the first heat exchange section 11 may be reasonably set according to arrangement needs of the third heat exchange portion 122 and the first heat exchange section 11 in the battery 1000.

In the embodiments, since the second heat exchange portion 121 is in contact with the first group of battery cells 202, one of the first heat exchange portions 111 that is farthest from the second heat exchange portion 121 is one of the first heat exchange portions 111 that is farthest from the first group of battery cells 202, and one first heat exchange portion 111 that is farthest from the second heat exchange portion 121 may be in contact with the innermost battery unit 201 in the second direction in the battery unit 201.

When the heat exchange member 100 performs heat exchange operations, for example, when the heat exchange member 100 heats a battery assembly 200, the heat exchange fluid may heat the first group of battery cells 202 along the second heat exchange portion 121 of the second heat exchange section 12, the heat exchange fluid then flows to the third heat exchange portion 122 to heat the second group of battery cells 203, then the heat exchange fluid flows to the first heat exchange portion 111 to heat a plurality of battery cells 2011 in an inner battery unit 201, and the heat exchange fluid continues to heat battery cells 2011 from inside to outside in the second direction along the plurality of first heat exchange portions 111 in the first heat exchange section 11. When the heat exchange member 100 cools and lowers temperature of the battery assembly 200, the heat exchange fluid may flow in an opposite direction along the first heat exchange flow passage 10.

In the foregoing implementation, by connecting the third heat exchange portion 122 to the second heat exchange portion 121 at an angle and connecting the third heat exchange portion 122 to the first heat exchange section 11 at an angle, the second heat exchange section 12 and the first heat exchange section 11 can be conveniently disposed during assembly in the battery 1000, which can satisfy arrangement needs of the heat exchange member 100 and the battery assembly 200, providing a simple structure and convenient use.

In the embodiments, a first segment of the third heat exchange portion 122 is connected to the second heat exchange portion 121 and a second end is connected to one first heat exchange portion 111 that is farthest from the second heat exchange portion 121 in the second direction, so that during heat exchange operations, the heat exchange member 100 can well match the heat exchange conditions of the battery assembly 200 at different positions, thereby enabling the battery 1000 to obtain a good heat exchange effect.

It can be understood that when the heat exchange fluid heats the peripheral battery cells in the battery assembly 200, since the peripheral battery cells dissipate heat quickly, when the heat exchange fluid flows from the second heat exchange portion 121 to the third heat exchange portion 122 for heating, the heat exchange fluid needs to be in a higher temperature to satisfy the heating needs of the peripheral battery cells and subsequent heating needs at other positions in the battery assembly 200. When the heat exchange fluid has a higher temperature in the second heat exchange portion 121, which while adequately satisfying the heating needs of the peripheral battery cells, may be likely to cause overheating when cooperating with other heat exchange portions for heating, resulting in elevated temperatures of the peripheral battery cells and thus an uneven temperature distribution within the battery 1000.

In the embodiments, the third heat exchange portion 122 is connected to the second heat exchange portion 121 and the first heat exchange portion 111 away from the second heat exchange portion 121. This allows the heat exchange fluid to effectively heat the first group of battery cells 202 and the second group of battery cells 203 along the second and third heat exchange portions 121, 122, thereby enabling the peripheral battery cells to achieve a good heating effect. The heat exchange fluid, after its temperature has decreased, then flows from the first heat exchange portion 111 away from the second heat exchange portion 121 toward the first heat exchange portion 111 near the second heat exchange portion 121, so that the first heat exchange portion 111 near the second heat exchange portion 121 can be the region having the lowest-temperature heat exchange fluid and can cooperate well with the second heat exchange portion 121 during heating, reducing the likelihood of elevated temperatures due to overheating at the second heat exchange portion 121. As a result, the heat exchange member 100 provides an improved heating effect for the battery 1000, and the temperature distribution within the battery 1000 is more uniform. Similarly, when the heat exchange member 100 cools the battery assembly 200, the second heat exchange portion 121 can cooperate with the first heat exchange portion 111 near the second heat exchange portion 121 to provide an effective cooling effect.

In the foregoing implementation, the third heat exchange portion 122 is connected to the second heat exchange portion 121 and the first heat exchange portion 111 away from the second heat exchange portion 121, which allows a better heat exchange effect when the heat exchange member 100 exchanges heat with the battery assembly 200 and a more uniform temperature distribution within the battery 1000, thereby enabling the battery 1000 to operate stably and maintain good performance.

In a specific embodiment of the present application, as shown in FIG. 5, one of a plurality of flow channel portions of the first heat exchange flow passage 10 may be formed as a third heat exchange section 13. The third heat exchange section 13 communicates with one end of the first heat exchange section 11 away from the second heat exchange section 12 and is connected to the first heat exchange section 11 at an angle; the third heat exchange section 13 is disposed on one side of the first heat exchange section 11 facing away from the third heat exchange portion 122 and is connected to one of a plurality of first heat exchange portions 111 that is closest to the second heat exchange portion 121 in the second direction.

The third heat exchange section 13 is connected to the first heat exchange section 11 at an angle, for example, the third heat exchange section 13 may be connected to the first heat exchange section 11 at an acute angle, an obtuse angle, or a right angle. The third heat exchange section 13 is connected to the first heat exchange section 11 and arranged at an angle greater than 0° and less than or equal to 180°. For example, the included angle between the third heat exchange section 13 and the first heat exchange section 11 is 30°, 45°, 60°, 90°, 120°, 135°, or 150°, or the like. The third heat exchange section 13 communicates with one end of the first heat exchange section 11 away from the second heat exchange section 12. Here, "away" may refer to being away from the second heat exchange section 12 in an extension direction of the first heat exchange section 11. The second heat exchange section 12 is connected to one end of the first heat exchange section 11 through the third heat exchange portion 122, and the third heat exchange section 13 is connected to the other end of the first heat exchange section 11.

When a heat exchange member 100 performs heating operations, the heat exchange fluid may sequentially flow along the second heat exchange section 12, the first heat exchange section 11, and the third heat exchange section 13 of the first heat exchange flow passage 10 or flow in an opposite direction. Specifically, the heat exchange fluid flows from the second heat exchange portion 121 of the second heat exchange section 12 to the third heat exchange portion 122 along the first direction, then flows in the third heat exchange portion 122 away from the second heat exchange portion 121 along the second direction to the first heat exchange portion 111, then the heat exchange fluid flows toward the second heat exchange portion 121 along the second direction in a plurality of first heat exchange portions 111, and the heat exchange fluid then flows away from the second heat exchange portion 121 along the second direction in the third heat exchange section 13. Correspondingly, when the heat exchange member 100 performs cooling operations, the heat exchange fluid may flow in an opposite flow direction.

Specifically, when the heat exchange fluid flows from the first heat exchange section 11 to the third heat exchange section 13, since the third heat exchange section 13 is connected to the first heat exchange portion 111 close to the second heat exchange portion 121 and disposed on one side of the first heat exchange section 11 facing away from the third heat exchange portion 122, the heat exchange fluid may flow away from the third heat exchange portion 122 along the first direction in the first heat exchange portion 111 close to the second heat exchange portion 121.

In the foregoing implementation, by connecting the third heat exchange section 13 to the first heat exchange section 11 and bringing it into contact with the second group of battery cells 203, when the heat exchange member 100 exchanges heat with the battery assembly 200, a flow direction of the heat exchange fluid in the second heat exchange portion 121 may be opposite to a flow direction of the heat exchange fluid close to the second heat exchange portion 121, a flow direction of the heat exchange fluid in the third heat exchange portion 122 may be opposite to a flow direction of the heat exchange fluid in the first heat exchange section 11, and a flow direction of the heat exchange fluid in the third heat exchange section 13 may be opposite to a flow direction of the heat exchange fluid in the first heat exchange section 11, thereby allowing the second heat exchange section 12, the first heat exchange section 11, and the third heat exchange section 13 to better cooperate for heat exchange operations.

In the foregoing implementation, by connecting the third heat exchange section 13 to the first heat exchange section 11 and bringing it into contact with the second group of battery cells 203, the heat exchange member 100 can have more balanced and good heat exchange when exchanging heat with battery cells 2011 at different positions in the battery 1000, allowing more uniform temperature distribution after heat exchange operations of the battery 1000, thereby enabling the battery 1000 to operate more stably and reliably and maintain good performance.

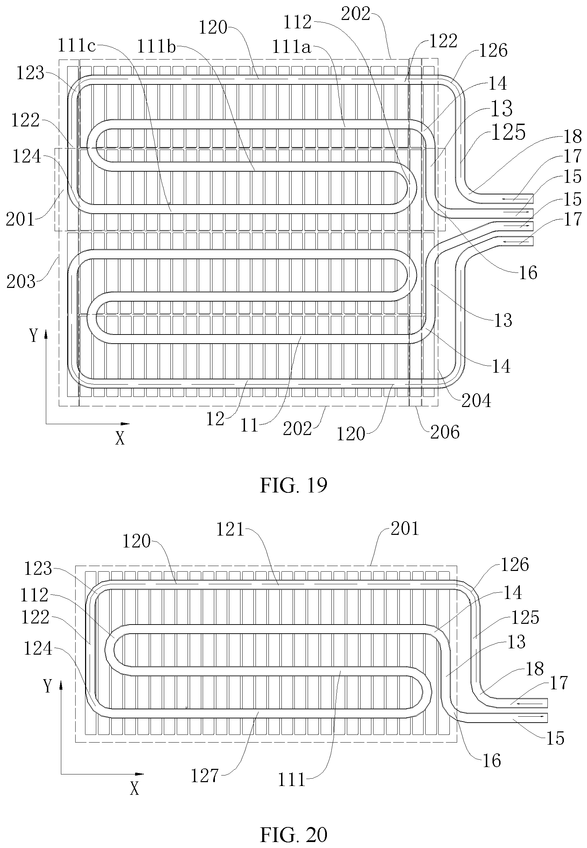

In a specific embodiment of the present application, as shown in FIG. 5 and FIG. 19, the battery assembly 200 may further have a fifth group of battery cells 206, a plurality of battery cells 2011 of the fifth group of battery cells 206 are stacked along the second direction, and the fifth group of battery cells 206 is disposed adjacent to the third group of battery cells 204, where both the third heat exchange section 13 and the fourth heat exchange portion 125 are in contact with the third group of battery cells 204 to enable heat exchange; or the third heat exchange section 13 is in contact with the fifth group of battery cells 206 to enable heat exchange, and the fourth heat exchange portion 125 is in contact with the third group of battery cells 204 to enable heat exchange; or the third heat exchange section 13 is in contact with the third group of battery cells 204 to enable heat exchange, and the fourth heat exchange portion 125 is arranged on the outer side of the battery assembly 200 in the first direction.

The fifth group of battery cells 206 is disposed adjacent to the third group of battery cells 204, and since the third group of battery cells 204 are the peripheral battery cells, the fifth group of battery cells 206 may be disposed on one side of the third group of battery cells 204 facing away from a side wall of the battery 1000 in the first direction. When the heat exchange member 100 and the battery assembly 200 are arranged, the fourth heat exchange portion 125 may be disposed on the same side of the battery assembly 200 in the first direction as the third heat exchange section 13. Specifically, the fourth heat exchange portion 125 may be disposed on one side of the third heat exchange section 13 facing away from a side wall of the battery 1000, the fourth heat exchange portion 125 may cooperate with the third heat exchange section 13 to be in contact with the third group of battery cells 204, the fourth heat exchange portion 125 may also be in contact with the third group of battery cells 204 and the third heat exchange section 13 is in contact with the fifth group of battery cells 206, or the fourth heat exchange portion 125 may also be disposed between a side wall of the battery 1000 and the third group of battery cells 204, and the third heat exchange section 13 is in contact with the third group of battery cells 204.

In the foregoing implementation, by bringing the third heat exchange section 13 and the fourth heat exchange portion 125 together into contact with the third group of battery cells 204, the heat exchange member 100 can provide each battery cell 2011 in the third group of battery cells 204 with a sufficient heat exchange area for heat exchange, allowing the third group of battery cells 204 to achieve a good heat exchange effect. The fourth heat exchange portion 125 being in contact with the third group of battery cells 204 and the third heat exchange section 13 being in contact with the fifth group of battery cells 206 can allow convenient arrangement of the fourth heat exchange portion 125 and the third heat exchange section 13 of the heat exchange member 100. The fourth heat exchange portion 125 being arranged on the outer side of the battery assembly 200 in the first direction can facilitate injection and outflow of the heat exchange fluid in the heat exchange member 100.

In other specific embodiments, the third heat exchange section 13 may be in contact with the fifth group of battery cells 206 to enable heat exchange, and the fourth heat exchange portion 125 is in contact with the third group of battery cells 204 to enable heat exchange.

Specifically, both the third heat exchange section 13 and the fourth heat exchange portion 125 extend along the second direction, and when the second direction is the length direction of the battery cell 2011, the contact area between the third heat exchange section 13 and the fourth heat exchange section 31 and the battery cell 2011 can be increased, thereby improving the heat exchange effect on the fifth group of battery cells 206 and the third group of battery cells 204. Moreover, since the fifth group of battery cells 206 is disposed adjacent to the third group of battery cells 204, the third heat exchange section 13 is in contact with the fifth group of battery cells 206 to enable heat exchange, and the fourth heat exchange portion 125 is in contact with the third group of battery cells 204 to enable heat exchange, and the temperature difference at edge positions of the battery assembly 200 caused by water temperature difference can also be balanced.

In some other specific embodiments, the third heat exchange section 13 may be in contact with the third group of battery cells 204 to enable heat exchange, and the fourth heat exchange portion 125 is disposed on the outer side of the battery assembly 200 in the first direction.

That is, the fourth heat exchange portion 125 does not exchange heat with the battery assembly 200, and the third heat exchange portion 122 extends along the second direction and is in contact with the third group of battery cells 204 for heat exchange. Thus, when the second direction is the length direction of the battery cell 2011, the contact area between the third heat exchange section 13 and the third group of battery cells 204 can be increased, thereby improving the heat exchange effect of the heat exchange member 100.

In the foregoing implementation, by arranging both the third heat exchange section 13 and the fourth heat exchange portion 125 to be in contact with the third group of battery cells 204 for heat exchange, the temperature difference of the third group of battery cells 204 can be balanced, improving temperature uniformity of the third group of battery cells 204. By arranging the third heat exchange section 13 to be in contact with the third group of battery cells 204 for heat exchange and disposing the fourth heat exchange portion 125 on the outer side of the battery assembly 200 in the first direction, the heat exchange process can be simplified, reducing production difficulty of the heat exchange member 100.

In some embodiments of the present application, as shown in FIG. 5, the third heat exchange section 13 extends along the second direction to a position close to one of a plurality of first heat exchange portions 111 that is farthest from the second heat exchange portion 121.

In the foregoing implementation, by arranging the third heat exchange section 13 to extend along the second direction to a position close to one of a plurality of first heat exchange portions 111 that is farthest from the second heat exchange portion 121, the length of the third heat exchange portion 122 can be increased, enlarging the heat exchange area of the third heat exchange portion 122, improving the heat exchange effect of the first heat exchange flow passage 10.

In some specific embodiments of the present application, as shown in FIG. 5, the first heat exchange flow passage 10 may further include a fourth bending portion 14. The fourth bending portion 14 is arc-shaped and connected in a bent manner between the third heat exchange section 13 and the first heat exchange portion 111.

The fourth bending portion 14 is arc-shaped, that is, the fourth bending portion 14 extends along an arc, and fluid flow directions at two ends of the fourth bending portion 14 have a certain included angle. Thus, the fourth bending portion 14 can change the flow direction of fluid, thereby enabling the third heat exchange section 13 to extend in a preset direction. Moreover, the arcuate-shaped flow channel structure can reduce the flow resistance of the fluid and reduce the pressure drop, thereby increasing the flow rate of the fluid and further improving the heat exchange efficiency of the first heat exchange flow passage 10.

In addition, by providing the fourth bending portion 14, the first heat exchange flow passage 10 can be arranged in a meandering manner. In this way, the first heat exchange flow passage 10 can have an enlarged heat exchange area and a more compact structure, which is more conducive to miniaturization design of the battery 1000, improving the volumetric energy density of the battery 1000.

In the foregoing implementation, by providing the fourth bending portion 14, the flow direction of fluid between the third heat exchange section 13 and the first heat exchange portion 111 can be changed. Moreover, the arcuate-shaped fourth bending portion 14 can reduce the flow resistance of the fluid and reduce the pressure drop, thereby increasing the flow rate of the fluid and further improving the heat exchange efficiency of the first heat exchange flow passage 10.

In some specific examples of the present application, as shown in FIG. 5, the fourth bending portion 14 may be quarter-circle arc-shaped.

That is, the fourth bending portion 14 may extend along a semi-circle arc. Specifically, the fourth bending portion 14 may extend along a quarter circle-arc protruding toward the connection position between the second heat exchange portion 121 and the fourth heat exchange portion 125. The included angle between the inlet and the outlet of the fourth bending portion 14 is 90°. The fourth bending portion 14 is similar to a 90° elbow in pipe materials and can change the flow channel direction, allowing the fluid flow direction to change 90° after the fluid passes through the fourth bending portion 14. For example, the fluid flow direction may be changed from the direction X to the direction Y or from the direction Y to the direction X.

Further, the fourth bending portion 14 is connected to the third heat exchange section 13 and the first heat exchange portion 111, thereby allowing the third heat exchange section 13 and the first heat exchange portion 111 to be arranged perpendicular to each other, where the first heat exchange portion 111 extends along the first direction, the third heat exchange section 13 extends along the second direction, and the first direction is perpendicular to the second direction. In this way, the layout of the first heat exchange flow passage 10 can be more orderly, and the first heat exchange flow passage 10 can better match with the layout of the battery assembly 200, thereby improving the heat exchange effect of the first heat exchange flow passage on the battery assembly 200.

In other embodiments, a bending degree of the fourth bending portion 14 may also be adjusted as required, for example, may be 50°, 80°, 120°, 135°, 150°, or the like, which is not limited in the embodiments of the present application.

In the foregoing implementation, by arranging the fourth bending portion 14 to be quarter-circle arc-shaped, the fluid flow direction can be changed from an original flow direction to a direction perpendicular to the original flow direction after the fluid passes through the fourth bending portion 14. Moreover, the circle arc shape can also reduce the flow resistance of the fluid, allowing the fluid to flow smoothly in the fourth bending portion 14, effectively preventing a reduction in heat exchange efficiency caused by excessively slow fluid flow.

In some specific examples of the present application, as shown in FIG. 5, the first heat exchange flow passage 10 may further include: a first inlet/outlet section 15, where one end of the first inlet/outlet section 15 is connected to the third heat exchange section 13 at an angle, and the other end of the first inlet/outlet section 15 is formed as a first inlet/outlet of the first heat exchange flow passage 10; and a second inlet/outlet section 17, where one end of the second inlet/outlet section 17 is connected to the fourth heat exchange portion 125 at an angle, the other end of the second inlet/outlet section 17 is formed as a second inlet/outlet of the first heat exchange flow passage 10, and one of the first inlet/outlet and the second inlet/outlet is the inlet of the first heat exchange flow passage 10 and the other is the outlet.

In the embodiments, one end of the first inlet/outlet section 15 is connected to the third heat exchange section 13 at an angle, for example, the first inlet/outlet section 15 may be connected to the third heat exchange section 13 at an acute angle, an obtuse angle, a right angle, or a flat angle. Specifically, the first inlet/outlet section 15 is connected to the third heat exchange section 13 and arranged at an angle greater than 0° and less than or equal to 180°, and the included angle between the first inlet/outlet section 15 and the third heat exchange section 13 is 30°, 45°, 60°, 90°, 120°, 135°, 150°, or the like. Similarly, the second inlet/outlet section 17 may be connected to the fourth heat exchange portion 125 at an acute angle, an obtuse angle, a right angle, or a flat angle. Specifically, the first inlet/outlet section 15 is connected to the fourth heat exchange portion 125 and arranged at an angle greater than 0° and less than or equal to 180°, and the included angle between the first inlet/outlet section 15 and the fourth heat exchange portion 125 is 30°, 45°, 60°, 90°, 120°, 135°, 150°, or the like. The included angle between the first inlet/outlet section 15 and the third heat exchange section 13 and the included angle between the second inlet/outlet section 17 and the fourth heat exchange portion 125 may be set and adjusted according to arrangement needs.

When a heat exchange tube exchanges heat with a battery assembly 200, the heat exchange fluid may flow from the first inlet/outlet section 15 into the third heat exchange section 13 and then flow in the first heat exchange flow passage 10, or the heat exchange fluid may flow from the third heat exchange section 13 to the first inlet/outlet section 15 and flow out of the first heat exchange flow passage 10 from the first inlet/outlet, or the heat exchange fluid may flow from the second inlet/outlet section 17 into the fourth heat exchange portion 125 and then flow in the first heat exchange flow passage 10, or the heat exchange fluid may flow from the fourth heat exchange portion 125 to the second inlet/outlet section 17 and flow out from the second inlet/outlet, and inflow and outflow directions of heat exchange fluid in the first heat exchange flow passage 10 may be correspondingly adjusted or set according to heat exchange demands.

In the foregoing implementation, by providing the first inlet/outlet section 15 and the second inlet/outlet section 17, it is convenient for an external pipeline to be connected, allowing the heat exchange fluid to enter or exit the first heat exchange flow passage 10 from the first inlet/outlet section 15 or the second inlet/outlet section 17, and it is also convenient for the heat exchange member 100 to adjust the flow direction of the heat exchange fluid in the first heat exchange flow passage 10 as required. The first inlet/outlet section 15 and the second inlet/outlet section 17 have a simple structure and are convenient to use.

In a specific example of the present application, as shown in FIG. 5, the first inlet/outlet section 15 may extend along the first direction away from the first heat exchange section 11, and the third heat exchange section 13 may extend along the second direction.

It can be understood that a certain included angle is formed between the first inlet/outlet section 15 and the third heat exchange section 13, thereby forming a certain space on one side of the third heat exchange section 13 toward the first inlet/outlet section 15, which can facilitate the arrangement of other components in the battery 1000.

In the foregoing implementation, by arranging the first inlet/outlet section 15 to extend along the first direction away from the first heat exchange section 11, the pipe of the first heat exchange flow passage 10 can be arranged in a more rational manner and conveniently connected with an external pipeline. Moreover, the first inlet/outlet may be positioned away from the battery assembly 200, which is conducive to reducing damage to the battery assembly 200 caused by water leakage at the first inlet/outlet.

Further, as shown in FIG. 5, the first heat exchange flow passage 10 may further include a fifth bending portion 16. The fifth bending portion 16 is arc-shaped and connected in a bent manner between the third heat exchange section 13 and the first inlet/outlet section 15.

The fifth bending portion 16 is arc-shaped, that is, the fifth bending portion 16 extends along an arc, and fluid flow directions at two ends of the fifth bending portion 16 have a certain included angle. This thus can achieve communication between the third heat exchange section 13 and the first inlet/outlet section 15, allowing the heat exchange fluid to smoothly flow from the third heat exchange section 13 to the first inlet/outlet section 15 or from the first inlet/outlet section 15 to the third heat exchange section 13, to achieve liquid inlet or outlet of the first inlet/outlet section 15. Moreover, the arcuate-shaped flow channel structure can also reduce the flow resistance of the fluid and reduce the pressure drop, thereby increasing the flow rate of the heat exchange fluid and further improving the heat exchange efficiency of the first heat exchange flow passage 10.

In the foregoing implementation, by providing the fifth bending portion 16, the heat exchange fluid can smoothly flow from the third heat exchange section 13 to the first inlet/outlet section 15 or from the first inlet/outlet section 15 to the third heat exchange section 13, to achieve liquid inlet or outlet of the first inlet/outlet section 15. Moreover, the fifth bending portion 16 being arc-shaped can also reduce the flow resistance of the fluid and reduce the pressure drop, thereby increasing the flow rate of the heat exchange fluid and further improving the heat exchange efficiency of the first heat exchange flow passage 10.

Further, as shown in FIG. 5, the fifth bending portion 16 may be circle arc-shaped, and the central angle corresponding to the fifth bending portion 16 is greater than or equal to 90° and less than 180°.

For example, the central angle corresponding to the fifth bending portion 16 may be 90°, 100°, 110°, 120°, 130°, 140°, 150°, 160°, 170°, or the like.

As shown in FIG. 5, the heat exchange member 100 includes two first heat exchange flow passages 10, the fifth bending portion 16 of a first heat exchange flow passage 10 located on one side of a battery assembly 200 toward the origin of the coordinate system in the direction Y is quarter-circle arc-shaped, and the third heat exchange section 13 and the first inlet/outlet section 15 are perpendicular to each other. Moreover, the first inlet/outlet section 15 of the lower first heat exchange flow passage 10 may include a first extension segment and a second extension segment, the first extension segment being connected between the second extension segment and the third heat exchange section 13, where the first extension segment extends linearly in a direction inclined relative to the first direction, the second extension segment extends linearly in a direction parallel to the first direction, the first extension segment and the third heat exchange section 13 are connected through the fifth bending portion 16, and the central angle corresponding to the circle arc of the fifth bending portion 16 is greater than 90° and less than 135°.

In the foregoing implementation, by arranging the fifth bending portion 16 to be circle arc-shaped, the flow resistance of the fluid can be further reduced, allowing the fluid to flow smoothly in the fifth bending portion 16, effectively preventing a reduction in the heat exchange efficiency caused by excessively slow fluid flow. Moreover, the central angle corresponding to the fifth bending portion 16 is greater than or equal to 90° and less than 180° so that a certain space can be formed on one side of the third heat exchange section 13 toward the first inlet/outlet section 15, thereby facilitating the arrangement of other components in the battery 1000 and improving the rationality of arrangement of the battery 1000.

Further, as shown in FIG. 5, the second heat exchange section 12 may further include a sixth bending portion 126. The sixth bending portion 126 may be circle arc-shaped, and the sixth bending portion 126 is connected between the fourth heat exchange portion 125 and the second heat exchange portion 121.

The sixth bending portion 126 is formed arc-shaped, that is, the sixth bending portion 126 extends along an arc, and fluid flow directions at two ends of the sixth bending portion 126 have a certain included angle. Thus, the sixth bending portion 126 can change the flow direction of the heat exchange fluid, thereby allowing the second heat exchange portion 121 and the fourth heat exchange portion 125 to extend in a preset direction. Moreover, an arc-shaped sixth bending portion 126 can reduce the flow resistance of the fluid and reduce the pressure drop, thereby increasing the flow rate of the heat exchange fluid and further improving the heat exchange efficiency of the first heat exchange flow passage 10.

In addition, by providing the sixth bending portion 126, the second heat exchange section 12 can form a U-shaped region 120, thereby achieving the encompassment of the first heat exchange section 11 by the second heat exchange section 12, so that the compactness of arrangement of the first heat exchange flow passage 10 can be enhanced, achieving miniaturization of a structure of the first heat exchange flow passage 10, and facilitating improvement of the volumetric energy density of the battery.

In the foregoing implementation, by providing the sixth bending portion 126, the fluid flow direction in the first heat exchange flow passage 10 can be changed, and the first heat exchange flow passage 10 can be arranged in a meandering manner. Thus, the heat exchange area of the first heat exchange flow passage 10 can be enlarged, improving the heat exchange efficiency of the first heat exchange flow passage 10; Moreover, the sixth bending portion 126 being arc-shaped can also reduce the flow resistance of the fluid and reduce the pressure drop, thereby increasing the flow rate of the heat exchange fluid and further improving the heat exchange efficiency of the first heat exchange flow passage 10.

Furthermore, as shown in FIG. 5, the sixth bending portion 126 may be quarter-circle arc-shaped.

That is, the sixth bending portion 126 may extend along a semi-circle arc. Specifically, the sixth bending portion 126 may extend along a quarter-circle arc protruding away from the first heat exchange section 11. The included angle between the inlet and the outlet of the sixth bending portion 126 is °. The sixth bending portion 126 is similar to a 90° elbow in pipe materials and can change the flow channel direction, allowing the fluid flow direction to change 90° after the fluid passes through the sixth bending portion 126, for example, allowing the liquid flow direction to change from the direction X to the direction Y or from the direction Y to the direction X. The sixth bending portion 126 is connected to the second heat exchange portion 121 and the fourth heat exchange portion 125, and in this case, the second heat exchange portion 121 and the fourth heat exchange portion 125 are perpendicular to each other. Thus, the layout of the second heat exchange section 12 can be more orderly, and the second heat exchange section 12 can better match with the layout of the battery assembly 200, thereby improving the heat exchange effect of the second heat exchange section 12 on the battery assembly 200.

In other embodiments, a bending degree of the sixth bending portion 126 may also be adjusted as required, for example, may be 50°, 80°, 120°, 135°, 150°, or the like, which is not limited in embodiments of the present application.

In the foregoing implementation, by arranging the sixth bending portion 126 to be quarter-circle arc-shaped, the fluid flow direction can be changed from an original flow direction to a direction perpendicular to the original flow direction after the fluid passes through the sixth bending portion 126. Moreover, the circle arc shape can further reduce the flow resistance of the fluid, allowing the fluid to flow smoothly in the sixth bending portion 126, effectively preventing a reduction in the heat exchange efficiency caused by excessively slow fluid flow.

In a specific example of the present application, as shown in FIG. 5, the second inlet/outlet section 17 extends along the first direction away from the first heat exchange section 11, and the fourth heat exchange portion 125 extends along the second direction.

It can be understood that a certain included angle is formed between the second inlet/outlet section 17 and the fourth heat exchange portion 125, thereby forming a certain space on one side of the fourth heat exchange portion 125 toward the second inlet/outlet section 17, which can facilitate the arrangement of other components in the battery 1000.

In the foregoing implementation, by arranging the second inlet/outlet section 17 to extend along the first direction away from the first heat exchange section 11, the pipe of the first heat exchange flow passage 10 can be arranged in a more rational manner and conveniently connected with an external pipeline. Moreover, the second inlet/outlet may be positioned away from the battery assembly 200, which is conducive to reducing damage to the battery assembly 200 caused by water leakage at the second inlet/outlet.

Further, as shown in FIG. 5, the first heat exchange flow passage 10 may further include a seventh bending portion 18. The seventh bending portion 18 is arc-shaped and connected in a bent manner between the fourth heat exchange portion 125 and the second inlet/outlet section 17.

The seventh bending portion 18 is arc-shaped, that is, the seventh bending portion 18 has a certain included angle. Thus, the seventh bending portion 18 is connected in a bent manner between the fourth heat exchange portion 125 and the second inlet/outlet section 17 and can achieve communication between the fourth heat exchange portion 125 and the second inlet/outlet section 17, allowing the heat exchange fluid to smoothly flow from the fourth heat exchange portion 125 to the second inlet/outlet section 17 or from the second inlet/outlet section 17 to the fourth heat exchange portion 125, to achieve liquid inlet or outlet of the second inlet/outlet section 17. Moreover, the arcuate-shaped flow channel structure can also reduce the flow resistance of the fluid and reduce the pressure drop, thereby increasing the flow rate of the heat exchange fluid and further improving the heat exchange efficiency of the first heat exchange flow passage 10.

In the foregoing implementation, by providing the seventh bending portion, the heat exchange fluid can smoothly flow from the fourth heat exchange portion 125 to the second inlet/outlet section 17 or from the second inlet/outlet section 17 to the fourth heat exchange portion 125, to achieve liquid inlet or outlet of the second inlet/outlet section 17. Moreover, the seventh bending portion 18 being arc-shaped can also reduce the flow resistance of the fluid and reduce the pressure drop, thereby increasing the flow rate of the heat exchange fluid and further improving the heat exchange efficiency of the first heat exchange flow passage 10.

Furthermore, as shown in FIG. 5, the seventh bending portion 18 is circle arc-shaped, and the central angle corresponding to the seventh bending portion 18 is greater than or equal to 90° and less than 180°.

For example, the central angle corresponding to the seventh bending portion 18118 may be 90°, 100°, 110°, 120°, 130°, 140°, 150°, 160°, or 170°, or the like.

As shown in FIG. 4, the heat exchange member 100 includes two first heat exchange flow passages 10, the seventh bending portion 18 of a first heat exchange flow passage 10 located on one side of the battery assembly 200 toward the origin of the coordinate system in the direction Y is quarter-circle arc-shaped, and the fourth heat exchange portion 125 and the second inlet/outlet section 17 are perpendicular to each other. Moreover, the second inlet/outlet section 17 of the lower first heat exchange flow passage 10 includes a third extension segment and a fourth extension segment, the third extension segment being connected between the fourth extension segment and the fourth heat exchange portion 125, where the third extension segment extends linearly in a direction inclined relative to the second direction, the fourth extension segment extends linearly in a direction parallel to the second direction, the third extension segment and the fourth heat exchange portion 125 are connected through the seventh bending portion 18, and the central angle corresponding to a circle arc of the seventh bending portion 18 is greater than 90° and less than 135°.

In the foregoing implementation, by arranging the seventh bending portion 18 to be circle arc-shaped, the flow resistance of the fluid can be further reduced, allowing the fluid to flow smoothly in the seventh bending portion 18, effectively preventing a reduction in heat exchange efficiency caused by excessively slow fluid flow. Moreover, the central angle corresponding to the seventh bending portion 18 is greater than or equal to 90° and less than 180° so that a clearance space can be formed on one side of the fourth heat exchange portion 125 toward the second inlet/outlet section 17, thereby facilitating the arrangement of other components in the battery 1000 and improving the rationality of arrangement of the battery 1000.

In some examples of the present application, as shown in FIG. 4 and FIG. 5, the plurality of flow channel portions of the first heat exchange section 11 may include a plurality of first heat exchange portions 111, the plurality of first heat exchange portions 111 are spaced apart and sequentially connected in a bent manner; the plurality of first heat exchange portions 111 and the second heat exchange portion 121 all extend along the first direction and are spaced apart in the second direction; and one battery unit 201 is in contact with one second heat exchange portion 121 and at least one first heat exchange portion 111 to enable heat exchange; or one battery unit 201 is in contact with at least two first heat exchange portions 111 to enable heat exchange.

In the first heat exchange section 11, a plurality of first heat exchange portions 111 are provided, for example, two, three, four, five, six, or more first heat exchange portions 111 may be provided, a plurality of first heat exchange portions 111 may extend linearly in a first direction, and a plurality of first heat exchange portions 111 may be spaced apart in a second direction. The second heat exchange portion 121 and the first heat exchange portions 111 may be parallel and spaced apart, a battery unit 201 may be in contact with one second heat exchange portion 121 and one first heat exchange portion 111, or a battery unit 201 may be in contact with one second heat exchange portion 121 and a plurality of first heat exchange portions 111, or a battery unit 201 may be in contact with two or more first heat exchange portions 111.

In the foregoing implementation, by arranging one battery unit 201 to be in contact with one second heat exchange portion 121 and at least one first heat exchange portion 111 or one battery unit 201 to be in contact with at least two first heat exchange portions 111, the heat exchange member 100 can conveniently meet the required heat exchange area for each battery cell 2011 in the battery unit 201. The first heat exchange portions 111 and the second heat exchange portion 121 both extend along the first direction and are spaced apart in the second direction, so that the heat exchange member 100 can be conveniently disposed within the battery 1000, and the overall structure of the first heat exchange section 11 and the second heat exchange section 12 in the first heat exchange flow passage 10 is relatively compact.

In some embodiments of the present application, a total number of first heat exchange portions 111 and second heat exchange portions 121 of the first heat exchange flow passage 10 is greater than or equal to 4.

For example, a total number of first heat exchange portions 111 and second heat exchange portions 121 of the first heat exchange flow passage 10 may be 4, 5, 6, 7, or more.

In the foregoing implementation, by configuring the total number of first heat exchange portions 111 and second heat exchange portions 121 of the first heat exchange flow passage 10 to be greater than or equal to 4, the length of each heat exchange flow passage can be increased, reducing the total number of heat exchange flow passages, improving sealing performance of the heat exchange member 100.

In an example of the present application, as shown in FIG. 5, two first heat exchange flow passages 10 may be provided, the plurality of flow channel portions of each first heat exchange flow passage 10 include: five first heat exchange portions 111, one second heat exchange portion 121, one third heat exchange portion 122, one fourth heat exchange portion 125, and one third heat exchange section 13; and two battery units 201 are provided, each battery unit 201 is in contact with the first heat exchange flow passage 10 to enable heat exchange. The third heat exchange portion 122 is connected to the second heat exchange portion 121 and the first heat exchange portion 111 farthest from the second heat exchange portion 121 and is in contact with the second group of battery cells 203 to enable heat exchange, the third heat exchange section 13 is connected to the first heat exchange portion 111 closest to the second heat exchange portion 121 and is in contact with the third group of battery cells 204 to enable heat exchange, and the fourth heat exchange portion 125 is connected to the second heat exchange portion 121, extends to a position of another battery unit 201, is in contact with the third group of battery cells 204 to enable heat exchange.

Two first heat exchange flow passages 10 are provided, the two first heat exchange flow passages 10 may be spaced apart in the second direction, each heat exchange flow passage may be in contact with one battery unit 201 for heat exchange, and the two first heat exchange flow passages 10 may be symmetrically arranged in the second direction. A battery assembly 200 is provided with two battery units 201, the two battery units 201 may extend along the first direction and be sequentially arranged in the second direction. Specifically, a plurality of battery cells 2011 in a battery unit 201 may be stacked along the first direction, and the thickness direction of the battery cell 2011 is the same as the first direction. The two battery units 201 may both be formed as a first group of battery cells 202 in the peripheral battery cells of the battery assembly 200, and in two battery units 201 sequentially arranged along the second direction, two battery cells 2011 close to a side wall of the battery 1000 in the first direction may be respectively formed as a second group of battery cells 203 and a third group of battery cells 204 in the peripheral battery cells.

A first heat exchange section 11 is provided with five first heat exchange portions 111, and the five first heat exchange portions 111 extend along the first direction and are spaced apart in the second direction. The first heat exchange portions 111 and the second heat exchange portion 121 are both in contact with the first group of battery cells 202. The third heat exchange portion 122 extends along the second direction and is in contact with the second group of battery cells 203. The third heat exchange section 13 extends along the second direction and is located on one side of the first heat exchange section 11 facing away from the third heat exchange portion 122 in the first direction. The third heat exchange section 13 may be in contact with the third group of battery cells 204, or the fourth heat exchange portion 125 is in contact with the third group of battery cells 204, or both the third heat exchange section 13 and the fourth heat exchange portion 125 are in contact with the third group of battery cells 204.

In the foregoing implementation, by configuring two first heat exchange flow passages 10 to exchange heat with the battery assembly 200, the structure is simplified and the arrangement is easy to implement, which can improve heat exchange efficiency of the heat exchange member 100 to some extent and enable the heat exchange member 100 to better exchange heat with the battery assembly 200. In the embodiments, five first heat exchange portions 111, one second heat exchange portion 121, one third heat exchange portion 122, one fourth heat exchange portion 125, and one third heat exchange section 13 are provided in the first heat exchange flow passage 10, so that, when the first heat exchange flow passage 10 is brought into contact with one battery unit 201, a sufficient heat exchange area can be ensured to satisfy the heat exchange demands and improve the heat exchange rate.

The first heat exchange section 11, the second heat exchange section 12, and the third heat exchange section 13 in the first heat exchange flow passage 10 are arranged in a manner as described above, so that during heat exchange operations, the heat exchange member 100 can well match the heat exchange conditions of the battery cells 2011 at different positions within the battery 1000. This allows battery cells 2011 at different positions in the battery assembly 200 to obtain a relatively uniform heat exchange effect, thereby ensuring a more uniform temperature distribution within the battery 1000 during heat exchange operations of the battery 1000, and enabling the battery 1000 to operate more stably while maintaining good performance.

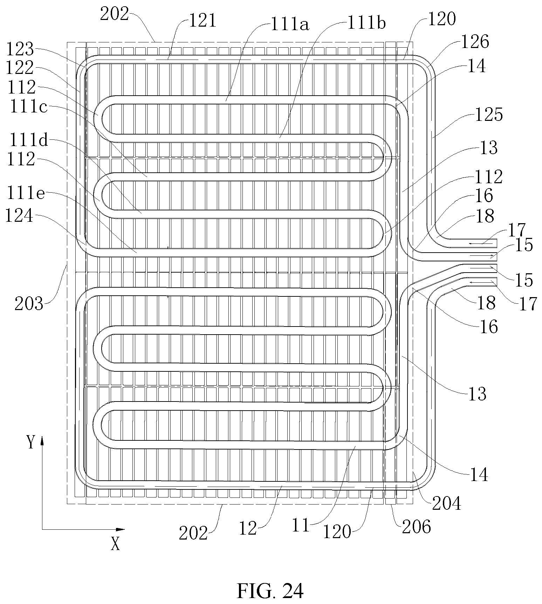

In an example of the present application, as shown in FIG. 24, two first heat exchange flow passages 10 may be provided, the plurality of flow channel portions of each first heat exchange flow passage 10 include: five first heat exchange portions 111, one second heat exchange portion 121, one third heat exchange portion 122, one fourth heat exchange portion 125, and one third heat exchange section 13; four battery units 201 are provided, the battery units 201 located at the ends in the second direction are in contact with two first heat exchange portions 111 and one second heat exchange portion 121 to enable heat exchange, and each of the remaining battery unit 201 is in contact with three first heat exchange portions 111 to enable heat exchange; and the third heat exchange portion 122 is connected to the second heat exchange portion 121 and the first heat exchange portion 111 farthest from the second heat exchange portion 121 and is in contact with the second group of battery cells 203 to enable heat exchange, and the third heat exchange section 13 is connected to the first heat exchange portion 111 closest to the second heat exchange portion 121 and is in contact with the third group of battery cells 204 to enable heat exchange.

Two first heat exchange flow passages 10 are provided, the two first heat exchange flow passages 10 may be spaced apart in a second direction, each heat exchange flow passage may be in contact with two battery units 201 for heat exchange, and the two first heat exchange flow passages 10 may be symmetrically arranged in the second direction. A battery assembly 200 is provided with four battery units 201, the four battery units 201 may extend along the first direction and be sequentially arranged in the second direction. Specifically, a plurality of battery cells 2011 in a battery unit 201 may be stacked along the first direction, and the thickness direction of the battery cell 2011 is the same as the first direction.

A battery unit 201 close to a side wall of the battery 1000 in the second direction may be formed as a first group of battery cells 202 in the peripheral battery cells of the battery assembly 200, and in two battery units 201 sequentially arranged along the second direction, four battery cells 2011 close to a side wall of the battery 1000 in the first direction may be respectively formed as a second group of battery cells 203 and a third group of battery cells 204 in the peripheral battery cells.

A first heat exchange section 11 is provided with five first heat exchange portions 111, and the five first heat exchange portions 111 extend along the first direction and are spaced apart in the second direction. Three first heat exchange portions 111 sequentially spaced apart in the second direction are in contact with a battery unit 201 close to the first group of battery cells 202 in the second direction, and another two first heat exchange portions 111 may be in contact with the first group of battery cells 202. The second heat exchange portion 121 in the second heat exchange section 12 is disposed between the first heat exchange portion 111 and a side wall of the battery 1000. The second heat exchange portion 121 is in contact with the first group of battery cells 202. The third heat exchange portion 122 extends along the second direction and is in contact with the second group of battery cells 203. The third heat exchange section 13 extends along the second direction and is located on one side of the first heat exchange section 11 facing away from the third heat exchange portion 122 in the first direction. The third heat exchange section 13 may be in contact with the third group of battery cells 204, or the fourth heat exchange portion 125 is in contact with the third group of battery cells 204, or both the third heat exchange section 13 and the fourth heat exchange portion 125 are in contact with the third group of battery cells 204.

In the foregoing implementation, by configuring two first heat exchange flow passages 10 to exchange heat with the battery assembly 200, the structure is simplified and the arrangement is easy to implement, which can improve the heat exchange efficiency of the heat exchange member 100 to some extent and enable the heat exchange member 100 to better perform heat exchange on the battery assembly 200. In the embodiments, five first heat exchange portions 111, one second heat exchange portion 121, one third heat exchange portion 122, one fourth heat exchange portion 125, and one third heat exchange section 13 are provided in the first heat exchange flow passage 10, so that when the first heat exchange flow passage 10 is brought into contact with two battery units 201, a sufficient heat exchange area can be ensured to satisfy the heat exchange demands and improve the heat exchange rate.

The first heat exchange section 11, the second heat exchange section 12, and the third heat exchange section 13 in the first heat exchange flow passage 10 are arranged in a manner as described above, so that during heat exchange operations, the heat exchange member 100 can well match the heat exchange conditions of the battery cells 2011 at different positions within the battery 1000. This allows battery cells 2011 at different positions in the battery assembly 200 to obtain a relatively uniform heat exchange effect, thereby ensuring a more uniform temperature distribution within the battery 1000 during heat exchange operations of the battery 1000, and enabling the battery 1000 to operate more stably while maintaining good performance.

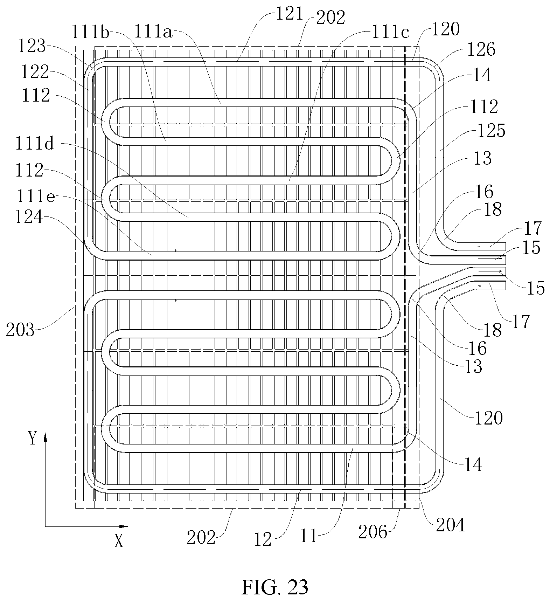

In an example of the present application, as shown in FIG. 23, two first heat exchange flow passages 10 may be provided, the plurality of flow channel portions of each first heat exchange flow passage 10 include: five first heat exchange portions 111, one second heat exchange portion 121, one third heat exchange portion 122, one fourth heat exchange portion 125, and one third heat exchange section 13; six battery units 201 are provided, the battery units 201 located at the ends in the second direction are in contact with one first heat exchange portion 111 and one second heat exchange portion 121 to enable heat exchange, and each of the remaining battery unit 201 is in contact with two first heat exchange portions 111 to enable heat exchange; and the third heat exchange portion 122 is connected to the second heat exchange portion 121 and the first heat exchange portion 111 farthest from the second heat exchange portion 121 and is in contact with the second group of battery cells 203 to enable heat exchange, and the third heat exchange section 13 is connected to the first heat exchange portion 111 closest to the second heat exchange portion 121 and is in contact with the third group of battery cells 204 to enable heat exchange.

Two first heat exchange flow passages 10 are provided, the two first heat exchange flow passages 10 may be spaced apart in a second direction, each heat exchange flow passage may be in contact with three battery units 201 for heat exchange, and the two first heat exchange flow passages 10 may be symmetrically arranged in the second direction. A battery assembly 200 is provided with six battery units 201, the six battery units 201 may extend along the first direction and be sequentially arranged in the second direction. Specifically, a plurality of battery cells 2011 in a battery unit 201 may be stacked along the second direction, and the thickness direction of the battery cell 2011 is the same as the second direction.

A battery unit 201 close to a side wall of the battery 1000 in the second direction may be formed as a first group of battery cells 202 in the peripheral battery cells of the battery assembly 200, and in three battery units 201 sequentially arranged along the second direction, six battery cells 2011 close to a side wall of the battery 1000 in the first direction may be respectively formed as a second group of battery cells 203 and a third group of battery cells 204 in the peripheral battery cells.

A first heat exchange section 11 is provided with five first heat exchange portions 111, the five first heat exchange portions 111 extend along the first direction and are spaced apart in the second direction, and four first heat exchange portions 111 sequentially spaced apart in the second direction may be grouped in pairs to be in contact with one battery unit 201. Another first heat exchange portion 111 is in contact with the first group of battery cells 202. The second heat exchange portion 121 in the second heat exchange section 12 is disposed between the first heat exchange portion 111 and a side wall of the battery 1000. The second heat exchange portion 121 is in contact with the first group of battery cells 202. The third heat exchange portion 122 extends along the second direction and is in contact with the second group of battery cells 203. The third heat exchange section 13 extends along the second direction and is located on one side of the first heat exchange section 11 facing away from the third heat exchange portion 122 in the first direction. The third heat exchange section 13 may be in contact with the third group of battery cells 204, or the fourth heat exchange portion 125 is in contact with the third group of battery cells 204, or both the third heat exchange section 13 and the fourth heat exchange portion 125 are in contact with the third group of battery cells 204.

In the foregoing implementation, by configuring two first heat exchange flow passages 10 to exchange heat with the battery assembly 200, the structure is simplified and the arrangement is easy to implement, which can improve the heat exchange efficiency of the heat exchange member 100 to some extent and enable the heat exchange member 100 to better perform heat exchange operations on the battery assembly 200. In the embodiments, five first heat exchange portions 111, one second heat exchange portion 121, one third heat exchange portion 122, one fourth heat exchange portion 125, and one third heat exchange section 13 are provided in the first heat exchange flow passage 10, so that when the first heat exchange flow passage 10 is brought into contact with three battery units 201, a sufficient heat exchange area can be ensured to satisfy the heat exchange demands and improve the heat exchange rate.

The first heat exchange section 11, the second heat exchange section 12, and the third heat exchange section 13 in the first heat exchange flow passage 10 are arranged in a manner as described above, so that during heat exchange operations, the heat exchange member 100 can well match the heat exchange conditions of the battery cells 2011 at different positions within the battery 1000. This allows battery cells 2011 at different positions in the battery assembly 200 to obtain a relatively uniform heat exchange effect, thereby ensuring a more uniform temperature distribution within the battery 1000 during heat exchange of the battery 1000, and enabling the battery 1000 to operate more stably while maintaining good performance.

In an example of the present application, as shown in FIG. 5 and FIG. 19, two first heat exchange flow passages 10 may be provided, the plurality of flow channel portions of each first heat exchange flow passage 10 include: three first heat exchange portions 111, one second heat exchange portion 121, one third heat exchange portion 122, one fourth heat exchange portion 125, and one third heat exchange section 13; and four battery units 201 are provided, the battery units 201 located at the ends in the second direction are in contact with one first heat exchange portion 111 and one second heat exchange portion 121 to enable heat exchange, and each of the remaining battery unit 201 is in contact with two first heat exchange portions 111 to enable exchange. The third heat exchange portion 122 is connected to the second heat exchange portion 121 and the first heat exchange portion 111 farthest from the second heat exchange portion 121 and is in contact with the second group of battery cells 203 to enable heat exchange, and the third heat exchange section 13 is connected to the first heat exchange portion 111 closest to the second heat exchange portion 121 and is in contact with the third group of battery cells 204 to enable heat exchange.

Two first heat exchange flow passages 10 are provided, the two first heat exchange flow passages 10 may be spaced apart in the second direction, each heat exchange flow passage may be in contact with two battery units 201 for heat exchange, and the two first heat exchange flow passages 10 may be symmetrically arranged in the second direction. A battery assembly 200 is provided with four battery units 201, the four battery units 201 may extend along the first direction and be sequentially arranged in the second direction. Specifically, a plurality of battery cells 2011 in a battery unit 201 may be stacked along the second direction, and the thickness direction of the battery cell 2011 is the same as the second direction.

A battery unit 201 close to a side wall of the battery 1000 in the second direction may be formed as a first group of battery cells 202 in the peripheral battery cells of a battery assembly 200, and in two battery units 201 sequentially arranged along the second direction, four battery cells 2011 close to a side wall of the battery 1000 in the first direction may be respectively formed as a second group of battery cells 203 and a third group of battery cells 204 in the peripheral battery cells.

A first heat exchange section 11 is provided with three first heat exchange portions 111, the three first heat exchange portions 111 extend along the first direction and are spaced apart in the second direction, and two first heat exchange portions 111 sequentially spaced apart in the second direction are in contact with a battery unit 201 close to the first group of battery cells 202 in the second direction. Another first heat exchange portion 111 is in contact with the first group of battery cells 202. The second heat exchange portion 121 in the second heat exchange section 12 is disposed between a first heat exchange portion 111 and a side wall of the battery 1000. The second heat exchange portion 121 is in contact with the first group of battery cells 202. The third heat exchange portion 122 extends along the second direction and is in contact with the second group of battery cells 203. The third heat exchange section 13 extends along the second direction and is located on one side of the first heat exchange section 11 facing away from the third heat exchange portion 122 in the first direction, the third heat exchange section 13 may be in contact with the third group of battery cells 204, or the fourth heat exchange portion 125 is in contact with the third group of battery cells 204, or both the third heat exchange section 13 and the fourth heat exchange portion 125 are in contact with the third group of battery cells 204.

In the foregoing implementation, by configuring two first heat exchange flow passages 10 to exchange heat with the battery assembly 200, the structure is simplified and the arrangement is easy to implement, which can improve the heat exchange efficiency of the heat exchange member 100 to some extent and enable the heat exchange member 100 to better perform heat exchange operations on the battery assembly 200. In the embodiments, three first heat exchange portions 111, one second heat exchange portion 121, one third heat exchange portion 122, one fourth heat exchange portion 125, and one third heat exchange section 13 are provided in the first heat exchange flow passage 10, so that when the first heat exchange flow passage 10 is brought into contact with two battery units 201, a sufficient heat exchange area can be ensured to satisfy the heat exchange demands and improve the heat exchange rate.

The first heat exchange section 11, the second heat exchange section 12, and the third heat exchange section 13 in the first heat exchange flow passage 10 are arranged in a manner as described above, so that during heat exchange operations, the heat exchange member 100 can well match the heat exchange conditions of the battery cells 2011 at different positions within the battery 1000. This allows battery cells 2011 at different positions in the battery assembly 200 to obtain a relatively uniform heat exchange effect, thereby ensuring a more uniform temperature distribution within the battery 1000 during heat exchange of the battery 1000, and enabling the battery 1000 to operate more stably while maintaining good performance.

In some embodiments of the present application, the number of battery units 201 may be 2 to 8.

For example, the number of battery units 201 may be 2, 3, 4, 5, 6, 7, or 8.

In the foregoing implementation, by configuring the number of battery units 201 to be 2 to 8, the overall design of the battery 1000 and the heat exchange member 100 is facilitated, the production difficulty of the heat exchange member 100 and the battery 1000 is reduced, and the applicability of the battery 1000 can be increased, improving the market competitiveness of the battery 1000.

In one embodiment of the present application, as shown in FIG. 5, the first heat exchange section 11 may be connected downstream of the second heat exchange section 12 in a fluid flow direction.

That is, the heat exchange fluid first flows through the second heat exchange section 12 and then flows into the first heat exchange section 11, where the second heat exchange section 12 is arranged around a circumference of the first heat exchange section 11, and when the first heat exchange flow passage 10 exchanges heat with the battery assembly 200, because the peripheral region of the battery assembly 200 dissipates heat quickly, especially under low-temperature heating conditions, starting heat exchange using a high-temperature heat exchange fluid from the second heat exchange section 12 allows the first heat exchange flow passage 10 to preferentially perform heat exchange on the outer circumference of the battery assembly 200. This is conducive to reducing the internal-external temperature difference of the battery assembly 200 and, to some extent, prolonging the service life of the battery 1000.

In the foregoing implementation, by configuring the first heat exchange section 11 to be connected downstream of the second heat exchange section 12 in a fluid flow direction, the first heat exchange flow passage 10 can preferentially perform heat exchange on the outer circumference of the battery 1000, which is conducive to improving the temperature difference of the battery 1000 in different environments and, to some extent, improving the service life of the battery 1000.

The heat exchange member 100 is configured such that: during heating of the battery assembly 200 of the battery 1000, the first heat exchange section 11 is connected downstream of the second heat exchange section 12 in a fluid flow direction; and during cooling of the battery assembly 200 of the battery 1000, the first heat exchange section 11 is connected upstream of the second heat exchange section 12 in the fluid flow direction.

Specifically, during heating of the battery assembly 200 of the battery 1000, the temperature of the heat exchange fluid flowing in a heat exchange member 100 is higher than the operating temperature of the battery 1000, and the heat exchange member 100 heats and raises the temperature of the battery assembly 200. The high-temperature heat exchange fluid first flows into the second heat exchange section 12 and then flows to the first heat exchange section 11, and the temperature of the heat exchange fluid flowing inside the second heat exchange section 12 is higher than the temperature of the heat exchange fluid inside the first heat exchange section 11.

Since the high-temperature fluid first enters the second heat exchange section 12 located at the periphery of the first heat exchange flow passage 10, the second heat exchange section 12 can first heat battery cells 2011 at the periphery of the battery assembly 200, and the heat exchange fluid enters the first heat exchange section 11 and then cools battery cells 2011 at the central region of the battery assembly 200. Since battery cells 2011 at the periphery of the battery 1000 dissipate more heat to the external environment, temperatures of battery cells 2011 at the periphery of the battery 1000 decrease more, the heat exchange fluid first heats battery cells 2011 at the periphery of the battery 1000, and the higher-temperature heat exchange fluid can compensate for heat lost by battery cells 2011 due to heat dissipation to the external environment while raising temperatures of the peripheral battery cells 2011, satisfying the heating needs thereof.

Battery cells 2011 at the central region of the battery assembly 200 have small contact area with the external environment and small heat loss, and a lower-temperature heat exchange fluid flowing in the first heat exchange section 11 can, together with the heat generated by battery cells 2011 themselves, adequately satisfy the heating needs thereof. Thus, the heating effects obtained by battery cells 2011 at the periphery of the battery assembly 200 and battery cells 2011 at the central region of the battery assembly 200 may be substantially consistent. As a result, the temperatures reached by the battery cells 2011 at the periphery of the battery assembly 200 and battery cells 2011 at the central region of the battery assembly 200 after heating can be substantially consistent, thereby ensuring a more uniform temperature distribution within the battery 1000.

In cooling the battery assembly 200 of the battery 1000, the temperature of the heat exchange fluid flowing in the heat exchange member 100 is lower than the operating temperature of the battery 1000, and the heat exchange member 100 is used to cool the battery 1000. The heat exchange fluid flows from the first heat exchange section 11 to the second heat exchange section 12, and the temperature of the heat exchange fluid flowing in the first heat exchange section 11 is lower than that of the heat exchange fluid inside the second heat exchange section 12.

In cooling the battery 1000, the heat exchange fluid flows from the first heat exchange section 11 to the second heat exchange section 12, that is, the heat exchange fluid flows from a central site of the battery assembly 200 toward an edge position of the battery assembly 200 and performs heat exchange. Since battery cells 2011 at the peripheral position of the battery 1000 have better heat dissipation conditions than inner battery cells 2011, a lower-temperature heat exchange fluid of the first heat exchange section 11 can better satisfy the heat dissipation needs of battery cells 2011 at the central region of the battery 1000, and since battery cells 2011 at the peripheral position of the battery assembly 200 can directly dissipate heat naturally toward the external environment, even if the temperature of the heat exchange fluid of the second heat exchange section 12 is slightly higher, the heat dissipation needs of the peripheral battery cells 2011 can still be satisfied, so that cooling effects obtained by battery cells 2011 at the peripheral position of the battery 1000 and battery cells 2011 at the central region of the battery 1000 are substantially consistent, thereby allowing temperatures of battery cells 2011 at the peripheral position of the battery 1000 and battery cells 2011 at the central region of the battery 1000 to be relatively consistent after cooling and heat dissipation, reducing the internal-external temperature difference of the battery assembly 200 and ensuring a more uniform temperature distribution within the battery 1000.

In the foregoing implementation, the heat exchange member 100 is configured such that: during heating of the battery assembly 200 of the battery 1000, the first heat exchange section 11 is connected downstream of the second heat exchange section 12 in a fluid flow direction; and during cooling of the battery assembly 200 of the battery 1000, the first heat exchange section 11 is connected upstream of the second heat exchange section 12 in the fluid flow direction, the heat exchange effect on the battery 1000 can be further improved, improving the temperature uniformity of the battery assembly 200.

In one embodiment of the present application, as shown in FIG. 9, the plurality of heat exchange tubes may be spaced apart along the second direction, the heat exchange flow passage of at least one heat exchange tube is formed as the second heat exchange flow passage 30, and the structure of any second heat exchange flow passage 30 is the same as or different from the structure of the first heat exchange flow passage 10.

Specifically, the second heat exchange flow passage 30 may be provided between two first heat exchange flow passages 10, mainly for heat exchange with the middle portion of the battery assembly 200. Battery units 201 provided at a central site have relatively balanced temperatures. Thus, the structure of any second heat exchange flow passage 30 may be the same as or different from that of the first heat exchange flow passage 10. For example, the second heat exchange flow passage 30 may have a simple U-shaped structure, and further, the structure of the second heat exchange flow passage 30 can be designed according to actual heat exchange conditions of the battery 1000.

In addition, the number of second heat exchange flow passages 30 may be one or more. For example, the number of second heat exchange flow passages 30 may be one, two, three, or more, and the number of second heat exchange flow passages 30 may be selected according to arrangement of the battery assembly 200.

In the foregoing implementation, by providing at least one second heat exchange flow passage 30, diversity in the arrangement of heat exchange flow passages can be increased, enabling the heat exchange member 100 to better exchange heat with the battery assembly 200 and improving the heat exchange effect of the heat exchange member 100.

In a specific embodiment of the present application, as shown in FIG. 9, the second heat exchange flow passage 30 may be provided between two first heat exchange flow passages 10, where the structure of any second heat exchange flow passage 30 is the same as or different from the structure of the first heat exchange flow passage 10.

Specifically, the second heat exchange flow passage 30 is provided between two first heat exchange flow passages 10, mainly for heat exchange with the middle portion of the battery assembly 200. Battery units 201 provided at a central site have relatively balanced temperatures. Thus, the structure of any second heat exchange flow passage 30 may be the same as or different from that of the first heat exchange flow passage 10. For example, the second heat exchange flow passage 30 may have a simple U-shaped structure, and further, the structure of the second heat exchange flow passage 30 can be designed according to actual heat exchange conditions of the battery 1000.

In addition, the number of second heat exchange flow passages 30 may be one or more. For example, the number of second heat exchange flow passages 30 may be one, two, three, or more, and the number of second heat exchange flow passages 30 may be selected according to arrangement of a battery assembly 200.

In the foregoing implementation, by providing at least one second heat exchange flow passage 30, diversity in the arrangement of heat exchange flow passages can be increased, enabling the heat exchange member 100 to better exchange heat with the battery assembly 200 and improving the heat exchange effect of the heat exchange member 100.

In some specific embodiments of the present application, as shown in FIG. 9, the second heat exchange flow passage 30 may include a plurality of fourth heat exchange sections 31, and the plurality of fourth heat exchange sections 31 are sequentially connected, where the fourth heat exchange sections 31 may extend along the first direction, and the plurality of fourth heat exchange sections 31 are spaced apart in the second direction.

Specifically, sequential connection of the plurality of fourth heat exchange sections 31 can form a U-shaped heat exchange flow passage or an S-shaped heat exchange flow passage.

For example, the number of fourth heat exchange sections 31 may be two, three, or more, and the number of fourth heat exchange sections 31 may be designed according to the size of the battery assembly 200.

In the foregoing implementation, by configuring the second heat exchange flow passage 30 to include a plurality of sequentially connected fourth heat exchange sections 31, the structural complexity of the second heat exchange flow passage 30 can be reduced, thereby reducing the production costs of the second heat exchange flow passage 30, and, in turn, reducing the production costs of the heat exchange member 100.

In one embodiment of the present application, as shown in FIG. 10, the heat exchange tubes may be provided in plurality, the plurality of heat exchange tubes are arranged to wind around each other, one heat exchange tube defines the first heat exchange flow passage 10, the heat exchange flow passage of at least one heat exchange tube is formed as a third heat exchange flow passage 40, the third heat exchange flow passage 40 is bent and provided within the U-shaped region 120 of the first heat exchange flow passage 10, and the first heat exchange flow passage 10 and the third heat exchange flow passage 40 are bent in the same plane, and bent structures of the first heat exchange flow passage 10 and the third heat exchange flow passage 40 are the same or different.

In the embodiments, at least one heat exchange tube of a plurality of heat exchange tubes forms a third heat exchange flow passage 40. There may be one or more third heat exchange flow passages 40 formed, for example, the number of third heat exchange flow passages 40 may be one, two, three, or more. Both the first heat exchange flow passage 10 and the third heat exchange flow passage 40 may include the first heat exchange portion 111, the second heat exchange portion 121, the third heat exchange portion 122, and the fourth heat exchange portion 125.

For example, as shown in FIG. 10, a plurality of heat exchange flow passages include one first heat exchange flow passage 10 and one third heat exchange flow passage 40. The third heat exchange flow passage 40 has the same structure as the first heat exchange flow passage 10, and the third heat exchange flow passage 40 is bent and provided within the U-shaped region 120 of the first heat exchange flow passage 10.

Specifically, both the first heat exchange flow passage 10 and the third heat exchange flow passage 40 include the first heat exchange portion 111, the second heat exchange portion 121, the third heat exchange portion 122, and the fourth heat exchange portion 125. A plurality of first heat exchange portions 111, third heat exchange portions 122, and fourth heat exchange portions 125 of the first heat exchange flow passage 10 and the third heat exchange flow passage 40 all extend along the direction X, and the second heat exchange portions 121 extend along the direction Y. The fourth heat exchange portion 125, the second heat exchange portion 121, and the third heat exchange portion 122 are sequentially connected in a bent manner to form a U-shaped structure with an opening away from the origin of the coordinate system in the direction X. There are a plurality of first heat exchange portions 111, and the plurality of first heat exchange portions 111 are disposed within the U-shaped region 120, spaced apart along the direction Y and sequentially connected in a bent manner.

The third heat exchange portion 122 of the first heat exchange flow passage 10 is located on one side of a plurality of first heat exchange portions 111 away from the origin of the coordinate system in the direction Y, and the fourth heat exchange portion 125 is located on one side of a plurality of first heat exchange portions 111 close to the origin of the coordinate system in the direction Y. The third heat exchange flow passage 40 is connected to the first heat exchange portion 111 farthest from the origin of the coordinate system in the direction Y. The third heat exchange portion 122 of the third heat exchange flow passage 40 is located on one side of a plurality of first heat exchange portions 111 close to the origin of the coordinate system in the direction Y, and the fourth heat exchange portion 125 is located on one side of a plurality of first heat exchange portions 111 away from the origin of the coordinate system in the direction Y. The third heat exchange portion 122 of the third heat exchange flow passage 40 is connected to the first heat exchange portion 111 closest to the origin of the coordinate system in the direction Y. The third heat exchange flow passage 40 is disposed between the fourth heat exchange portion 125 of the first heat exchange flow passage 10 and a plurality of first heat exchange portions 111.

In addition, both the first heat exchange flow passage 10 and the third heat exchange flow passage 40 further include a first inlet/outlet section 15 and a second inlet/outlet section 17, where the first inlet/outlet section 15 of the first heat exchange flow passage 10 is connected to the fourth heat exchange portion 125, the second inlet/outlet section 17 is connected to the first heat exchange portion 111 closest to the origin of the coordinate system in the direction Y; and the first inlet/outlet section 15 of the third heat exchange flow passage 40 is connected to the first heat exchange portion 111 farthest from the origin of the coordinate system in the direction Y, and the second inlet/outlet section 17 is connected to the fourth heat exchange portion 125.

In the foregoing implementation, by providing a plurality of heat exchange flow passages, diversity of the heat exchange flow passages can be increased, so that the arrangement of the heat exchange flow passages can be designed according to cooling demands of the battery 1000, thereby further enhancing the heat exchange effect of the heat exchange member 100 and improving the temperature uniformity of the battery 1000.

In some examples of the present application, as shown in FIG. 11, the third heat exchange flow passage 40 may include a U-shaped region 120 having the same structure as that of the first heat exchange flow passage 10, and at least part of the first heat exchange section 11 of the first heat exchange flow passage 10 is provided within the U-shaped region 120 of the third heat exchange flow passage 40.

It can be understood that only part of the first heat exchange section 11 of the first heat exchange flow passage 10 may be provided within the U-shaped region 120 of the third heat exchange flow passage 40, or all may be provided within the U-shaped region 120 of the third heat exchange flow passage 40.

For example, as shown in FIG. 11, a plurality of heat exchange flow passages include one first heat exchange flow passage 10 and two third heat exchange flow passages 40, and the two third heat exchange flow passages 40 have the same structure as the first heat exchange flow passage 10.

Specifically, both the first heat exchange flow passage 10 and the two third heat exchange flow passages 40 include the first heat exchange portion 111, the second heat exchange portion 121, the third heat exchange portion 122, and the fourth heat exchange portion 125. The fourth heat exchange portion 125, the second heat exchange portion 121, and the third heat exchange portion 122 of any one of the first heat exchange flow passage 10 and the two third heat exchange flow passages 40 are sequentially connected in a bent manner to form a U-shaped structure with an opening away from the origin of the coordinate system in the direction X. There are a plurality of first heat exchange portions 111, the plurality of first heat exchange portions 111 are disposed within the U-shaped region 120, and the plurality of first heat exchange portions 111 extend linearly along the direction X and are spaced apart in the direction Y and sequentially connected in a bent manner. The second heat exchange portion 121 extends along the direction Y, and both the third heat exchange portion 122 and the fourth heat exchange portion 125 extend along the direction X.

The third heat exchange portion 122 of the first heat exchange flow passage 10 is located on one side of a plurality of first heat exchange portions 111 away from the origin of the coordinate system in the direction Y and is connected to the first heat exchange portion 111 farthest from the origin of the coordinate system in the direction Y, and the fourth heat exchange portion 125 is located on one side of a plurality of first heat exchange portions 111 close to the origin of the coordinate system in the direction Y.

The third heat exchange portion 122 of the third heat exchange flow passage 40a is located on one side of a plurality of first heat exchange portions 111 away from the origin of the coordinate system in the direction Y and is connected to the first heat exchange portion 111 farthest from the origin of the coordinate system in the direction Y. The third heat exchange portion 122 of the third heat exchange flow passage 40a and the first heat exchange portion 111 of the third heat exchange flow passage 40a farthest from the origin of the coordinate system in the direction Y are located between the third heat exchange portion 122 of the first heat exchange flow passage 10 and a plurality of first heat exchange portions 111 of the first heat exchange flow passage 10. A plurality of first heat exchange portions 111 of the first heat exchange flow passage 10 are located between the first heat exchange portion 111 of the third heat exchange flow passage 40a farthest from the origin of the coordinate system in the direction Y and the second first heat exchange portion 111 of the third heat exchange flow passage 40a on one side away from the origin of the coordinate system in the direction Y.

The third heat exchange flow passage 40b is located between the fourth heat exchange portion 125 of the third heat exchange flow passage 40a and a plurality of first heat exchange portions 111 of the third heat exchange flow passage 40a, and the fourth heat exchange portion 125 of the third heat exchange flow passage 40b is located on one side of a plurality of first heat exchange portions 111 of the third heat exchange flow passage 40b away from the origin of the coordinate system in the direction Y. The third heat exchange portion 122 of the third heat exchange flow passage 40b is connected to the first heat exchange portion 111 of the third heat exchange flow passage 40 closest to the origin of the coordinate system in the direction Y.

In addition, both the first heat exchange flow passage 10 and the two third heat exchange flow passages 40 further include a first inlet/outlet section 15 and a second inlet/outlet section 17, where the first inlet/outlet section 15 and the second inlet/outlet section 17 are respectively connected to the fourth heat exchange portion 125 and the first heat exchange portion 111.

In the foregoing implementation, by configuring the third heat exchange flow passage 40 to include a U-shaped region 120 having the same structure as that of the first heat exchange flow passage 10 and disposing at least part of the first heat exchange section 11 of the first heat exchange flow passage 10 within the U-shaped region 120 of the third heat exchange flow passage 40, the first heat exchange flow passage 10 and the third heat exchange flow passage 40 can be arranged to at least partially wind around each other. In this way, the winding arrangement of heat exchange flow passages can be designed according to heat exchange demands at various positions of the battery assembly 200, further enhancing the heat exchange effect of the heat exchange member 100 and improving the temperature uniformity of the battery 1000.

In some embodiments of the present application, as shown in FIG. 10 and FIG. 11, the U-shaped region 120 of the second heat exchange section 12 of the first heat exchange flow passage 10 is located at the outermost circumference of the heat exchange member 100.

That is, the U-shaped region 120 of the second heat exchange section 12 of the first heat exchange flow passage 10 is formed as the outermost heat exchange flow passage of the heat exchange member 100, allowing the U-shaped region 120 of the first heat exchange flow passage 10 to exchange heat with the outer circumference of the battery assembly 200, improving the heat exchange effect on the circumference of the battery assembly 200.

In the foregoing implementation, by arranging the U-shaped region 120 of the second heat exchange section 12 of the first heat exchange flow passage 10 to be located at the outermost circumference of the heat exchange member 100, the second heat exchange section 12 can exchange heat with the outer circumference of the battery 1000, which is conducive to reducing the temperature difference of the battery 1000 in different environments and, to some extent, improving the service life of the battery 1000.

In some embodiments of the present application, as shown in FIG. 4 and FIG. 12, the heat exchange tube may be formed by bending a single tube into shape.

Here, "bending a single tube into shape " means that the heat exchange tube may be formed by bending a single straight tube multiple times through a processing technique such as pressing and rolling. For example, a single straight tube may be bent at a plurality of preset positions to form a V-shape, a U-shape, or the like at bending positions, and the bending shape of the single tube may be designed according to actual conditions.

In the foregoing implementation, with the heat exchange tube formed by bending a single tube into shape, the number of welding points of the heat exchange member 100 can be reduced, thereby lowering the risk of leakage of the heat exchange member 100 and improving usage reliability of the heat exchange member 100. Moreover, the operational process of bending a single tube into shape is simpler than the manufacturing process of a plate-like structure, and can therefore significantly reduce costs of the heat exchange member 100.

In some embodiments of the present application, the heat exchange tube may be bent into an arcuate shape at a bending position.

Arcuate bending can reduce the flow resistance of the fluid and the pressure drop. Accordingly, bending the heat exchange tube into an arcuate shape at a bending position can increase the flow rate of the heat exchange fluid in the heat exchange channel, thereby improving the heat exchange efficiency of the heat exchange member 100.

In the foregoing implementation, by configuring the heat exchange tube to be bent into an arcuate shape at a bending position, the flow resistance of the fluid and the pressure drop can be reduced, thereby increasing the flow rate of the heat exchange fluid in the heat exchange flow passage and improving the heat exchange efficiency of the heat exchange member 100.

In some embodiments of the present application, as shown in FIG. 12, the bending angle of the heat exchange tube at the bending positions is less than 180°.

For example, the bending angle of the heat exchange tube at the bending positions may be 30°, 60°, 90°, 120°, 150°, or 179°.

In the foregoing implementation, by configuring the bending angle of the heat exchange tube at the bending positions to be less than 180°, a probability of bending damage of the heat exchange tube can be reduced.

In one embodiment of the present application, as shown in FIG. 12, the heat exchange tube may be bent into a circular arc shape at a bending position, and a ratio of the bending radius on the centerline of the heat exchange tube along the length direction to the width of the heat exchange tube is greater than or equal to 0.6.

For example, as shown in FIG. 12, a bending radius on the centerline of the heat exchange tube along the length direction is denoted as r, the width of the heat exchange tube is denoted as d, and a ratio of r to d may be 0.6, 0.8, 1.0, 1.2, 1.4, 1.6, 1.8, 2.0, or more.

It should be noted that when the heat exchange tube is bent, under internal pressure stress, a circular cross-section tends to be elliptical, producing a minor axis and a major axis. Additional stress is generated at the major axis by a bending machine, and greater ellipticity indicates a greater bending angle and a smaller ratio of the bending radius to the width of the heat exchange tube. This results in greater additional stress and even formation of a high-stress region, causing local plastic deformation, and when reaching a certain value, resulting in reduced load-bearing capacity and damage of a bent tube.

In the foregoing implementation, by configuring the ratio of the bending radius on the centerline of the heat exchange tube along the length direction to the width of the heat exchange tube to be greater than or equal to 0.6, bending and stretching of the heat exchange tube is less prone to damage, thereby reducing the probability of damage of the heat exchange tube during bending, improving the structural strength of the heat exchange tube at the bending positions, and improving the sealing performance of the heat exchange tube 1 at the bending positions.

In some examples of the present application, as shown in FIG. 12, a ratio of the bending radius of the heat exchange tube to the width of the heat exchange tube may be greater than or equal to 0.8.

For example, as shown in FIG. 12, the bending radius on the centerline of the heat exchange tube along the length direction is denoted as r, the width of the heat exchange tube is denoted as d, and a ratio of r to d may be 0.8, 1.0, 1.2, 1.4, 1.6, 1.8, 2.0, or more.

In the foregoing implementation, by further limiting the ratio of the bending radius of the heat exchange tube to the width of the heat exchange tube to be greater than or equal to 0.8, the probability of damage of the heat exchange tube after bending can be further reduced, further improving the structural strength of the heat exchange tube at the bending positions and improving the sealing performance of the heat exchange tube at the bending positions.

In some examples of the present application, as shown in FIG. 12, a wall thickness of the heat exchange tube at the bending positions may be greater than or equal to 0.2 mm.

For example, the wall thickness of the heat exchange tube at the bending positions may be 0.2 mm, 0.3 mm, 0.4 mm, or more.

In the foregoing implementation, by configuring the wall thickness of the heat exchange tube at the bending positions to be greater than or equal to 0.2 mm, the wall thickness of the heat exchange tube at the bending positions is not excessively thin, which is conducive to ensuring the strength of the heat exchange tube at the bending positions, thereby effectively lowering the risk of leakage at the bending positions of the heat exchange tube, thereby improving the usage reliability of the heat exchange tube.

In one embodiment of the present application, at a bending position of the heat exchange tube, a bending thinning rate of the wall thickness of the heat exchange tube may be less than or equal to 50%.

A bending thinning rate is equal to a thickness lost by extension of a heat exchange tube divided by an original thickness multiplied by 100%.

For example, the bending thinning rate of the wall thickness of the heat exchange tube may be 2%, 5%, 10%, 20%, 30%, 40%, or 50%.

In the foregoing implementation, by configuring the bending thinning rate of the wall thickness of the heat exchange tube to be less than or equal to 50%, the wall thickness loss of the heat exchange tube can be within a preset range, thereby allowing the wall thickness of the heat exchange tube at the bending positions to not be excessively thin, which is conducive to ensuring the strength of the heat exchange tube at the bending positions, thereby effectively lowering the risk of leakage at the bending positions of the heat exchange tube, thereby improving the usage reliability of the heat exchange tube.

In some examples of the present application, the bending thinning rate of the heat exchange tube may be less than or equal to 30%.

For example, the bending thinning rate of the wall thickness of the heat exchange tube may be 2%, 5%, 10%, 20%, or 30%.

In the foregoing implementation, by configuring the bending thinning rate of the heat exchange tube to be less than or equal to 30%, the wall thickness loss after bending of the heat exchange tube can be further reduced, further improving the strength of the bending position of the heat exchange tube.

In some embodiments of the present application, the heat exchange tube may be a flat tube or a harmonica tube.

It can be understood that in some embodiments, the heat exchange tube is a flat tube, and in other embodiments, the heat exchange tube is a harmonica tube. A flat tube refers to a pipe with a non-circular cross-section of the heat exchange tube along a direction perpendicular to an extension direction thereof, for example, a cross-section thereof is elliptical or rectangular, or the like. A harmonica tube is a type of flat tube.

Specifically, upper and lower surfaces of a flat tube are flat and have large contact area, which can increase the heat transfer area of the heat exchange member 100, thereby increasing the heat exchange effect of the heat exchange member 100, Moreover, a flat tube has relatively light weight under the same bending resistance and torsion resistance. Thus, using a flat tube as the heat exchange tube can also reduce an overall weight of the heat exchange member 100, thereby improving the energy density of the battery 1000.

Further, one heat exchange flow passage may be formed inside a flat tube, or a plurality of heat exchange flow passages may be formed by partitioning members provided inside.

For example, both a flat tube and a harmonica tube may be provided with partitioning ribs inside, the partitioning ribs may extend along the length direction of the flat tube or a harmonica tube and divide the heat exchange flow passage inside the flat tube or the harmonica tube into a plurality of sub-flow channels.

In the foregoing implementation, by configuring the heat exchange tube as a flat tube or a harmonica tube, the heat transfer area of the heat exchange member 100 can be increased, thereby increasing the heat exchange effect of the heat exchange member 100. Moreover, the overall weight of the heat exchange member 100 can also be reduced, thereby improving the energy density of the battery 1000.

In some embodiments of the present application, the heat exchange tube may be an aluminum tube.

In the foregoing implementation, by configuring the heat exchange tube as an aluminum tube with a light weight, low price, and good structural strength, the heat exchange member has low production and processing costs and can better meet lightweight requirements of the battery.

In one embodiment of the present application, as shown in FIG. 12, the wall thickness of the heat exchange tube may be 0.2 mm to 3 mm.

For example, as shown in FIG. 12, the wall thickness of the heat exchange tube is denoted as m, and the wall thickness m of the heat exchange tube may be 0.2 mm, 0.3 mm, 0.4 mm, 0.5 mm, 0.6 mm, 0.8 mm, 1.0 mm, 1.2 mm, 1.5 mm, 1.7 mm, 2 mm, 2.4 mm, 2.6 mm, 2.8 mm, 3 mm, or the like.

In the foregoing implementation, by configuring the wall thickness of the heat exchange tube to be 0.2 mm to 3 mm, the heat exchange tube has an appropriate thickness, allowing the wall thickness of the heat exchange tube to not be excessively small, thereby ensuring the usage strength of the heat exchange tube and effectively lowering the risk of damage of the heat exchange tube; and in addition, it allows the wall thickness of the heat exchange tube to not be excessively large, which is conducive to reducing the overall weight of the heat exchange tube, thereby reducing the overall weight of the battery 1000 and achieving lightweight of the battery 1000.

In one embodiment of the present application, as shown in FIG. 12, the wall thickness of the heat exchange tube may be 0.5 mm to 1.2 mm.

For example, the wall thickness m of the heat exchange tube may be 0.5 mm, 0.6 mm, 0.7 mm, 0.8 mm, 0.9 mm, 1.0 mm, 1.1 mm, or 1.2 mm, or the like.

In the foregoing implementation, by configuring the wall thickness of the heat exchange tube to be 0.5 mm to 1.2 mm, the strength of the heat exchange tube can be ensured while reducing the overall weight of the heat exchange tube, achieving lightweight of the battery 1000.

In one embodiment of the present application, the heat exchange member 100 may include a heat exchange plate, and the heat exchange flow passage may be formed in the heat exchange plate by stamping.

Stamping refers to a forming process in which external force is applied by a press and die to a sheet material, a strip, a tube, a profile, or the like to cause plastic deformation or separation, thereby producing a workpiece (stamped part) with a desired shape and size. In this way, the heat exchange member 100 does not require assembly, which can reduce the number of parts of the heat exchange member 100, reduce assembly steps of the battery 1000, and increase an assembly rate of the battery 1000.

In the foregoing implementation, by stamping and forming the heat exchange flow passage in the heat exchange plate, process steps of the heat exchange member 100 can be reduced, thereby improving the production rate of the heat exchange member 100. Moreover, stamping provides a simple manufacturing process with low material consumption, which further reduces the manufacturing cost of the heat-exchange member 100.

In some examples of the present application, as shown in FIG. 12, a width f of the heat exchange flow passage may be 3 mm to 200 mm.

For example, as shown in FIG. 12, the width f of the heat exchange flow passage may be 3 mm, 5 mm, 6 mm, 8 mm, 12 mm, 15 mm, 16 mm, 18 mm, 21 mm, 23 mm, 24 mm, 26 mm, 28 mm, 30 mm, 60 mm, 90 mm, 120 mm, 150 mm, 180 mm, or 200 mm. The width of the heat exchange flow passage may be designed according to the arrangement of the heat exchange flow passage and the width dimension of the battery cell 2011.

In the foregoing implementation, by configuring the width of the heat exchange flow passage to be 3 mm to 200 mm, the width of the heat exchange flow passage is not excessively large, which is conducive to the arrangement of the heat exchange flow passage and can satisfy the required heat exchange effect of the heat exchange member 100; in addition, it allows the width of the heat exchange flow passage to not be excessively small. In this way, the number of the first heat exchange sections 11 to be arranged can be reduced, thereby reducing overall costs of the heat exchange member 100.

In an example of the present application, as shown in FIG. 12, the width f of the heat exchange flow passage may be 5 mm to 80 mm.

For example, as shown in FIG. 12, the width f of the heat exchange flow passage may be 5 mm, 7 mm, 9 mm, 12 mm, 15 mm, 16 mm, 18 mm, 21 mm, 23 mm, 24 mm, 26 mm, 28 mm, 30 mm, 40 mm, 50 mm, 60 mm, 70 mm, or 80 mm.

In the foregoing implementation, by further limiting the width of the heat exchange flow passage to be between 5 mm and 80 mm, the width of the heat exchange flow passage can better satisfy the arrangement needs of the heat exchange flow passage in the battery 1000 and the required heat exchange effect of the heat exchange member 100.

In some examples of the present application, a height of the heat exchange flow passage in a third direction may be 1 mm to 20 mm.

For example, the third direction may refer to direction Z shown in FIG. 3, and the height of the heat exchange flow passage in the third direction may be 1 mm, 2 mm, 3 mm, 4 mm, 5 mm, 6 mm, 7 mm, 8 mm, 9 mm, 10 mm, 12 mm, 15 mm, 16 mm, 17 mm, 19 mm, 20 mm, or the like.

In the foregoing implementation, by configuring the height of the heat exchange flow passage in the third direction to be 1 mm to 20 mm, the height of the heat exchange member 100 is not excessively small, so that the flow rate of the heat exchange fluid in the heat exchange member 100 can be ensured, thereby ensuring the heat exchange effect of the heat exchange member 100.Moreover, the height of the heat exchange member 100 is not excessively large, which is conducive to reducing occupied space of the heat exchange member 100 and achieving miniaturization of the battery 1000.

In an example of the present application, the height of the heat exchange flow passage in the third direction may be 4 mm to 6 mm.

For example, the height of the heat exchange flow passage in the third direction may be 4 mm, 5 mm, or 6 mm.

In the foregoing implementation, by configuring the height of the heat exchange flow passage in the third direction to be 4 mm to 6 mm, the heat exchange effect of the heat exchange member 100 can be ensured while reducing occupied space of the heat exchange member 100, achieving miniaturization of the battery 1000.

In an example of the present application, as shown in FIG. 4 to FIG. 12, the number of heat exchange flow passages may be 2 to 4.

For example, the number of heat exchange flow passages may be 2, 3, or 4, where the number of heat exchange flow passages may be designed according to actual demands.

In the foregoing implementation, by configuring the number of heat exchange flow passages to be 2 to 4, the length of the single heat exchange flow passage can be reduced, thereby reducing the frictional resistance of the heat exchange flow passage and the pressure drop and improving the heat exchange efficiency of the heat exchange member 100.

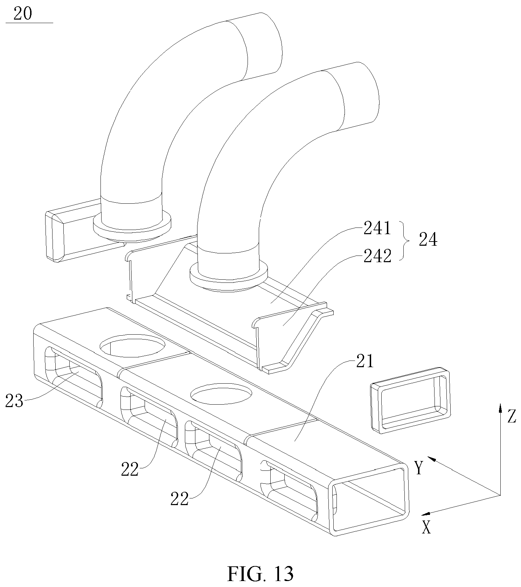

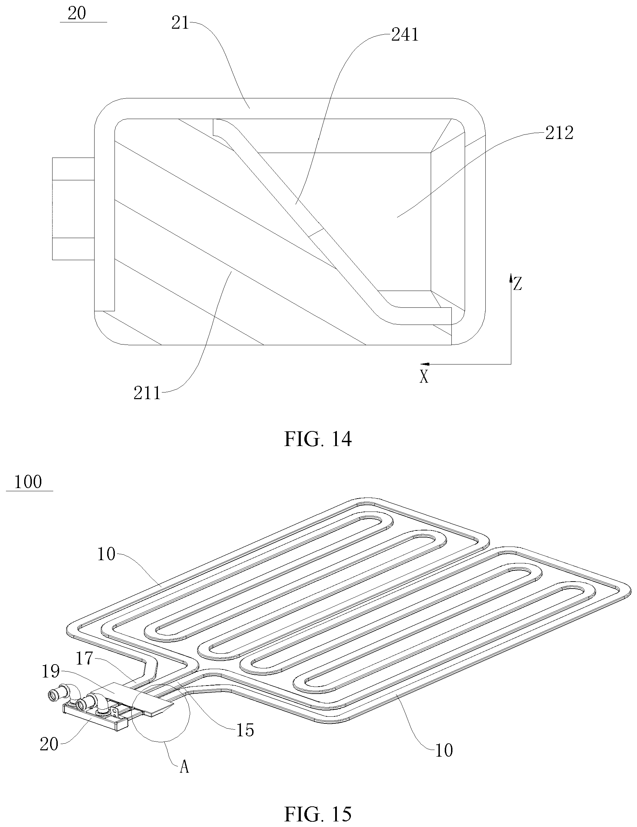

Descriptions of a current collector 20 according to embodiments of the present application will be given below with reference to FIG. 13 and FIG. 14. FIG. 13 is a schematic diagram of a current collector 20 according to an embodiment of the present application; and FIG. 14 is a schematic diagram of a current collector 20 from another perspective according to an embodiment of the present application.

In a specific example of the present application, as shown in FIG. 13 and FIG. 14, a heat exchange member 100 may further include a current collector 20, and the current collector 20 may include a tube body 21, a plurality of first flow channel interfaces 22, a plurality of second flow channel interfaces 23, and a partition structure 24.

The plurality of first flow channel interfaces 22 are in one-to-one correspondence with and connected to first inlets/outlets of a plurality of heat exchange channels; a plurality of second flow channel interfaces 23 are in one-to-one correspondence with and connected to second inlets/outlets of a plurality of heat exchange channels, and along an extension direction of the tube body 21, at least two second flow channel interfaces 23 are respectively located on two sides of the plurality of first flow channel interfaces 22; the partition structure 24 is provided within the tube body 21, the partition structure 24 separates the first flow channel interfaces 22 from the second flow channel interfaces 23 within the tube body 21, and the plurality of second flow channel interfaces 23 communicate within the tube body 21.

Specifically, the tube body 21 may be used for collection and distribution of heat exchange fluid; the first flow channel interfaces 22 and the second flow channel interfaces 23 are provided on the tube body 21, and the first flow channel interfaces 22 and the second flow channel interfaces 23 are respectively connected to the inlets/outlets of the heat exchange flow passages for inputting and outputting the heat exchange fluid into and out of a current collector tube. The partition structure 24 is provided in the tube body 21 and separates the first flow channel interfaces 22 from the second flow channel interfaces 23 within the tube body 21, that is, the first flow channel interfaces 22 and the second flow channel interfaces 23 do not communicate within the tube body 21, thereby allowing the first flow channel interfaces 22 and the second flow channel interfaces 23 to respectively serve as an input end and an output end of the heat exchange flow passages, so that the tube body 21 and heat exchange flow passages can form a complete channel, allowing the heat exchange fluid to enter the heat exchange flow passage from the tube body 21 for heat exchange and then be discharged from the tube body 21, completing heat exchange operations. Therefore, a single tube body 21 can be used for the operations of liquid intake and discharge, so that the number of current collector tubes used and the production costs and occupied space for a thermal management assembly are reduced.

In addition, both the first flow channel interface 22 and the second flow channel interfaces 23 are provided in plurality. For example, the number of first flow channel interfaces 22 and second flow channel interfaces 23 may be two, three, or more. A plurality of second flow channel interfaces 23 communicate within the tube body 21, and along an extension direction of the tube body 21, at least two second flow channel interfaces 23 are respectively located on two sides of the first flow channel interfaces 22, that is, at least two second flow channel interfaces 23 are provided at two ends of the tube body 21, and a plurality of first flow channel interfaces 22 are provided between at least two second flow channel interfaces 23.

Thus, the heat exchange fluid may flow out of the tube body 21 from second flow channel interfaces 23 on two sides and then return to the tube body 21 from first flow channel interfaces 22 in a middle after heat exchange, or heat exchange fluid may flow out of the tube body 21 from first flow channel interfaces 22 in the middle region of the tube 21 and then return to the tube body 21 from second flow channel interfaces 23 at two ends of the tube body 21 after heat exchange. In this way, the heat exchange fluid can flow from peripheries of the battery 1000 toward the middle region for heat exchange, or the heat exchange fluid can flow from the middle region of the battery 1000 toward peripheries for heat exchange, improving the temperature uniformity of the battery 1000, thereby reducing assembly steps and installation space of the thermal management assembly, improving the temperature uniformity effect of the battery 1000, and extending the service life of the battery 1000.

In the foregoing implementation, by providing the current collector 20, using the partition structure 24 to separate the plurality of first flow channel interfaces 22 from the plurality of second flow channel interfaces 23, with the plurality of second flow channel interfaces 23 being communicated within the tube body 21, the first flow channel interfaces 22 and the second flow channel interfaces 23 can be respectively formed as the input end and the output end of the heat exchange flow passages. Accordingly, a single tube body 21 can be used for the operations of liquid intake and discharge, reducing the number of current collector tubes used, and also reducing the use of external communication pipes, so that the production costs and occupied space of a thermal management assembly and the assembly steps and installation space for the thermal management assembly are reduced. In addition, a plurality of second flow channel interfaces 23 are included, and at least two second flow channel interfaces 23 are located on two sides of the first flow channel interfaces 22, so that the heat exchange fluid can flow from peripheries of the battery 1000 toward the middle region for heat exchange or from the middle region of the battery 1000 toward peripheries for heat exchange, thereby improving the temperature uniformity of the battery 1000 and extending the service life of the battery 1000.

Further, as shown in FIG. 13 and FIG. 14, the tube body 21 may be partitioned by the partition structure 24 into a first space 211 and a second space 212 that are independent of each other. The first space 211 communicates with the first flow channel interfaces 22, the second space 212 communicates with the second flow channel interfaces 23. Along an extension direction of the tube body 21, the second space 212 includes a first segment, a second segment, and a third segment that are sequentially connected, the first segment and the third segment are respectively located on two sides of the first space 211, and the second segment is arranged side by side with the first space 211.

Specifically, the first space 211 and the second space 212 may be independent of each other and not communicate with each other, forming two independent flow channels. The second space 212 includes a first segment, a second segment, and a third segment that are sequentially connected. Second flow channel interfaces 23 are provided at positions of both the first segment and the third segment, the second space 212 allows a plurality of second flow channel interfaces 23 to communicate. The first space 211 is arranged side by side with the second segment, and the first space 211 communicates with the first flow channel interfaces 22, thereby providing the first flow channel interfaces 22 between the plurality of second flow channel interfaces 23.

For example, as shown in FIG. 13, there are two first flow channel interfaces 22 and two second flow channel interfaces 23, the two second flow channel interfaces 23 are provided on two sides of the two first flow channel interfaces 22, in a length direction of the tube body 21, the second space 212 is "C"-shaped, and the first space 211 is arranged parallel to the second segment and provided between the first segment and the third segment.

In the foregoing implementation, by arranging the first space 211 and the second space 212 to be independent of each other and not communicate with each other, two independent circulation channels can be formed within the tube body 21, allowing liquid intake and discharge of the heat exchange fluid to not interfere with each other. Moreover, the first space 211 and the second space 212 are arranged side by side, thereby reducing the size of the tube body 21, which in turn reduces space occupation of the current collector tube.

Furthermore, as shown in FIG. 13 and FIG. 14, the partition structure 24 may include a first partition plate 241 and a second partition plate 242. The first partition plate 241 is configured to separate the second segment from the first space 211, at least two second partition plate 242 are included and are respectively located at two ends of the first partition plate 241 along an extension direction of the tube body 21, and the second partition plate 242 is configured to separate the first segment from the first space 211 and separate the third segment from the first space 211.

Specifically, the first partition plate 241 may be formed as a plate of a certain size, the size of the first partition plate 241 may be determined according to a size of the tube body 21 and positions of the first flow channel interfaces 22, the first partition plate 241 extends along the length direction of the tube body 21 (for example, direction Y shown in FIG. 13), two ends of the first partition plate 241 in the width direction are hermetically connected to the inner wall surface of the tube body 21, and in the width direction of the tube body 21 (for example, direction X shown in FIG. 13), the first partition plate 241 is configured to separate the second segment from the first space 211, allowing the second segment and the first space 211 to be arranged side by side in the width direction of the tube body 21.

At least two second partition plates 242 are included, that is, two, three, or more second partition plates 242 may be included. When only two second partition plates 242 are included, the second partition plates 242 are respectively located at two ends of the first partition plate 241 in the length direction and are hermetically connected to the first partition plate 241 and the inner wall surface of the tube body 21, thereby allowing the first space 211 and the second space 212 to be completely independent and not communicate with each other.

In the foregoing implementation, by providing the first partition plate 241 and the second partition plate 242, two independent spaces can be formed within the tube body 21, thereby allowing the inflow and outflow of liquid to not interfere with each other, which in turn improves the heat exchange effect of the battery 1000.

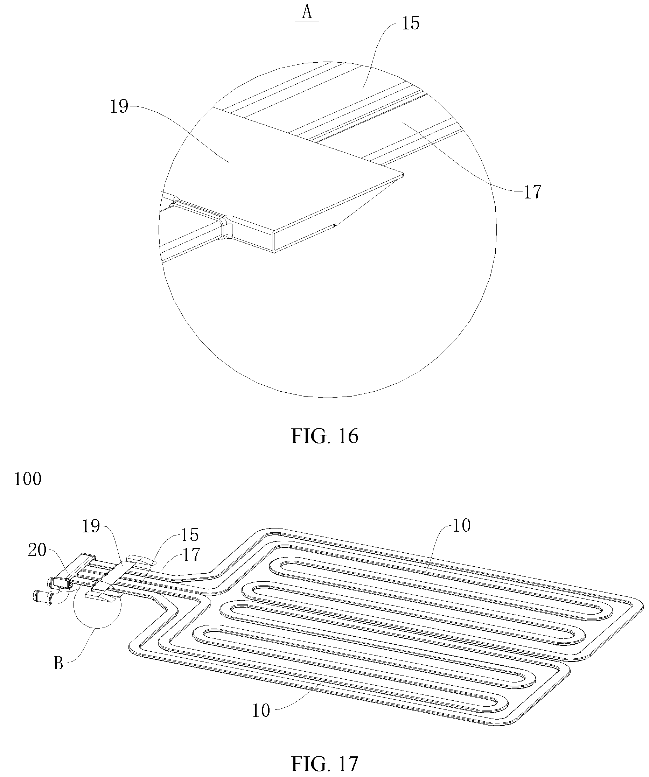

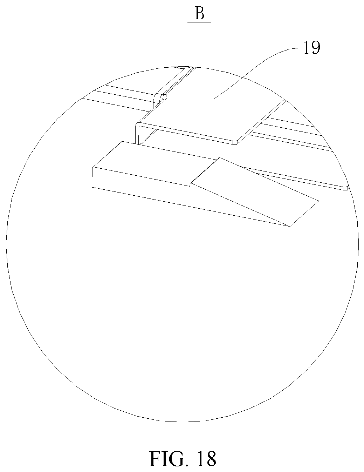

Descriptions of a mounting member 19 according to embodiments of the present application will be given below with reference to FIG. 15 to FIG. 18. FIG. 15 is a schematic diagram of a heat exchange member 100 according to another embodiment of the present application, FIG. 16 is an enlarged view of position A circled in FIG. 15, FIG. 17 is a schematic diagram of a heat exchange member 100 shown in FIG. 15 from another perspective, and FIG. 18 is an enlarged view of position B circled in FIG. 17.

In some embodiments of the present application, as shown in FIG. 15 to FIG. 18, a heat exchange member 100 may further include a first tube portion, a second tube portion, and a mounting member 19. One end of the first tube portion is formed as a first inlet/outlet of a heat exchange flow passage; one end of the second tube portion is formed as a second inlet/outlet of the heat exchange flow passage.

Specifically, the first tube portion and the second tube portion are mainly used for the current collector 20, for providing a heat exchange fluid to the heat exchange flow passage or discharging the heat exchange fluid after heat exchange, allowing a heat exchange member 100 to achieve heat exchange. Both the first inlet/outlet and the second inlet/outlet may be used for intake and discharge of the heat exchange fluid, and when the first inlet/outlet serves as a liquid intake end of the heat exchange fluid, the second inlet/outlet serves as a liquid discharge end of the heat exchange fluid; when the first inlet/outlet serves as a liquid discharge end of the heat exchange fluid, the second inlet/outlet serves as a liquid intake end of the heat exchange fluid.

The mounting member 19 is configured to hermetically connect to the box 300 of the battery 1000, a through hole communicating spaces on two sides of the mounting member 19 is formed on the mounting member 19, and the first tube portion and/or the second tube portion passes through the through hole and is hermetically connected to a periphery of the through hole. That is, at least one of the first tube portion and the second tube portion passes through the through hole and is hermetically connected to the through hole.

Specifically, spaces on two sides of the mounting member 19 are respectively a space for placing the heat exchange member 100 and a space where the first inlet/outlet and the second inlet/outlet are connected to external pipes, where the mounting member 19 is configured to be hermetically connected to the box 300 of the battery 1000, thereby allowing spaces on two sides of the mounting member 19 to be independent of each other. Accordingly, when leakage occurs at the connection between the first inlet/outlet and the second inlet/outlet and the current collector 20, the heat exchange fluid is prevented from entering the space for placing the heat exchange member 100, thereby effectively lowering the risk of corrosion of the heat exchange member 100.

In the prior art, to reduce a risk of corrosion of the heat exchange member 100, gaps between a first pipeline and a second pipeline and the box 300 are usually sealed. However, doing so requires a large amount of structural sealant and considerable manual labor, thereby causing low production efficiency of the battery 1000 and high production costs.

In the foregoing implementation, after the mounting member 19 is sealed with the first pipeline and the second pipeline, the mounting member 19 is then sealed with the box 300, which not only increases structural strength at positions with the first pipeline and the second pipeline, but also reduces manual labor and materials required for sealing, thereby increasing the production rate of the battery 1000 and reducing labor costs for producing the battery 1000.

In the foregoing implementation, by providing the mounting member 19, separate sealing of the first tube portion and the second tube portion with the box 300 is not required during assembly of the battery 1000, which can reduce manual labor and materials required for assembly of the battery 1000, thereby increasing the production rate of the battery 1000 and reducing labor costs for producing the battery 1000.

Further, as shown in FIG. 16 and FIG. 18, the mounting member 19 may have a cavity open on one side. The mounting member 19 has a mounting plate disposed opposite to an opening of the cavity, and a through hole extends through the mounting plate. The mounting member 19 is adapted to be provided between a bottom plate of the box 300 and a bottom guard plate 302, and the outer peripheral surface of the mounting member 19 is adapted to be hermetically connected to the bottom plate and the bottom guard plate 302.

The mounting member 19 has a cavity open on one side, and the open side of the mounting member 19 may face toward one side of the space where the first inlet/outlet and the second inlet/outlet are located, or may face away from one side of the space where the first inlet/outlet and the second inlet/outlet are located.

Further, the open side of the mounting member 19 faces away from one side of the space where the first inlet/outlet and the second inlet/outlet are located. For example, the opening of the cavity is provided facing away from the current collector 20, which can effectively prevent accumulation of dust and other impurities in the mounting member 19.

The mounting member 19 is adapted to be provided between the box body 301 and the bottom guard plate 302, which means that the heat exchange member 100 may be disposed between the bottom plate of the box 300 and the guard plate, that is, the heat exchange member 100 is disposed on the outer side of the box body 301. In this way, damage to battery cells 2011 caused by leakage of the heat exchange member 100 can be effectively reduced. In addition, the bottom guard plate 302 is provided on the lower side of the box body 301, which can further increase the structural strength of the bottom of the battery 1000, increase the load-bearing strength of the bottom plate, and also protect against bottom impact, effectively reducing safety problems of a plurality of battery cells 2011 and the heat exchange member 100 caused by bottom impact.

The outer peripheral surface of the mounting member 19 is adapted to be hermetically connected to the bottom plate and the bottom guard plate 302. It should be noted that the outer peripheral surface of the mounting member 19 may be designed according to specific structures of the bottom plate and the bottom guard plate 302. For example, both the bottom plate and the bottom guard plate 302 are flat plates, and the outer peripheral surface of the mounting member 19 is also formed in a flat plate shape, allowing it to be hermetically connected to the bottom plate and the bottom guard plate 302, increasing sealing between the bottom plate and the bottom guard plate 302.

For example, as shown in FIG. 16 and FIG. 18, the mounting member 19 may include a first plate, a second plate, and a mounting plate. the mounting plate is disposed vertically, the first plate is disposed horizontally and connected to one end of the mounting plate in the direction Z, the second plate is disposed horizontally and connected to the other end of the mounting plate in the direction Z, and the first plate and the second plate are located on the same side of the mounting plate in the thickness direction and spaced apart in the direction Z. A plurality of through holes are formed on the mounting plate, the plurality of through holes are respectively a first through hole and a second through hole. The first tube portion extends through the first through hole, and the second tube portion extends through the second through hole.

Further, the first tube portion is welded to the periphery of the first through hole, and the second tube portion is welded to the periphery of the second through hole.

Further, the number of first through holes is one or more, and the first through holes correspond one-to-one to the first tube portions. The number of second through holes is one or more, and the second through holes correspond one-to-one to the second tube portions.

Further, one end of the first plate is connected to the mounting plate and the other end extends toward the first heat exchange section 11, one end of the second plate is connected to the mounting plate and the other end extends toward the first heat exchange section 11. Further, in a direction from the mounting member 19 toward the first heat exchange section 11, the length of the first plate is different from the length of the second plate, for example, the length of the first plate is less than the length of the second plate. Specifically, the length of the first plate is less than two-thirds of the length of the second plate.

Further, the first plate, the second plate, and the mounting plate are integrally formed.

Further, the mounting member 19 further includes stoppers disposed at two ends of the mounting plate in the length direction, and the stoppers are hermetically connected to all of the mounting plate, the first plate, and the second plate, for example, the stoppers may be welded or adhesively connected to the mounting plate, the first plate, and the second plate. The mounting plate, the first plate, the second plate, and two stoppers enclose a cavity.

A surface of the stoppers facing away from the mounting plate is formed as an inclined surface, the length of the first plate is less than the length of the second plate, one end of the inclined surface toward the first plate is flush with one end of the first plate facing away from the mounting plate, and in a direction from the first plate toward the second plate, the other end of the inclined surface extends obliquely to one end of the second plate facing away from the mounting plate.

In addition, it should also be noted that a seal is provided around a periphery of the heat exchange member 100, the seal extends circumferentially along the heat exchange member 100, and the seal extends into an annular shape. Or after the seal surrounds the heat exchange member 100, two ends of the seal are connected to the mounting member 19. The seal may be a sealant.

In the foregoing implementation, by arranging the mounting member 19 as a cavity open on one side, the overall weight of the mounting member 19 can be reduced, thereby reducing the overall weight of the entire battery 1000, achieving lightweight of the battery 1000. Moreover, the mounting member 19 is adapted to be provided between the bottom plate of the box 300 and the bottom guard plate 302, such that the bottom plate can isolate the heat exchange member 100 from a plurality of battery cells 2011. Thus, when damage occurs to the heat exchange member 100, the plurality of battery cells 2011 are not affected, thereby reducing maintenance costs of the battery 1000.

In some embodiments of the present application, as shown in FIG. 22, the first heat exchange portion 111 extends along the second direction.

It should be noted that in this embodiment, the first heat exchange portion 111, the third heat exchange portion 122, and the fourth heat exchange portion 125 may all extend along the second direction, and the second heat exchange portion 121 extends along the first direction, allowing the plurality of first heat exchange portions 111 connected to form an S-shaped heat exchange flow passage extending along the first direction.

For example, as shown in FIG. 22, the second direction is the length direction of the battery cell 2011, that is, the direction Y shown in FIG. 22, thereby allowing the first heat exchange portion 111 to extend along the length direction of the battery cell 2011 and exchange heat with the battery cell 2011, which can enlarge the heat exchange area between the first heat exchange portion 111 and the battery cell 2011, thereby increasing the heat exchange effect of the battery cell 2011.

In the foregoing implementation, by arranging the first heat exchange portion 111 to extend along the second direction, diversity in the arrangement of the first heat exchange flow passages 10 can be increased, thereby increasing the adaptability of the heat exchange member 100 to allow it to satisfy the cooling demands of different batteries 1000.

In some specific embodiments of the present application, the first heat exchange portion 111 extends along the first direction.

It can be understood that extension directions of the first heat exchange portion 111 and the second heat exchange portion 121 are the same, and the first heat exchange portion 111 and the second heat exchange portion 121 are parallel and spaced apart.

For example, as shown in FIG. 24, the first direction is the thickness direction of the battery cell 2011, that is, the direction X shown in FIG. 24, and in this case, both the first heat exchange portion 111 and the second heat exchange portion 121 can exchange heat with a plurality of battery cells 2011, which is conducive to reducing the number of first heat exchange portions 111, reducing the number of bends of the first heat exchange flow passage 10, reducing the pressure drop of the heat exchange fluid in the first heat exchange flow passage 10, and improving the heat exchange efficiency.

In the foregoing implementation, by arranging the first heat exchange portion 111 to extend along the first direction, the number of first heat exchange portions 111 can be reduced, thereby reducing the number of bends of the first heat exchange flow passage 10, reducing the pressure drop of the heat exchange fluid in the first heat exchange flow passage 10, and improving the heat exchange efficiency.

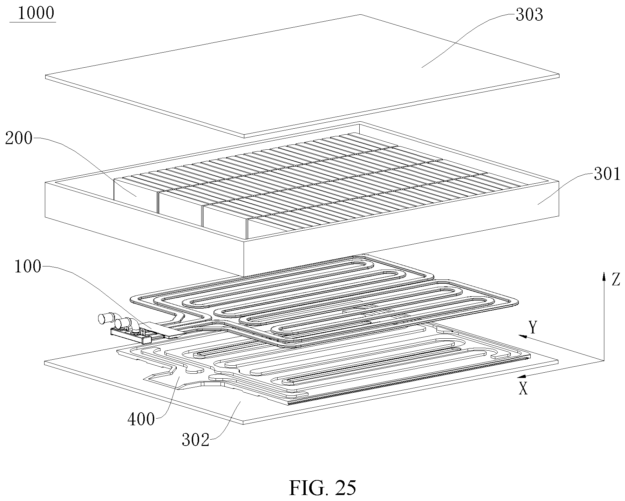

In some embodiments of the present application, as shown in FIG. 25, a battery 1000 may further include a box 300, the box 300 including a box body 301. The box body 301 is an integrally stamped member and includes a bottom wall and a surrounding wall, and the battery assembly 200 is disposed within the box body 301.

Specifically, a receiving cavity open on one side is formed inside the box body 401, a plurality of battery cells 2011 are disposed within the receiving cavity, the box body 401 provides installation space for the plurality of battery cells 2011, and the plurality of battery cells 2011 are core components of the battery 1000, mainly used for storing and releasing energy.

Stamping refers to a forming process in which external force is applied by a press and die to a sheet material, a strip, a tube, a profile, or the like to cause plastic deformation or separation, thereby producing a workpiece (stamped part) with a desired shape and size. Stamping can produce parts with thin walls, light weight, high rigidity, high surface quality, and complex shapes that are difficult or impossible to achieve with other manufacturing methods. It also offers advantages such as high material utilization, ease of operation, and low production costs.

The shape and size of the box body 301 may be reasonably designed according to usage needs of the battery 1000. The box body 301 may be integrally stamped using a stamping part. The box body 301 includes a bottom wall and a surrounding wall. Specifically, the box body 301 may include a frame extending circumferentially along the box body 301 into an annular shape and a bottom plate, the frame and the bottom plate may cooperate to form a receiving cavity of the box body 301, and a battery assembly 200 may be disposed in the receiving cavity of the box body 301, where one side surface of the bottom plate toward the battery assembly 200 may be formed as the bottom wall of the box body 301, a peripheral side surface of the frame toward the battery assembly 200 is formed as the surrounding wall of the box body 301, the surrounding wall may be formed by cooperation of a plurality of side walls of a receiving cavity, and the bottom wall may extend along a plane where the first direction and the second direction are located.

Optionally, the box 300 further includes a cover plate 303, the cover plate 303 is formed as a flat plate disposed horizontally, and the cover plate 303 is provided on one side of the box 300 facing away from the bottom wall for sealing the box 300.

Optionally, the cover plate 303 may be a carbon steel plate, an aluminum plate, or a composite material plate.

In the foregoing implementation, by providing the box body 301 as an integrally stamped member, process steps of the box 300 can be reduced, reducing the production costs of the box 300. In addition, the overall weight of the box 300 can be reduced while ensuring rigidity of the box 300, thereby decreasing the overall weight of the battery 1000 and reducing the load of the vehicle 1.

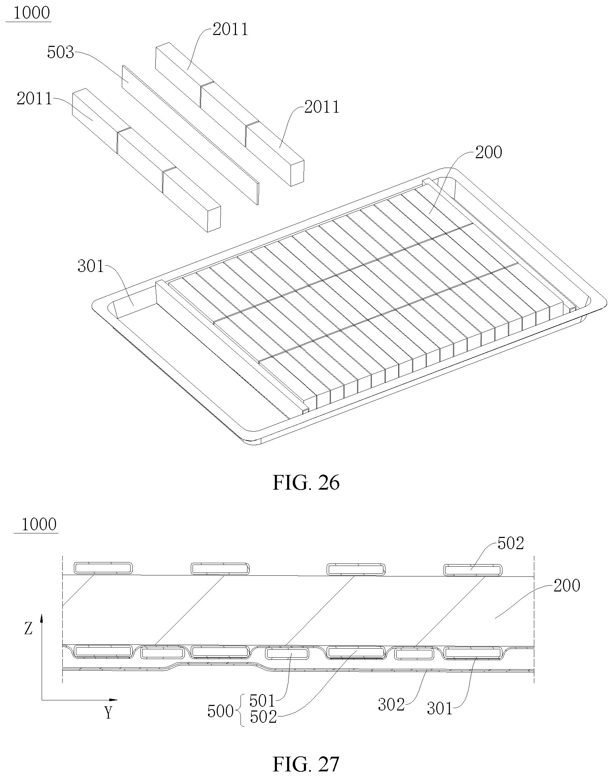

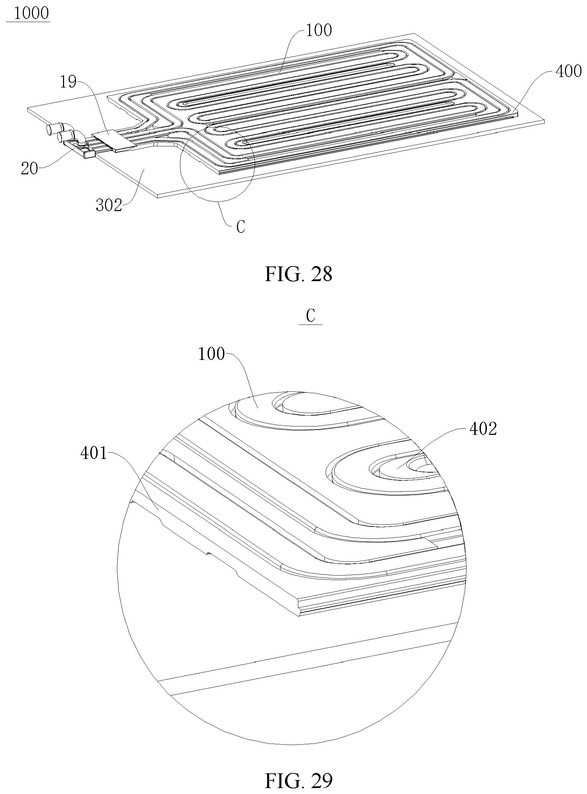

As shown in FIG. 25 to FIG. 29, FIG. 25 is an exploded view of the battery 1000 according to still another embodiment of the present application; FIG. 26 is a partial schematic diagram of the battery 1000 according to yet another embodiment of the present application; FIG. 27 is a partial cross-sectional view of the battery 1000 according to another alternative embodiment of the present application; FIG. 28 is a partial schematic diagram of the battery 1000 shown in FIG. 25; and FIG. 29 is an enlarged view of position C circled in FIG. 28.

The box 300 may further include a bottom guard plate 302, the bottom guard plate 302 is provided on the lower side of the box body 301, and the heat exchange member 100 is provided between the box body 301 and the bottom guard plate 302. The battery 1000 may further include a foaming member 400, and at least part of the foaming member 400 is filled in gaps formed by bending of heat exchange tubes of the heat exchange member 100.

In the foregoing implementation, by providing the bottom guard plate 302 and arranging the bottom guard plate 302 on the lower side of the box body 301, the bottom guard plate 302 may be hermetically connected to the bottom plate of the box body 301, and the bottom guard plate 302 may be detachably connected and fixed to the box body 301. The heat exchange member 100 is provided between the box body 301 and the bottom guard plate 302, and the heat exchange member 100 may abut against and be in contact with the outer surface of the lower side surface of the bottom plate of the box body 301 to perform heat exchange operations on the battery assembly 200 in the box body 301.

The foaming member 400 may be partially filled in gaps formed by bending of the heat exchange tubes of the heat exchange member 100, or may be fully filled in gaps formed by bending of the heat exchange tubes of the heat exchange member 100. Gaps formed by bending of the heat exchange tubes of the heat exchange member 100 mainly include gaps between a plurality of first heat exchange portions 111 in the first heat exchange section 11, gaps between the first heat exchange section 11 and the second heat exchange section 12, gaps between the first heat exchange section 11 and the third heat exchange section 13, gaps between the first inlet/outlet section 15 and the second inlet/outlet section 17, and the like.

Further, when the heat exchange tubes of the heat exchange member 100 are provided in plurality, the foaming member 400 may also be filled in gaps between adjacent heat exchange tubes.

Further, part of the foaming member 400 may also be filled on the circumferential outer side of the heat exchange member 100.

Specifically, the foaming member 400 is a part formed by foaming a foaming material, where the part formed by foaming has a honeycomb or porous structure, so that when a battery 1000 is subjected to external impact, the porous structure of the foaming member 400 can absorb certain impact energy, thereby further reducing the probability of damage to the heat exchange member 100.

Optionally, the foaming member 400 may be molded by forming in a foaming mold. In this case, the foaming member 400 may be integrally formed with the bottom guard plate 302 or with the box body 301 by foaming in the foaming mold, so that the foaming member 400 can be integrally molded with the bottom guard plate 302 or the box body 301, thereby reducing the number of components, reducing assembly steps, improving assembly efficiency, and enhancing the connection reliability between the foaming member 400 and the bottom guard plate 302 or the box body 301. In addition, the foaming member 400 may also be directly formed by forming in the box 300. Specifically, a foaming material may be directly filled between the bottom guard plate 302, the heat exchange member 100, and the box body 301, allowing it to be formed in gaps between the bottom guard plate 302, the heat exchange member 100, and the box body 301.

In the foregoing implementation, by providing the foaming member 400 and filling at least part of the foaming member 400 in gaps formed in bending of the heat exchange tubes of the heat exchange member 100, the heat exchange member 100 can be fixed to some extent, allowing the heat exchange member 100 to be more stably disposed between the bottom guard plate 302 and a bottom wall of the box body 301. Moreover, when the battery 1000 is subjected to external impact, the foaming member 400 can also absorb certain impact energy, providing certain protection to the heat exchange member 100, which can further reduce the probability of damage to the heat exchange member 100.

In some examples of the present application, as shown in FIG. 25, FIG. 28, and FIG. 29, the foaming member 400 may include a main body 401 and a plurality of ribs 402. The plurality of ribs 402 are formed on one side surface of the main body 401 in the thickness direction. The plurality of ribs 402 cooperate with the main body 401 to define receiving grooves, the heat exchange tubes are disposed in the receiving grooves, and the thickness of the heat exchange tube is greater than the depth of the receiving groove.

The foaming member 400 is formed with a plurality of ribs 402, and the plurality of ribs 402 cooperate with the main body 401 to form receiving grooves. The shapes of the receiving grooves may be adapted to the arrangement of the heat exchange tubes. Two, three, four, or more ribs 402 may be provided, and the number and direction of ribs 402 may be correspondingly set according to an arrangement form of the heat exchange tubes. In this embodiment, the thickness of the heat exchange tube is greater than the depth of the receiving groove, and after the heat exchange tube and the foaming member 400 are assembled, one side of the heat exchange tube in the thickness direction extends beyond the receiving groove and ribs 402, and when the heat exchange member 100 is assembled with the bottom guard plate 302, the foaming member 400, and the box body 301, ribs 402 of the foaming member 400 may have a certain gap with the outer side surface of a bottom plate of the box body 301, and the heat exchange tube may abut against the outer side surface of the bottom plate of the box body 301.

In the foregoing implementation, by configuring the thickness of the heat exchange tube to be greater than the depth of the receiving groove, the heat exchange tube can well abut and be assembled with the box body 301 during assembly, thereby allowing the heat exchange tube to well exchange heat with the battery assembly 200 in the box body 301.

In some examples of the present application, as shown in FIG. 26, a thermal management system of the battery 1000 further includes a third temperature regulation member 503. The third temperature regulation member 503 is provided in the box 300 and located between two adjacent battery cells 2011, and the structure of the third temperature regulation member 503 is the same as or different from the structure of the heat exchange member 100.

With the third temperature regulation member 503 provided and arranged between two adjacent battery cells 2011, when the third heat exchange member 100 performs heat exchange operations with battery cells 2011, heat in the battery cells 2011 may be transferred from the housing of battery cells 2011 to the third temperature regulation member 503, or the third temperature regulation member 503 may transfer heat to the battery cells 2011 through the housing. The structure of the third heat exchange member 100 may be the same as the structure of the heat exchange member 100, or the structure of the third heat exchange member 100 may be different from the structure of the heat exchange member 100, and the structure of the third heat exchange member 100 may be reasonably designed according to the heat exchange demands.

In the foregoing implementation, by arranging the third temperature regulation member 503 between adjacent battery cells 2011, battery cells 2011 in the battery assembly 200 can obtain a better heat exchange effect, thereby allowing the thermal management system of the battery 1000 to better regulate the temperature in the battery 1000 and the battery 1000 to operate more stably.

In one embodiment of the present application, as shown in FIG. 27, a thermal management system of the battery 1000 may include a temperature regulation member 500. The temperature regulation member 500 includes at least one of a first temperature regulation member 501 and a second temperature regulation member 502, the first temperature regulation member 501 is provided outside the box body 301 and is in contact with an outer wall of the box body 301; the second temperature regulation member 502 is provided in the box 300 and located between any side of the outer peripheral surface of a battery cell 2011 and the box 300; and at least one of the first temperature regulation member 501 and the second temperature regulation member 502 forms the heat exchange member 100.

The thermal management system of the battery 1000 sets the temperature regulation member 500 to regulate the temperature in the battery 1000. The temperature regulation member 500 may include a first temperature regulation member 501 or a second temperature regulation member 502, or both a first temperature regulation member 501 and a second temperature regulation member 502. The first temperature regulation member 501 and the second temperature regulation member 502 provided in the battery 1000 may be reasonably arranged according to the usage needs of the thermal management system of the battery 1000 and operation needs of the battery 1000. The number of first temperature regulation members 501 may be reasonably set as required, and the number of second temperature regulation members 502 may also be set as required.

The first temperature regulation member 501 is provided outside the box body 301 and is in contact with an outer wall of the box body 301. By way of example, the first temperature regulation member 501 may be disposed on one side of the battery assembly 200 in the third direction. Specifically, the first temperature regulation member 501 may be in contact with the outer wall of the bottom plate having the bottom wall of the box body 301, and when the first temperature regulation member 501 performs heat exchange with the battery assembly 200, the first temperature regulation member 501 may exchange heat with the battery assembly 200 in the box body 301 through the box body 301. The second temperature regulation member 502 in the embodiments is provided in the box 300 and located between the box 300 and any side of the outer peripheral surface of the battery cell 2011. For example, the position at which the second temperature regulation member 502 is disposed may be the same as the position at which the first temperature regulation member 501 is disposed. The second temperature regulation member 502 may alternatively be disposed between a battery assembly 200 and the bottom wall, between any one or more side walls of the surrounding wall and a battery assembly 200, or between one side of a battery assembly 200 facing away from the bottom wall and the box 300.

At least one of the first temperature regulation member 501 and the second temperature regulation member 502 may form the heat exchange member 100. For example, when the thermal management system of the battery 1000 is provided with the first temperature regulation member 501 but not the second temperature regulation member 502, the first temperature regulation member 501 may be formed as the heat exchange member 100. When the thermal management system of the battery 1000 is provided with the second temperature regulation member 502 but not the first temperature regulation member 501, the second temperature regulation member 502 may be formed as the heat exchange member 100. When the thermal management system of the battery 1000 is provided with the first temperature regulation member 501 and the second temperature regulation member 502, one or both of the first temperature regulation member 501 and the second temperature regulation member may be formed as the heat exchange member 100.

In the embodiments, the first temperature regulation member 501 is disposed outside the box body 301, which can reduce space occupation of the first temperature regulation member 501 in the box body 301. This allows more convenient arrangement of the battery assembly 200 in the box body 301 and mitigates adverse effects of the first temperature regulation member 501 on the operating environment of the battery assembly 200 in the box body 301, enabling the battery assembly 200 to operate more stably and reliably, so that the battery 1000 can operate more stably and reliably to some extent. In the embodiments, the second temperature regulation member 502 is arranged between the box 300 and a battery assembly 200, which allows heat transfer to be more direct and efficient when the second temperature regulation member 502 performs heat exchange with the battery assembly 200, so that the second temperature regulation member 502 can better exchange heat with the battery assembly 200, allowing the second temperature regulation member 502 to better perform temperature regulation operations and thereby enabling more stable operation of the battery 1000.

In the foregoing implementation, at least one of the first temperature regulation member 501 and the second temperature regulation member 502 is formed as a heat exchange member 100, which allows the thermal management system of the battery 1000 to better perform thermal management on the battery 1000, so that the battery assembly 200 can operate in a good temperature environment during operation of the battery 1000, thereby allowing the battery 1000 to operate more stably and achieve better performance.

In a second aspect, embodiments of the present application provide an electric apparatus, including the battery 1000 according to embodiments of the first aspect of the present application.

Other components and operations of the battery 1000 according to the embodiments of the present application are known to those of ordinary skill in the art and are not described in detail herein.

In the electric apparatus according to the present application, the battery 1000 according to the embodiments of the first aspect is provided. By bringing at least two flow channel portions into contact with one battery cell 2011 for heat exchange, not only can the heat exchange area between a battery unit 201 and a heat exchange tube be increased to improve the heat exchange effect on the battery unit 201, but the temperature at which the heat exchange occurs between the heat exchange tube and the battery unit 201 can be approximately an average temperature of two or more flow channel portions. In this way, the temperature difference in heat exchange among different battery units 201 can be reduced, achieving a better uniform-temperature heat exchange effect. As a result, the temperature distribution inside the battery assembly 200 becomes more uniform, enabling the battery 1000 to operate more stably while maintaining good performance.

Ten specific examples of an electric apparatus according to the present application will be described below with reference to FIG. 2 to FIG. 29.

### Example 1

Referring to FIG. 24, a battery 1000 includes a battery assembly 200, a heat exchange member 100, a box 300, and a foaming member 400. Specifically, the box 300 includes a box body 401 and a bottom guard plate 302, where the battery assembly 200 is disposed within the box body 401, and a heat exchange member 100 is provided between the box body 401 and the bottom guard plate 302.

Specifically, as shown in FIG. 5 and FIG. 19, a battery assembly 200 includes four battery units 201, where each battery unit 201 includes a plurality of battery cells 2011, the plurality of battery cells 2011 are stacked along the thickness direction of the battery cells 2011, and four battery units 201 are arranged side by side along the length direction of the battery cells 2011. The thickness direction of the battery cells 2011 is the direction X, and the length direction of the battery cells 2011 is the direction Y. In addition, two groups of battery cells located at two ends of a battery assembly 200X are respectively the third group of battery cells 204 and the second group of battery cells 203, a group of battery cells adjacent to the third group of battery cells 204 is the fifth group of battery cells 206, and two groups of battery cells located at two ends of a battery assembly 200Y are both the first group of battery cells 202.

The heat exchange member 100 includes two heat exchange tubes, each heat exchange tube defines a first heat exchange flow passage 10, two first heat exchange flow passages 10 are spaced apart along the direction Y and symmetrically arranged along the center of the battery assembly 200 in the direction X, and each first heat exchange flow passage 10 includes: three first heat exchange portions 111, one second heat exchange portion 121, one third heat exchange portion 122, one fourth heat exchange portion 125, and one third heat exchange section 13. The fourth heat exchange portion 125, the second heat exchange portion 121, and the third heat exchange portion 122 are sequentially connected to form a U-shaped structure, and three first heat exchange portions 111 are disposed in a bent manner within a U-shaped structure.

Specifically, both the second heat exchange portion 121 and the first heat exchange portions 111 extend linearly along the direction X and are spaced apart along the direction Y, and the second heat exchange portion 121 is disposed on one side of the first heat exchange portions 111 close to an edge position of the battery 1000 in the direction Y; both the third heat exchange portion 122, the fourth heat exchange portion 125, and the third heat exchange section 13 extend linearly along the direction Y, the third heat exchange portion 122 is disposed on one side of three first heat exchange portions 111 close to the origin of the coordinate system in the direction X and connected to one end of the second heat exchange portion 121 close to the origin of the coordinate system in the direction X and one end of the first heat exchange portion 111 farthest from the second heat exchange portion 121 close to the origin of the coordinate system in the direction X, the fourth heat exchange portion 125 is disposed on one side of three first heat exchange portions 111 away from the origin of the coordinate system in the direction X and connected to one end of the second heat exchange portion 121 away from the origin of the coordinate system in the direction X, and the third heat exchange section 13 is disposed on one side of a plurality of first heat exchange portions 111 away from the origin of the coordinate system in the direction X and one end of the third heat exchange section 13 is connected to one end of a first heat exchange portion 111 closest to the second heat exchange portion 121 away from the origin of the coordinate system in the direction X.

Further, the second heat exchange portion 121 and a first heat exchange portion 111 closest to the second heat exchange portion 121 exchange heat with the first group of battery cells 202, the third heat exchange portion 122 exchanges heat with the second group of battery cells 203, the third heat exchange section 13 exchanges heat with the third group of battery cells 204, and the fourth heat exchange portion 125 is disposed outside the battery assembly 200.

As shown in FIG. 19, taking a first heat exchange flow passage 10 disposed on one side away from the origin of the coordinate system in the direction Y as an example, the second heat exchange portion 121 and the first heat exchange portion 111a, the first heat exchange portion 111b, and the first heat exchange portion 111c extend linearly along the direction X and are sequentially arranged from one side away from the origin of the coordinate system in the direction Y to one side close to the origin of the coordinate system, the first heat exchange portion 111a, the first heat exchange portion 111b, and the first heat exchange portion 111c are sequentially connected, and the second heat exchange portion 121 and the first heat exchange portion 111a exchange heat with the first group of battery cells 202, and the first heat exchange portion 111b and the first heat exchange portion 111c exchange heat with a battery unit 201 adjacent to the first group of battery cells 202; the third heat exchange portion 122 extends linearly along the direction Y and is connected between one end of the second heat exchange portion 121 close to the origin of the coordinate system in the direction X and the first heat exchange portion 111c, for heat exchange with the second group of battery cells 203; the fourth heat exchange portion 125 is connected to one end of the second heat exchange portion 121 away from the origin of the coordinate system in the direction X and extends along the length direction of the battery cell 2011 to a position close to the first heat exchange portion 111c; the third heat exchange section 13 is connected to one end of the first heat exchange portion 111a away from the origin of the coordinate system in the direction X and extends along a length direction of a battery cell 2011 to a position close to the first heat exchange portion 111c, and exchanges heat with the third group of battery cells 204.

In heating and maintaining the temperature of a battery assembly 20, the flow direction of the first heat exchange flow passage 10 is sequentially the fourth heat exchange portion 125, the second heat exchange portion 121, the third heat exchange portion 122, the first heat exchange portion 111c, the first heat exchange portion 111b, the first heat exchange portion 111a, and the third heat exchange section 13. When cooling a battery assembly 200, the flow direction of the first heat exchange flow passage 10 is sequentially the third heat exchange section 13, the first heat exchange portion 111a, the first heat exchange portion 111b, the first heat exchange portion 111c, the third heat exchange portion 122, the second heat exchange portion 121, and the fourth heat exchange portion 125.

Further, the heat exchange tube is formed by bending a single heat exchange tube into shape, where the connections between the fourth heat exchange portion 125 and the second heat exchange portion 121, between the second heat exchange portion 121 and the third heat exchange portion 122, between the third heat exchange portion 122 and the first heat exchange portion 111, and between the first heat exchange portion 111 and the third heat exchange section 13 are all 90° circle-arc bends, and the connection between a plurality of first heat exchange portions 111 are all 180° circle-arc bends.

In addition, two ends of a heat exchange tube are respectively formed as a first tube portion and a second tube portion, the first tube portion and the second tube portion respectively serve as a water inlet section and a water outlet section of the heat exchange flow passage, where one end of the first tube portion is connected to the first flow channel interface 22 of the current collector 20 to form the first inlet/outlet of bendably connected heat exchange flow passage, and the other end is connected in a bent manner to the fourth heat exchange portion 125; and one end of the second tube portion is connected to the second flow channel interface 23 of the current collector 20 to form the second inlet/outlet of the heat exchange flow passage, and the other end is connected in a bent manner to the third heat exchange section 13.

The heat exchange member 100 further includes a current collector 20 and a mounting member 19. The current collector includes a tube body 21, a first flow channel interface 22, a second flow channel interface 23, and a partition structure 24. Specifically, the tube body 21 is a rectangular tube open at two ends, the first flow channel interface 22 and the second flow channel interface 23 are provided on the same side of the tube body 21, there are two first flow channel interfaces 22 and two second flow channel interfaces 23, and two second flow channel interfaces 23 are provided on two sides of the first flow channel interfaces 22. The partition structure 24 is provided within the tube body 21, and the partition structure 24 partitions the tube body 21 into a first space 211 and a second space 212 that are independent of each other, the first space 211 communicates with two first flow channel interfaces 22, and the second space 212 communicates with two second flow channel interfaces 23. Along the length direction of the tube body 21, the second space 212 includes a first segment, a second segment, and a third segment that are sequentially connected, a lateral cross-section of the second space 212 is formed as a "C" shape, the first segment and the third segment are respectively located on two sides of the first space 211, and the second segment is arranged side by side with the first space 211.

A mounting member 19 is configured to be hermetically connected to the box 300 of the battery 1000, a through hole communicating spaces on two sides of the mounting member 19 is formed on the mounting member 19, and the first tube portion and the second tube portion pass through the through hole and is hermetically connected to a periphery of the through hole.

A foaming member 400 includes a main body 401 and a plurality of ribs 402. The plurality of ribs 402 are formed on one side surface of the main body 401 in the thickness direction facing toward the box 300. The plurality of ribs 402 cooperate with the main body 401 to define receiving grooves, the heat exchange tubes are disposed in the receiving grooves, the plurality of ribs 402 are filled in gaps formed by bending of the heat exchange tubes of the heat exchange member 100, and the thickness of the heat exchange tube is greater than the depth of the receiving groove.

In the battery 1000 according to the embodiments of the present application, a heat exchange member 100 according to the embodiments of the first aspect is provided. By bringing at least two flow channel portions into contact with one battery cell 2011 for heat exchange, not only can the heat exchange area between a battery unit 201 and a heat exchange tube be enlarged to improve the heat exchange effect on the battery unit 201, but the temperature at which the heat exchange occurs between the heat exchange tube and the battery unit 201 can be approximately an average temperature of two or more flow channel portions. In this way, the temperature difference in heat exchange among different battery units 201 can be reduced, achieving a better uniform-temperature heat exchange effect. As a result, the temperature distribution within the battery assembly 200 becomes more uniform, enabling the battery 1000 to operate more stably while maintaining good performance.

### Example 2

Referring to FIG. 4, the structure of this example is substantially the same as the structure of Example 1, where the same parts use the same reference numerals, and the only difference is that: the battery assembly 200 in Example 1 is provided with four battery units 201, each heat exchange tube respectively exchanges heat with two battery units 201, while the battery assembly 200 in Example 2 is provided with two battery units 201, and two heat exchange tubes are arranged in one-to-one correspondence with two battery units 201.

### Example 3

Referring to FIG. 19, the structure of this example is substantially the same as the structure of Example 1, where the same parts use the same reference numerals, and the only difference is that: the fourth heat exchange portion 125 in Example 1 exchanges heat with the third group of battery cells 204, while the fourth heat exchange portion 125 in Example 3 does not exchange heat with the battery assembly 200.

Specifically, the third heat exchange section 13 performs heat exchange with the third group of battery cells 204, and the fourth heat exchange portion 125 is disposed outside the battery assembly 200 and does not exchange heat with the battery assembly 200.

### Example 4

Referring to FIG. 20, the structure of this example is substantially the same as the structure of Example 1, where the same parts use the same reference numerals, and the only difference is that: the battery assembly 200 in Example 1 includes four battery units 201 and a first heat exchange flow passage 10 includes two, while the battery assembly 200 in Example 4 includes only one battery unit 201 and only one first heat exchange flow passage 10 is included.

Specifically, the battery assembly 200 includes one battery unit 201, and the first heat exchange flow passage 10 exchanges heat with one battery unit 201. A first heat exchange section 11 includes two first heat exchange portions 111, and a second heat exchange section 12 includes one second heat exchange portion 121, one third heat exchange portion 122, one fourth heat exchange portion 125, and one fifth heat exchange portion 127, where the first heat exchange portions 111, the second heat exchange portion 121, and the fifth heat exchange portion 127 all extend linearly along the direction X, and the third heat exchange portion 122, the fourth heat exchange portion 125, and the third heat exchange section 13 all extend linearly along the direction Y. Further, the second heat exchange portion 121 is disposed on one side of two first heat exchange portions 111 away from the origin of the coordinate system in the direction Y; the fifth heat exchange portion 127 is disposed on one side of two first heat exchange portions 111 close to the origin of the coordinate system in the direction Y; the third heat exchange portion 122 is disposed on one side of two first heat exchange portions 111 close to the origin of the coordinate system in the direction X and connected to one end of the second heat exchange portion 121 close to the origin of the coordinate system in the direction X and one end of the fifth heat exchange portion 127 close to the origin of the coordinate system in the direction X; the fourth heat exchange portion 125 is connected to one end of the second heat exchange portion 121 away from the origin of the coordinate system in the direction X and disposed outside the battery assembly 200; the third heat exchange section 13 is connected to one end of the first heat exchange portion 111 close to the second heat exchange portion 121 away from the origin of the coordinate system in the direction X. Thus, the second heat exchange portion 121, the third heat exchange portion 122, and the fifth heat exchange portion 127 exchange heat with the circumference of the battery assembly 200, and two first heat exchange portions 111 exchange heat with the middle portion of the circumference of the battery 1000.

### Example 5

Referring to FIG. 22, the structure of this example is substantially the same as the structure of Example 3, where the same parts use the same reference numerals, and the only difference is that: the first heat exchange portion 111 in Example 3 extends linearly along the direction Y, while the first heat exchange portion 111 in Example 5 extends linearly along the direction X.

Specifically, the first heat exchange portion 111, the third heat exchange portion 122, and the fourth heat exchange portion 125 all extend linearly along the direction Y, and the second heat exchange portion 121 extends linearly along the direction X. In this way, a plurality of first heat exchange portions 111 connected can form an S-shaped heat exchange flow passage extending along the second direction, which can enlarge the heat exchange area between the first heat exchange portion 111 and a battery cell 2011, thereby increasing the heat exchange effect of the battery cell 2011.

### Example 6

Referring to FIG. 23, the structure of this example is substantially the same as the structure of Example 1, where the same parts use the same reference numerals, and the only difference is that: the battery assembly 200 in Example 1 includes four battery units 201, each first heat exchange flow passage 10 includes three first heat exchange portions 111, while the battery assembly 200 in Example 6 includes six battery units 201, and each first heat exchange flow passage 10 includes five first heat exchange portions 111.

Specifically, six battery units 201 are to match two first heat exchange flow passages 10, thereby requiring each first heat exchange flow passage 10 to exchange heat with three battery units 201, and each first heat exchange flow passage 10 includes five first heat exchange portions 111 and one second heat exchange portion 121, thereby allowing each battery unit 201 to exchange heat with two heat exchange portions. The second heat exchange portion 121 and a first heat exchange portion 111 closest to the second heat exchange portion 121 are in contact with the first group of battery cells 202 for heat exchange, and each of the remaining battery unit 201 is in contact with other two first heat exchange portions 111 for heat exchange.

Taking a first heat exchange flow passage 10 disposed on one side away from the origin of the coordinate system in the direction Y in the figure as an example, the first heat exchange flow passage 10 includes one second heat exchange portion 121, five first heat exchange portions 111, one third heat exchange portion 122, one fourth heat exchange portion 125, and one third heat exchange section 13. The second heat exchange portion 121 and the first heat exchange portion 111a, the first heat exchange portion 111b, the first heat exchange portion 111c, the first heat exchange portion 111d, and the first heat exchange portion 111e extend along the thickness direction of a battery cell 2011 and are sequentially arranged from one side away from the origin of the coordinate system in the direction Y to one side close to the origin of the coordinate system, the first heat exchange portion 111a, the first heat exchange portion 111b, the first heat exchange portion 111c, the first heat exchange portion 111d, and the first heat exchange portion 111e are sequentially connected, and the second heat exchange portion 121 and the first heat exchange portion 111a exchange heat with the first group of battery cells 202, the first heat exchange portion 111b and the first heat exchange portion 111c exchange heat with a battery unit 201 adjacent to the first group of battery cells 202, and the first heat exchange portion 111d and the first heat exchange portion 111e exchange heat with a battery unit 201 away from the first group of battery cells 202; the third heat exchange portion 122 extends along a length direction of a battery cell 2011 and is connected between one end of the second heat exchange portion 121 close to the origin of the coordinate system in the direction X and the first heat exchange portion 111e, for heat exchange with the second group of battery cells 203; the fourth heat exchange portion 125 is connected to one end of the second heat exchange portion 121 away from the origin of the coordinate system in the direction X and extends along a length direction of a battery cell 2011 to a position close to the first heat exchange portion 111e; the third heat exchange section 13 is connected to one end of the first heat exchange portion 111a away from the origin of the coordinate system in the direction X and extends along the length direction of the battery cell 2011 to a position close to the first heat exchange portion 111e, and exchanges heat with the third group of battery cells 204.

### Example 7

Referring to FIG. 24, the structure of this example is substantially the same as the structure of Example 1, where the same parts use the same reference numerals, and the only difference is that: the battery assembly 200 in Example 1 includes four battery units 201, each first heat exchange flow passage 10 includes three first heat exchange portions 111, while the battery assembly 200 in Example 7 includes four battery units 201, and each first heat exchange flow passage 10 includes five first heat exchange portions 111.

Specifically, four battery units 201 match two first heat exchange flow passages 10, each first heat exchange flow passage 10 needs to exchange heat with two battery units 201, and each first heat exchange flow passage 10 includes five first heat exchange portions 111 and one second heat exchange portion 121, thereby allowing each battery unit 201 to exchange heat with three heat exchange portions.

Taking a first heat exchange flow passage 10 disposed on one side away from the origin of the coordinate system in the direction Y in the figure as an example, the first heat exchange flow passage 10 includes one second heat exchange portion 121, five first heat exchange portions 111, one third heat exchange portion 122, one fourth heat exchange portion 125, and one third heat exchange section 13. The second heat exchange portion 121 and the first heat exchange portion 111a, the first heat exchange portion 111b, the first heat exchange portion 111c, the first heat exchange portion 111d, and the first heat exchange portion 111e extend along a thickness direction of a battery cell 2011 and are sequentially arranged from one side away from the origin of the coordinate system in the direction Y to one side close to the origin of the coordinate system, the first heat exchange portion 111a, the first heat exchange portion 111b, the first heat exchange portion 111c, the first heat exchange portion 111d, and the first heat exchange portion 111e are sequentially connected, and the second heat exchange portion 121, the first heat exchange portion 111a, and the first heat exchange portion 111b exchange heat with the first group of battery cells 202, and the first heat exchange portion 111c, the first heat exchange portion 111d, and the first heat exchange portion 111e exchange heat with a battery unit 201 adjacent to the first group of battery cells 202; the third heat exchange portion 122 extends along the length direction of the battery cell 2011 and is connected between one end of the second heat exchange portion 121 close to the origin of the coordinate system in the direction X and the first heat exchange portion 111e, for heat exchange with the second group of battery cells 203; the fourth heat exchange portion 125 is connected to one end of the second heat exchange portion 121 away from the origin of the coordinate system in the direction X and extends along the length direction of the battery cell 2011 to a position close to the first heat exchange portion 111e; the third heat exchange section 13 is connected to one end of the first heat exchange portion 111a away from the origin of the coordinate system in the direction X and extends along the length direction of the battery cell 2011 to a position close to the first heat exchange portion 111e, and exchanges heat with the third group of battery cells 204.

### Example 8

Referring to FIG. 9, the structure of this example is substantially the same as the structure of Example 1, where the same parts use the same reference numerals, and the only difference is that: the heat exchange member 100 in Example 1 includes only two first heat exchange flow passages 10, while a heat exchange member 100 in Example 8 includes two first heat exchange flow passages 10 and one second heat exchange flow passage 30.

Specifically, the second heat exchange flow passage 30 is provided between two first heat exchange flow passages 10, the structure of the second heat exchange flow passage 30 is different from the structure of a first heat exchange flow passage 10, and the second heat exchange flow passage 30 includes two fourth heat exchange sections 31 extending linearly along the direction X, and two fourth heat exchange sections 31 are spaced apart along the direction Y and connected in a bent manner to form a U-shaped heat exchange flow passage.

### Example 9

Referring to FIG. 10, the structure of this example is substantially the same as the structure of Example 1, where the same parts use the same reference numerals, and the only difference is that: the heat exchange member 100 in Example 1 includes only two first heat exchange flow passages 10, while the heat exchange member 100 in Example 9 includes one first heat exchange flow passage 10 and one third heat exchange flow passage 40.

Specifically, both the first heat exchange flow passage 10 and the third heat exchange flow passage 40 include a first heat exchange portion 111, a second heat exchange portion 121, a third heat exchange portion 122, and a fourth heat exchange portion 125, and a plurality of first heat exchange portions 111, third heat exchange portions 122, and fourth heat exchange portions 125 of the first heat exchange flow passage 10 and the third heat exchange flow passage 40 all extend along the direction X, and second heat exchange portions 121 extend along the direction Y. The fourth heat exchange portion 125, the second heat exchange portion 121, and the third heat exchange portion 122 are sequentially connected in a bent manner to form a U-shaped structure with an opening facing away from the origin of the coordinate system in the direction X. There are a plurality of first heat exchange portions 111, a plurality of first heat exchange portions 111 are disposed within the U-shaped region 120, and a plurality of first heat exchange portions 111 are spaced apart along the direction X and sequentially connected in a bent manner.

The third heat exchange portion 122 of the first heat exchange flow passage 10 is located on one side of a plurality of first heat exchange portions 111 away from the origin of the coordinate system in the direction Y, and the fourth heat exchange portion 125 is located on one side of a plurality of first heat exchange portions 111 close to the origin of the coordinate system in the direction Y, and the third heat exchange flow passage 40 is connected to a first heat exchange portion 111 farthest from the origin of the coordinate system in the direction Y. The third heat exchange portion 122 of the third heat exchange flow passage 40 is located on one side of a plurality of first heat exchange portions 111 close to the origin of the coordinate system in the direction Y, and the fourth heat exchange portion 125 is located on one side of a plurality of first heat exchange portions 111 away from the origin of the coordinate system in the direction Y, and the third heat exchange portion 122 of the third heat exchange flow passage 40 is connected to a first heat exchange portion 111 closest to the origin of the coordinate system in the direction Y. The third heat exchange flow passage 40 is disposed between the fourth heat exchange portion 125 of the first heat exchange flow passage 10 and a plurality of first heat exchange portions 111.

In addition, both the first heat exchange flow passage 10 and the third heat exchange flow passage 40 further include a first inlet/outlet section 15 and a second inlet/outlet section 17, where the first inlet/outlet section 15 of the first heat exchange flow passage 10 is connected to the fourth heat exchange portion 125, the second inlet/outlet section 17 is connected to a first heat exchange portion 111 closest to the origin of the coordinate system in the direction Y; the first inlet/outlet section 15 of the third heat exchange flow passage 40 is connected to a first heat exchange portion 111 farthest from the origin of the coordinate system in the direction Y, and the second inlet/outlet section 17 is connected to the fourth heat exchange portion 125.

### Example 10

Referring to FIG. 11, the structure of this example is substantially the same as the structure of Example 1, where the same parts use the same reference numerals, and the only difference is that: the heat exchange member 100 in the example includes only two first heat exchange flow passages 10, while the heat exchange member 100 in Example 10 includes one first heat exchange flow passage 10 and two third heat exchange flow passages 40.

Specifically, the two third heat exchange flow passages 40 have the same structure as the first heat exchange flow passage 10. Both the first heat exchange flow passage 10 and the two third heat exchange flow passages 40 include the first heat exchange portion 111, the second heat exchange portion 121, the third heat exchange portion 122, and the fourth heat exchange portion 125. The fourth heat exchange portion 125, the second heat exchange portion 121, and the third heat exchange portion 122 of any one of the first heat exchange flow passage 10 and the two third heat exchange flow passages 40 are sequentially connected in a bent manner to form a U-shaped structure with an opening facing away from the origin of the coordinate system in the direction X. There are a plurality of first heat exchange portions 111, the plurality of first heat exchange portions 111 are disposed within the U-shaped region 120, and the plurality of first heat exchange portions 111 extend linearly along the direction X and are spaced apart in the direction Y and sequentially connected in a bent manner. The second heat exchange portion 121 extends along the direction Y, and both the third heat exchange portion 122 and the fourth heat exchange portion 125 extend along the direction X.

The third heat exchange portion 122 of the first heat exchange flow passage 10 is located on one side of a plurality of first heat exchange portions 111 away from the origin of the coordinate system in the direction Y and is connected to the first heat exchange portion 111 farthest from the origin of the coordinate system in the direction Y, and the fourth heat exchange portion 125 is located on one side of a plurality of first heat exchange portions 111 close to the origin of the coordinate system in the direction Y.

The third heat exchange portion 122 of the third heat exchange flow passage 40a is located on one side of a plurality of first heat exchange portions 111 away from the origin of the coordinate system in the direction Y and is connected to the first heat exchange portion 111 farthest from the origin of the coordinate system in the direction Y, and the third heat exchange portion 122 of the third heat exchange flow passage 40a and the first heat exchange portion 111 of the third heat exchange flow passage 40a farthest from the origin of the coordinate system in the direction Y are located between the third heat exchange portion 122 of the first heat exchange flow passage 10 and a plurality of first heat exchange portions 111 of the first heat exchange flow passage 10. A plurality of first heat exchange portions 111 of the first heat exchange flow passage 10 are located between a first heat exchange portion 111 of the third heat exchange flow passage 40a farthest from the origin of the coordinate system in the direction Y and the second first heat exchange portion 111 of the third heat exchange flow passage 40a on one side away from the origin of the coordinate system in the direction Y.

The third heat exchange flow passage 40b is located between the fourth heat exchange portion 125 of the third heat exchange flow passage 40a and a plurality of first heat exchange portions 111 of the third heat exchange flow passage 40a, and the fourth heat exchange portion 125 of the third heat exchange flow passage 40b is located on one side of a plurality of first heat exchange portions 111 of the third heat exchange flow passage 40b away from the origin of the coordinate system in the direction Y. The third heat exchange portion 122 of the third heat exchange flow passage 40b is connected to the first heat exchange portion 111 of the third heat exchange flow passage 40 closest to the origin of the coordinate system in the direction Y.

In addition, both the first heat exchange flow passage 10 and the two third heat exchange flow passages 40 further include a first inlet/outlet section 15 and a second inlet/outlet section 17, where the first inlet/outlet section 15 and the second inlet/outlet section 17 are respectively connected to the fourth heat exchange portion 125 and the first heat exchange portion 111.

Finally, it should be noted that the foregoing embodiments are merely intended for describing the technical solutions of the present application rather than limiting the present application. Although the present application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present application, which shall fall within the scope of the claims and specification of the present application. In particular, as long as there is no structural conflict, the various technical features mentioned in the embodiments may be combined in any manner. The present application is not limited to the specific embodiments disclosed in this specification, but includes all technical solutions falling within the scope of the claims.

## Claims

1. A battery, comprising:
a battery assembly, comprising a battery unit (201), wherein the battery unit (201) comprises a plurality of battery cells (2011) stacked along a first direction;
a heat exchange member (100), comprising a heat exchange tube, wherein the heat exchange tube has a heat exchange flow passage, the heat exchange flow passage comprising a plurality of flow channel portions connected in a bent manner;
wherein each battery unit (201) is in contact with at least two flow channel portions to enable heat exchange.

2. The battery according to claim 1, wherein at least one battery cell (2011) is in contact with at least two flow channel portions that extend along the first direction and are disposed adjacent to each other in a second direction to enable heat exchange, the first direction intersecting the second direction, or,
at least one battery cell (2011) is in contact with at least two flow channel portions that extend along a second direction and are disposed adjacent to each other in the first direction to enable heat exchange, the first direction intersecting the second direction, or,
at least one battery cell (2011) is in contact with at least one flow channel portion extending along the first direction and at least one flow channel portion extending along a second direction to enable heat exchange, the first direction intersecting the second direction.

3. The battery according to claim 1, wherein the heat exchange tubes are provided in plurality, the plurality of heat exchange tubes are disposed in parallel, each of the heat exchange tubes defines one of the heat exchange flow passages in its interior, and the plurality of heat exchange flow passages are sequentially arranged along a second direction or are arranged to wind around each other in a same plane, the first direction intersecting the second direction.

4. The battery according to claim 3, wherein a plurality of heat exchange flow passages are sequentially arranged along the second direction, and a plurality of battery units (201) are sequentially arranged along the second direction, wherein
the plurality of battery units (201) are provided to be respectively in contact with the plurality of heat exchange flow passages to enable heat exchange; or,
in the second direction, one heat exchange flow passage is correspondingly in contact with two adjacent battery units (201) to enable heat exchange; or,
in the second direction, one heat exchange flow passage is correspondingly in contact with three adjacent battery units (201) to enable heat exchange; or,
in the second direction, two adjacent heat exchange flow passages are correspondingly in contact with three adjacent battery units (201) to enable heat exchange.

5. The battery according to any one of claims 1 to 4, wherein taking a wall surface of the battery cell (2011) that is in contact with the heat exchange tube as a projection plane, a thickness of the battery cell (2011) in the first direction is greater than or equal to 30 mm, and an area of an orthographic projection of the heat exchange tube on the wall surface is greater than or equal to 15% of an area of the wall surface.

6. The battery according to claim 5, wherein the thickness of the battery cell (2011) in the first direction is greater than or equal to 40 mm, and the area of the orthographic projection of the heat exchange tube on the wall surface is greater than or equal to 30% of an area of the wall surface.

7. The battery according to claim 5, wherein the thickness of the battery cell (2011) in the first direction is greater than or equal to 50 mm, and the area of the orthographic projection of the heat exchange tube on the wall surface is greater than or equal to 45% of the area of the wall surface.

8. The battery according to claim 5, wherein a thickness of the battery cell (2011) in the first direction is greater than or equal to 60 mm, and an area of an orthographic projection of the heat exchange tube on the wall surface is greater than or equal to 65% of an area of the wall surface.

9. The battery according to claim 5, wherein the thickness of the battery cell (2011) in the first direction is greater than or equal to 80 mm, and the area of the orthographic projection of the heat exchange tube on the wall surface is greater than or equal to 75% of the area of the wall surface.

10. The battery according to claim 5, wherein the thickness of the battery cell (2011) in the first direction is greater than 100 mm, and the area of the orthographic projection of the heat exchange tube on the wall surface is greater than or equal to 90% of the area of the wall surface.

11. The battery according to claim 5, wherein
when the thickness of the battery cell (2011) in the first direction is greater than or equal to 30 mm and less than 40 mm, the area of the orthographic projection of the heat exchange tube on the wall surface is greater than or equal to 15% of the area of the wall surface and less than 30% of the area of the wall surface;
when the thickness of the battery cell (2011) in the first direction is greater than or equal to 40 mm and less than 50 mm, the area of the orthographic projection of the heat exchange tube on the wall surface is greater than or equal to 30% of the area of the wall surface and less than 45% of the area of the wall surface;
when the thickness of the battery cell (2011) in the first direction is greater than or equal to 50 mm and less than 60 mm, the area of the orthographic projection of the heat exchange tube on the wall surface is greater than or equal to 45% of the area of the wall surface and less than 65% of the area of the wall surface;
when the thickness of the battery cell (2011) in the first direction is greater than or equal to 60 mm and less than 80 mm, the area of the orthographic projection of the heat exchange tube on the wall surface is greater than or equal to 65% of the area of the wall surface and less than 75% of the area of the wall surface; and
when the thickness of the battery cell (2011) in the first direction is greater than or equal to 80 mm and less than or equal to 100 mm, the area of an orthographic projection of the heat exchange tube on the wall surface is greater than or equal to 75% of the area of the wall surface and less than 90% of the area of the wall surface.

12. The battery according to any one of claims 1 to 4, wherein the heat exchange tubes are provided in plurality, and the plurality of heat exchange tubes are symmetrically disposed with respect to the first direction.

13. The battery according to any one of claims 1 to 4, wherein the heat exchange tubes are provided in plurality, a heat exchange flow passage of at least one heat exchange tube is formed as a first heat exchange flow passage (10), the first heat exchange flow passage (10) comprises a first heat exchange section (11) and a second heat exchange section (12); the second heat exchange section (12) is bent to form a U-shaped region and forms a plurality of flow channel portions, the first heat exchange section (11) is bent and provided within the U-shaped region and forms a plurality of flow channel portions, and the second heat exchange section (12) and the first heat exchange section (11) are bent and connected in a same plane; and
battery cells (2011) of the battery assembly located at an outermost periphery in a circumferential direction constitute peripheral battery cells, and at least part of the second heat exchange section (12) is in contact with the peripheral battery cells.

14. The battery according to claim 13, wherein the battery assembly comprises a plurality of battery units (201) arranged along a second direction, the peripheral battery cells comprise a first group of battery cells (202), a second group of battery cells (203), and a third group of battery cells (204), which are disposed adjacent to each other, the first group of battery cells (202) comprises a plurality of battery cells (2011) stacked along the first direction, the second group of battery cells (203) comprises a plurality of battery cells (2011) stacked along a second direction, and the third group of battery cells (204) comprises a plurality of battery cells (2011) stacked along a second direction, the first direction intersecting the second direction; a plurality of flow channel portions of the second heat exchange section (12) comprise a second heat exchange portion (121), a third heat exchange portion (122), and a fourth heat exchange portion (125) that are connected; and
the second heat exchange portion (121) extends to be in contact with the first group of battery cells (202) to enable heat exchange, and/or the third heat exchange portion (122) extends to be in contact with the second group of battery cells (203) to enable heat exchange, and/or the fourth heat exchange portion (125) extends to be in contact with the third group of battery cells (204) to enable heat exchange.

15. The battery according to claim 14, wherein the peripheral battery cells further comprise a fourth group of battery cells (205), the fourth group of battery cells (205) comprises a plurality of battery cells (2011) arranged along the second direction, the second heat exchange section (12) further comprises a fifth heat exchange portion, the fifth heat exchange portion closes at least part of an opening of the U-shaped region formed by the second heat exchange portion (121), the third heat exchange portion (122), and the fourth heat exchange portion (125), and the fifth heat exchange portion extends to be in contact with the fourth group of battery cells (205) to enable heat exchange.

16. The battery according to claim 14, wherein the plurality of flow channel portions of the first heat exchange section (11) comprise a plurality of first heat exchange portions (111), and the plurality of first heat exchange portions (111) are spaced apart and sequentially connected in a bent manner;
at least one battery unit (201) located at two ends in the second direction is the first group of battery cells (202); and
the second heat exchange portion (121) and at least one first heat exchange portion (111) of the first heat exchange section (11) are jointly in contact with the first group of battery cells (202) to enable heat exchange.

17. The battery according to claim 16, wherein the plurality of first heat exchange portions (111) of the first heat exchange section (11) extend along the second direction and are sequentially connected in the first direction; or,
the plurality of first heat exchange portions (111) of the first heat exchange section (11) extend along the first direction and are sequentially connected in the second direction.

18. The battery according to claim 16, wherein the plurality of first heat exchange portions (111) of the first heat exchange section (11) extend along the first direction and are sequentially connected in the second direction; and
a first end of the third heat exchange portion (122) is connected to the second heat exchange portion (121) at an angle, a second end of the third heat exchange portion (122) is connected to one of the plurality of first heat exchange portions (111) that is farthest from the second heat exchange portion (121) in the second direction, and a second end of the third heat exchange portion (122) is connected to the first heat exchange section (11) at an angle.

19. The battery according to claim 18, wherein one of the plurality of flow channel portions of the first heat exchange flow passage (10) is formed as a third heat exchange section (13), the third heat exchange section (13) communicates with one end of the first heat exchange section (11) away from the second heat exchange section (12) and is connected to the first heat exchange section (11) at an angle;
the third heat exchange section (13) is disposed on one side of the first heat exchange section (11) facing away from the third heat exchange portion (122) and is connected to one of the plurality of first heat exchange portions (111) that is closest to the second heat exchange portion (121) in the second direction; and
the battery assembly further has a fifth group of battery cells (206), a plurality of battery cells (2011) of the fifth group of battery cells (206) are stacked along the second direction, and the fifth group of battery cells (206) is disposed adjacent to the third group of battery cells (204),
wherein both the third heat exchange section (13) and the fourth heat exchange portion (125) are in contact with the third group of battery cells (204) to enable heat exchange; or the third heat exchange section (13) is in contact with the fifth group of battery cells (206) to enable heat exchange, and the fourth heat exchange portion (125) is in contact with the third group of battery cells (204) to enable heat exchange; or the third heat exchange section (13) is in contact with the third group of battery cells (204) to enable heat exchange, and the fourth heat exchange portion (125) is arranged on the outer side of the battery assembly in the first direction.

20. The battery according to claim 19, wherein the first heat exchange flow passage (10) further comprises:
a first inlet/outlet section (15), wherein one end of the first inlet/outlet section (15) is connected to the third heat exchange section (13) at an angle, and the other end of the first inlet/outlet section (15) is formed as a first inlet/outlet of the first heat exchange flow passage (10);
a second inlet/outlet section (17), wherein one end of the second inlet/outlet section (17) is connected to the fourth heat exchange portion (125) at an angle, and the other end of the second inlet/outlet section (17) is formed as a second inlet/outlet of the first heat exchange flow passage (10); and
one of the first inlet/outlet and the second inlet/outlet is the inlet of the first heat exchange flow passage (10) and the other being an outlet.

21. The battery according to any one of claims 14 to 20, wherein the plurality of flow channel portions of the first heat exchange section (11) comprise a plurality of first heat exchange portions (111), and the plurality of first heat exchange portions (111) are spaced apart and sequentially connected in a bent manner;
the plurality of first heat exchange portions (111) and the second heat exchange portion (121) all extend along the first direction and are spaced apart in the second direction; and
one battery unit (201) is in contact with one second heat exchange portion (121) and at least one first heat exchange portion (111) to enable heat exchange; or one battery unit (201) is in contact with at least two first heat exchange portions (111) to enable heat exchange.

22. The battery according to claim 21, wherein two first heat exchange flow passages (10) are provided, and the plurality of flow channel portions of each first heat exchange flow passage (10) comprise: five first heat exchange portions (111), one second heat exchange portion (121), one third heat exchange portion (122), one fourth heat exchange portion (125), and one third heat exchange section (13);
two battery units (201) are provided, each battery unit (201) is in contact with the first heat exchange flow passage (10) to enable heat exchange; and
the third heat exchange portion (122) is connected to the second heat exchange portion (121) and the first heat exchange portion (111) farthest from the second heat exchange portion (121) and is in contact with the second group of battery cells (203) to enable heat exchange, the third heat exchange section (13) is connected to the first heat exchange portion (111) closest to the second heat exchange portion (121) and is in contact with the third group of battery cells (204) to enable heat exchange, and the fourth heat exchange portion (125) is connected to the second heat exchange portion (121), extends to a position of another battery unit (201), and is in contact with the third group of battery cells (204) to enable heat exchange.

23. The battery according to claim 21, wherein two first heat exchange flow passages (10) are provided, and the plurality of flow channel portions of each first heat exchange flow passage (10) comprise: five first heat exchange portions (111), one second heat exchange portion (121), one third heat exchange portion (122), one fourth heat exchange portion (125), and one third heat exchange section (13),
four battery units (201) are provided, the battery units (201) located at the ends in the second direction are in contact with two first heat exchange portions (111) and one second heat exchange portion (121) to enable heat exchange, and each of the remaining battery unit (201) is in contact with three first heat exchange portions (111) to enable heat exchange; and
the third heat exchange portion (122) is connected to the second heat exchange portion (121) and the first heat exchange portion (111) farthest from the second heat exchange portion (121) and is in contact with the second group of battery cells (203) to enable heat exchange, and the third heat exchange section (13) is connected to the first heat exchange portion (111) closest to the second heat exchange portion (121) and is in contact with the third group of battery cells (204) to enable heat exchange.

24. The battery according to claim 21, wherein two first heat exchange flow passages (10) are provided, and the plurality of flow channel portions of each first heat exchange flow passage (10) comprise: five first heat exchange portions (111), one second heat exchange portion (121), one third heat exchange portion (122), one fourth heat exchange portion (125), and one third heat exchange section (13);
six battery units (201) are provided, the battery units (201) located at the ends in the second direction are in contact with one first heat exchange portion (111) and one second heat exchange portion (121) to enable heat exchange, and each of the remaining battery unit (201) is in contact with two first heat exchange portions (111) to enable heat exchange; and
the third heat exchange portion (122) is connected to the second heat exchange portion (121) and the first heat exchange portion (111) farthest from the second heat exchange portion (121) and is in contact with the second group of battery cells (203) to enable heat exchange, and the third heat exchange section (13) is connected to the first heat exchange portion (111) closest to the second heat exchange portion (121) and is in contact with the third group of battery cells (204) to enable heat exchange.

25. The battery according to claim 21, wherein two first heat exchange flow passages (10) are provided, and the plurality of flow channel portions of each first heat exchange flow passage (10) comprise: three first heat exchange portions (111), one second heat exchange portion (121), one third heat exchange portion (122), one fourth heat exchange portion (125), and one third heat exchange section (13);
four battery units (201) are provided, the battery units (201) located at the ends in the second direction are in contact with one first heat exchange portion (111) and one second heat exchange portion (121) to enable heat exchange, and each of the remaining battery unit (201) is in contact with two first heat exchange portions (111) to enable exchange; and
the third heat exchange portion (122) is connected to the second heat exchange portion (121) and the first heat exchange portion (111) farthest from the second heat exchange portion (121) and is in contact with the second group of battery cells (203) to enable heat exchange, and the third heat exchange section (13) is connected to the first heat exchange portion (111) closest to the second heat exchange portion (121) and is in contact with the third group of battery cells (204) to enable heat exchange.

26. The battery according to claim 13, wherein the first heat exchange section (11) is connected downstream of the second heat exchange section (12) in a fluid flow direction; or,
the heat exchange member (100) is configured such that: during heating of the battery assembly of the battery, the first heat exchange section (11) is connected downstream of the second heat exchange section (12) in the fluid flow direction; and during cooling the battery assembly of the battery, the first heat exchange section (11) is connected upstream of the second heat exchange section (12) in the fluid flow direction.

27. The battery according to claim 13, wherein the plurality of heat exchange tubes are spaced apart along the second direction, the heat exchange flow passage of at least one heat exchange tube is formed as a second heat exchange flow passage (30), and the structure of any second heat exchange flow passage (30) is the same as or different from the structure of the first heat exchange flow passage (10).

28. The battery according to claim 13, wherein the heat exchange tubes are provided in plurality, the plurality of heat exchange tubes are arranged around each other, one heat exchange tube defines the first heat exchange flow passage (10), a heat exchange flow passage of at least one heat exchange tube is formed as a third heat exchange flow passage (40), the third heat exchange flow passage (40) is bent and provided within the U-shaped region of the first heat exchange flow passage (10), the first heat exchange flow passage (10) and the third heat exchange flow passage (40) are bent in the same plane, and bent structures of the first heat exchange flow passage (10) and the third heat exchange flow passage (40) are the same or different.

29. The battery according to claim 28, wherein the third heat exchange flow passage (40) comprises a U-shaped region having a same structure as the first heat exchange flow passage (10), and at least part of the first heat exchange section (11) of the first heat exchange flow passage (10) is provided within the U-shaped region of the third heat exchange flow passage (40).

30. The battery according to any one of claims 1 to 4, wherein the heat exchange tube is formed by bending a single tube, optionally, the heat exchange tube is bent into an arcuate shape at the bending positions.

31. The battery according to any one of claims 1 to 4, wherein the battery further comprises a box (300), the box (300) comprises a box body (301), the box body (301) is an integrally stamped member and comprises a bottom wall and a surrounding wall, and the battery assembly is disposed within the box body (301).

32. The battery according to claim 31, wherein a thermal management system of the battery comprises a temperature regulation member (500), and the temperature regulation member (500) comprises at least one of a first temperature regulation member (501) and a second temperature regulation member (502); wherein
the first temperature regulation member (501) is provided outside the box body (301) and is in contact with an outer wall of the box body (301);
the second temperature regulation member (502) is provided in the box (300) and located between any side of an outer peripheral surface of the battery cell (2011) and the box (300); and
at least one of the first temperature regulation member (501) and the second temperature regulation member (502) forms the heat exchange member (100).

33. The battery according to claim 32, wherein a thermal management system of the battery further comprises a third temperature regulation member (500), the third temperature regulation member (500) is provided in the box (300) and located between two adjacent battery cells (2011), and a structure of the third temperature regulation member (500) is the same as or different from a structure of the heat exchange member (100).

34. An electric apparatus, comprising the battery according to any one of claims 1 to 33.
